(19) **Europäisches Patentamt / European Patent Office / Office européen des brevets**

(11) **EP 4 779 975 A1**

(12) **EUROPEAN PATENT APPLICATION**
published in accordance with Art. 153(4) EPC

(43) Date of publication:
**22.07.2026  Bulletin 2026/30**

(21) Application number: **24865918.7**

(22) Date of filing: **13.09.2024**

(51) International Patent Classification (IPC):
$H04N\ 19/11^{(2014.01)}$       $H04N\ 19/105^{(2014.01)}$
$H04N\ 19/176^{(2014.01)}$      $H04N\ 19/593^{(2014.01)}$
$H04N\ 19/107^{(2014.01)}$      $H04N\ 19/159^{(2014.01)}$
$H04N\ 19/119^{(2014.01)}$      $H04N\ 19/70^{(2014.01)}$

(52) Cooperative Patent Classification (CPC):
H04N 19/105; H04N 19/107; H04N 19/11;
H04N 19/119; H04N 19/159; H04N 19/176;
H04N 19/593; H04N 19/70

(86) International application number:
**PCT/KR2024/014052**

(87) International publication number:
**WO 2025/058479 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.09.2023  US 202363538511 P**

(71) Applicant: **LG Electronics Inc.**
**Yeongdeungpo-gu**
**Seoul 07336 (KR)**

(72) Inventors:
• **PARK, Naeri**
 **Seoul 06772 (KR)**
• **NAM, Junghak**
 **Seoul 06772 (KR)**
• **LIM, Jaehyun**
 **Seoul 06772 (KR)**
• **AHN, Yongjo**
 **Seoul 06772 (KR)**
• **KIM, Seunghwan**
 **Seoul 06772 (KR)**
• **CHOI, Jangwon**
 **Seoul 06772 (KR)**
• **HONG, Myungoh**
 **Seoul 06772 (KR)**

(74) Representative: **Maikowski & Ninnemann**
**Patentanwälte Partnerschaft mbB**
**Postfach 15 09 20**
**10671 Berlin (DE)**

(54) **ENCODING METHOD, DECODING METHOD, COMPUTER-READABLE RECORDING MEDIUM, AND TRANSMISSION METHOD**

(57)    A decoding method according to an aspect of the present disclosure comprises: obtaining information regarding a regular prediction mode; generating a regular prediction block based on the information regarding the regular prediction mode; obtaining information regarding an additional prediction mode; generating an additional prediction block based on the information regarding the additional prediction mode; and generating a final prediction block based on a combination of the regular prediction block and the additional prediction block, wherein the additional prediction mode includes at least one of an intra prediction mode or an IBC (Intra Block Copy) prediction mode, and the information regarding the additional prediction mode may include at least one of information indicating whether the intra prediction mode is applied for generation of the additional prediction block or information indicating whether the IBC prediction mode is applied for generation of the additional prediction block.

EP 4 779 975 A1

FIG. 25

<P0>

<Current block, C>

<P1>

<P2>

<P3>

**Description**

[Technical field]

The present disclosure relates to an encoding/decoding method of image information, a computer-readable recording medium storing the image information, and a method of transmitting the image information.

[Background Art]

In recent years, demand for high-resolution and high-quality images such as HD (High Definition) images and UHD (Ultra High Definition) images has increased in various application fields, and accordingly high-efficiency image compression technologies have been discussed.

As image compression technologies, there exist various technologies such as an inter prediction technology for predicting pixel values included in a current picture from a previous or subsequent picture of the current picture, an intra prediction technology for predicting pixel values included in the current picture by using pixel information within the current picture, and an entropy coding technology for assigning a short code to a value having a high occurrence frequency and assigning a long code to a value having a low occurrence frequency, and image data may be effectively compressed and transmitted or stored by using such image compression technologies.

Accordingly, a high-efficiency image compression technology for effectively transmitting, storing, and reproducing information of high-resolution and high-quality images is required.

[Disclosure]

[Technical Problem]

The present disclosure provides a method and an apparatus for performing inter prediction based on a multiple prediction block mode.

The present disclosure provides a method and an apparatus for signaling/parsing information regarding a multiple prediction block mode.

The present disclosure provides a method and an apparatus for deriving information regarding a multiple prediction block mode.

[Technical Solution]

A decoding method according to an aspect of the present disclosure comprises: obtaining information regarding a regular prediction mode; generating a regular prediction block based on the information regarding the regular prediction mode; obtaining information regarding an additional prediction mode; generating an additional prediction block based on the information regarding the additional prediction mode; and generating a final prediction block based on a combination of the regular prediction block and the additional prediction block, wherein the additional prediction mode includes at least one of an intra prediction mode or an IBC (Intra Block Copy) prediction mode, and the information regarding the additional prediction mode may include at least one of information indicating whether the intra prediction mode is applied for generation of the additional prediction block or information indicating whether the IBC prediction mode is applied for generation of the additional prediction block.

A decoding method according to an aspect of the present disclosure comprises: deriving information regarding prediction from a neighboring block based on that a prediction mode for a current block is determined as a merge mode; and generating a prediction block for the current block based on the information regarding prediction derived from the neighboring block, wherein generating the prediction block for the current block may include applying a multiple prediction block mode to the current block based on that the information regarding prediction derived from the neighboring block includes information regarding the multiple prediction block mode.

An encoding method according to an aspect of the present disclosure comprises: generating information indicating whether a multiple prediction block mode is applied to a current block; generating, based on that the multiple prediction block mode is applied, information regarding a regular prediction mode used to generate a regular prediction block and information regarding an additional prediction mode used to generate an additional prediction block; and encoding the information indicating whether the multiple prediction block mode is applied, the information regarding the regular prediction mode, and the information regarding the additional prediction mode, wherein the additional prediction mode includes at least one of an intra prediction mode or an IBC prediction mode, and the information regarding the additional prediction mode may include at least one of information indicating whether the intra prediction mode is applied for generation of the additional prediction block or information indicating whether the IBC prediction mode is applied for generation of the additional prediction block.

An encoding method according to an aspect of the present disclosure comprises: generating information indicating that the merge mode is applied to the current block and generating a merge candidate list based on that a prediction mode for the current block is determined as the merge mode; selecting one candidate among candidates included in the merge candidate list and generating information indicating the selected candidate; and encoding the information indicating that the merge mode is applied and the information indicating the selected candidate, wherein the selected candidate corresponds to a neighboring block to which a multiple prediction block mode is applied, and information regarding the multiple prediction block mode applied to the selected candidate may be derived as information regarding prediction of the current block.

A recording medium according to an aspect of the present disclosure is a computer-readable recording medium storing a bitstream, wherein the bitstream includes: information indicating whether a multiple prediction block mode is applied to a current block; information regarding a regular prediction mode used to generate a regular prediction block; and information regarding an additional prediction mode used to generate an additional prediction block, wherein the additional prediction mode includes at least one of an intra prediction mode or an IBC prediction mode, and the information regarding the additional prediction mode may include information indicating whether the intra prediction mode is applied for generation of the additional prediction block or information indicating whether the IBC prediction mode is applied for generation of the additional prediction block.

A recording medium according to an aspect of the present disclosure is a computer-readable recording medium storing a bitstream, wherein the bitstream includes: information indicating that the merge mode is applied to a current block; information indicating one selected candidate among candidates included in a merge candidate list; and information regarding prediction of the selected candidate, wherein the selected candidate corresponds to a neighboring block to which a multiple prediction block mode is applied, and information regarding the multiple prediction block mode applied to the selected candidate may be derived as information regarding prediction of the current block.

A transmission method according to an aspect of the present disclosure is a method of transmitting image information, the method comprising: generating the image information including a bitstream, wherein the bitstream includes information indicating whether a multiple prediction block mode is applied to a current block, information regarding a regular prediction mode used to generate a regular prediction block, and information regarding an additional prediction mode used to generate an additional prediction block; and transmitting the image information including the bitstream, wherein the additional prediction mode includes at least one of an intra prediction mode or an IBC prediction mode, and the information regarding the additional prediction mode may include at least one of information indicating whether the intra prediction mode is applied for generation of the additional prediction block or information indicating whether the IBC prediction mode is applied for generation of the additional prediction block.

A transmission method according to an aspect of the present disclosure is a method of transmitting image information, the method comprising: generating the image information including a bitstream, wherein the bitstream includes information indicating whether the merge mode is applied to a current block, information indicating one selected candidate among candidates included in a merge candidate list, and information regarding prediction of the selected candidate; and transmitting the image information including the bitstream, wherein the selected candidate corresponds to a neighboring block to which a multiple prediction block mode is applied, and information regarding the multiple prediction block mode applied to the selected candidate may be derived as information regarding prediction of the current block.

[Advantageous Effects]

According to the present disclosure, a method and an apparatus for performing inter prediction based on a multiple prediction block mode may be provided.

According to the present disclosure, a method and an apparatus for signaling/parsing information regarding a multiple prediction block mode may be provided.

According to the present disclosure, a method and an apparatus for deriving information regarding a multiple prediction block mode may be provided.

Effects obtainable from the present disclosure are not limited to the effects mentioned above, and other effects not mentioned will be clearly understood by those skilled in the art to which the present disclosure pertains from the following description.

[Description of Drawings]

FIG. 1 illustrates a video/image coding system according to the present disclosure.

FIG. 2 illustrates a schematic block diagram of an encoding apparatus to which an embodiment of the present disclosure may be applied and in which encoding of a video/image signal is performed.

FIG. 3 illustrates a schematic block diagram of a decoding apparatus to which an embodiment of the present disclosure may be applied and in which decoding of a video/image signal is performed.

FIG. 4 illustrates an example of a video/image decoding method to which an embodiment of the present disclosure may be applied.

FIG. 5 illustrates an example of a video/image encoding method to which an embodiment of the present disclosure may be applied.

FIG. 6 illustrates reference samples (Rx,-1, R-1,y, R-1,-1) defined in PDPC according to various prediction modes.

FIG. 7 illustrates an example in which an intra sub-partition is split.

FIG. 8 illustrates a diagram schematically illustrating a matrix-based intra prediction process.

FIGS. 9 and 10 illustrate examples of an inter prediction-based video/image encoding method to which an embodiment of the present disclosure may be applied.

FIGS. 11 and 12 illustrate examples of an inter prediction-based video/image decoding method to which an embodiment of the present disclosure may be applied.

FIG. 13 illustrates an inter prediction procedure to which an embodiment of the present disclosure may be applied.

FIG. 14 illustrates an example of blocks used to configure a merge candidate list.

FIG. 15 illustrates four types of motion representable in an affine motion model.

FIG. 16 illustrates an example of control point motion vectors used in affine motion prediction.

FIG. 17 illustrates an example representing positions of candidates in a configured affine merge mode.

FIG. 18 illustrates an example of neighboring blocks for a current block.

FIG. 19 illustrates GPM splits grouped by the same angle.

FIG. 20 illustrates top-left neighboring blocks used in CIIP weight derivation.

FIG. 21 illustrates available IPM candidates of GPM including inter and intra prediction.

FIG. 22 illustrates sub-blocks at CU/PU boundaries and sub PUs of an ATMVP mode.

FIG. 23 illustrates an extended CU area used in BDOF.

FIG. 24 illustrates an inter prediction method performed by a decoding apparatus according to an embodiment of the present disclosure, and FIG. 25 illustrates an example of prediction blocks used in a multiple prediction block mode according to an embodiment of the present disclosure.

FIG. 26 is a flowchart illustrating an example of an operation of obtaining multiple prediction block mode information in a decoding method performed by a decoding apparatus according to an embodiment.

FIG. 27 is a flowchart illustrating another example of an operation of obtaining multiple prediction block mode information in a decoding method performed by a decoding apparatus according to an embodiment.

FIG. 28 is a flowchart illustrating another example of an operation of obtaining multiple prediction block mode information in a decoding method performed by a decoding apparatus according to an embodiment.

FIG. 29 is a flowchart illustrating another example of an operation of obtaining multiple prediction block mode information in a decoding method performed by a decoding apparatus according to an embodiment.

FIG. 30 is a flowchart illustrating another example of an operation of obtaining multiple prediction block mode information in a decoding method performed by a decoding apparatus according to an embodiment.

FIG. 31 is a flowchart illustrating another example of an operation of obtaining multiple prediction block mode information in a decoding method performed by a decoding apparatus according to an embodiment.

FIG. 32 illustrates an example in which inheritance is performed from a neighboring block to which a multiple prediction block mode is applied while excluding an MHP-intra mode.

FIG. 33 illustrates an example in which the number of intra modes inherited from a neighboring block to which a multiple prediction block mode is applied is limited to one.

FIG. 34 is a flowchart illustrating an example in which information regarding an MHP-intra mode is derived at a decoder side in a decoding method performed by a decoding apparatus according to an embodiment.

FIG. 35 is a flowchart illustrating another example in which information regarding an MHP-intra mode is derived at a decoder side in a decoding method performed by a decoding apparatus according to an embodiment.

FIG. 36 illustrates a diagram for explaining an error between adjacent samples of a current block and adjacent samples of a regular prediction block.

FIG. 37 is a flowchart illustrating an example of an operation of signaling/parsing information regarding an MHP-intra mode.

FIG. 38 is a flowchart illustrating another example of an operation of signaling/parsing information regarding an MHP-intra mode.

FIG. 39 is a flowchart illustrating still another example of an operation of signaling/parsing information regarding an MHP-intra mode.

FIG. 40 illustrates an example of positions of adjacent and non-adjacent blocks of a current block.

FIG. 41 is a flowchart illustrating an example of an operation of signaling/parsing information required to generate an MHP_IBC block.

FIG. 42 is a flowchart illustrating another example of an operation of signaling/parsing information required to generate an MHP_IBC block.

FIG. 43 is a flowchart illustrating another example of an operation of signaling/parsing weight information for an MHP-intra mode.

FIG. 44 is a flowchart illustrating still another example of an operation of signaling/parsing weight information for an MHP-intra mode.

FIG. 45 illustrates an example in which a current block is split and different weights are applied to respective split regions when weights are applied to an MHP-intra prediction block.

FIG. 46 is a flowchart illustrating an example of a decoding method performed in an MHP-intra mode in a decoding method according to an embodiment.

FIG. 47 illustrates an example of positions of reference samples and samples within a regular prediction block used to generate an MHP-intra prediction block.

FIG. 48 illustrates an example in which positions of samples of a regular prediction block are changed and applied to a region adjacent to a prediction block in order to compare activities between samples corresponding to the same position.

FIG. 49 illustrates an example in which a strong filter is applied to a current block.

FIG. 50 is a flowchart illustrating an example of an operation of signaling/parsing filtering information for an MHP-intra mode.

FIG. 51 is a flowchart illustrating another example of an operation of signaling/parsing filtering information for an MHP-intra mode.

FIG. 52 illustrates a diagram exemplarily illustrating a content streaming system to which an embodiment according to the present disclosure may be applied.

[Modes of the Invention]

The present disclosure may be modified in various ways and may have various embodiments, and thus specific embodiments are illustrated in the drawings and will be described in detail in the detailed description. However, this is not intended to limit the present disclosure to specific embodiments, and it should be understood that all modifications, equivalents, and substitutes included within the spirit and technical scope of the present disclosure are included. In describing each drawing, similar reference numerals are used for similar components.

Terms such as first and second may be used to describe various components, but the components should not be limited by the terms. The terms are used only for the purpose of distinguishing one component from another component. For example, a first component may be named a second component without departing from the scope of the present disclosure, and similarly a second component may also be named a first component. The term and/or includes a combination of a plurality of related described items or any one of a plurality of related described items.

When a component is referred to as being "connected to" or "coupled to" another component, it should be understood that it may be directly connected to or coupled to the other component, or an intervening component may exist therebetween. In contrast, when a component is referred to as being "directly connected to" or "directly coupled to" another component, it should be understood that no intervening component exists therebetween.

The terms used in the present application are used only for the purpose of describing particular embodiments and are not intended to limit the present disclosure. Singular expressions include plural expressions unless the context clearly indicates otherwise. In the present application, terms such as "include" or "have" are intended to designate the presence of features, numbers, steps, operations, components, parts, or combinations thereof described in the specification, and should be understood as not precluding the presence or addition possibility of one or more other features, numbers, steps, operations, components, parts, or combinations thereof.

The present disclosure relates to video/image coding. For example, methods/embodiments disclosed in the present specification may be applied to methods disclosed in the VVC (versatile video coding) standard. Also, methods/embodiments disclosed in this specification may be applied to methods disclosed in the EVC (essential video coding) standard, the AV1 (AOMedia Video 1) standard, the AVS2 (2nd generation of audio video coding standard), or next-generation video/image coding standards (e.g., H.267 or H.268).

This specification presents various embodiments related to video/image coding, and unless otherwise stated, the embodiments may be performed in combination with each other.

In this specification, video may refer to a set of images over time. A picture generally refers to a unit representing one image at a specific time, and a slice/tile is a unit constituting a part of a picture in coding. A slice/tile may include one or more CTUs (coding tree units). One picture may be composed of one or more slices/tiles. One tile is a rectangular region composed of a plurality of CTUs within a specific tile column and a specific tile row of one picture. A tile column is a rectangular region of CTUs having a height equal to the height of the picture and a width specified by syntax requirements of a picture parameter set. A tile row is a rectangular region of CTUs having a height specified by the picture parameter set and a width equal to the width of the picture. In one tile, CTUs are arranged sequentially according to a CTU raster scan, while tiles in one picture may be arranged sequentially according to a tile raster scan. One slice may include an integer number of complete tiles or an integer number of consecutive complete CTU rows within a tile of a picture that is exclusively included in a single NAL unit. Meanwhile, one picture may be divided into two or more subpictures. A subpicture may be a rectangular region of one or more slices within a picture.

A pixel, pixel, or pel may refer to the smallest unit constituting one picture (or image). Also, the term sample may be used as a term corresponding to a pixel. A sample may generally represent a pixel or a value of a pixel, and may represent only a pixel/pixel value of a luma component or may represent only a pixel/pixel value of a chroma component.

A unit may represent a regular unit of image processing. A unit may include at least one of a specific region of a picture and information related to the region. One unit may include one luma block and two chroma (e.g., cb, cr) blocks. A unit may be used interchangeably with terms such as block or area in some cases. In general, an MxN block may include a set (or array) of samples (or a sample array) or transform coefficients composed of M columns and N rows.

In this specification, "A or B (A or B)" may mean "only A", "only B", or "both A and B". In other words, in this specification, "A or B (A or B)" may be interpreted as "A and/or B (A and/or B)". For example, in this specification, "A, B or C (A, B or C)" may mean "only A", "only B", "only C", or "any combination of A, B and C".

In this specification, a slash (/) or comma may mean "and/or". For example, "A/B" may mean "A and/or B". Accordingly, "A/B" may mean "only A", "only B", or "both A and B". For example, "A, B, C" may mean "A, B or C".

In this specification, "at least one of A and B" may mean "only A", "only B", or "both A and B". Also, in this specification, expressions such as "at least one of A or B" or "at least one of A and/or B" may be interpreted in the same manner as "at least one of A and B".

Also, in this specification, "at least one of A, B and C" may mean "only A", "only B", "only C", or "any combination of A, B and C". Also, "at least one of A, B or C" or "at least one of A, B and/or C" may mean "at least one of A, B and C".

Also, parentheses used in this specification may mean "for example". Specifically, when indicated as "prediction (intra prediction)", "intra prediction" may be proposed as an example of "prediction". In other words, "prediction" in this specification is not limited to "intra prediction", and "intra prediction" may be proposed as an example of "prediction". Also, even when indicated as "prediction (i.e., intra prediction)", "intra prediction" may be proposed as an example of "prediction".

Technical features individually described in one drawing in this specification may be implemented individually or may be implemented simultaneously.

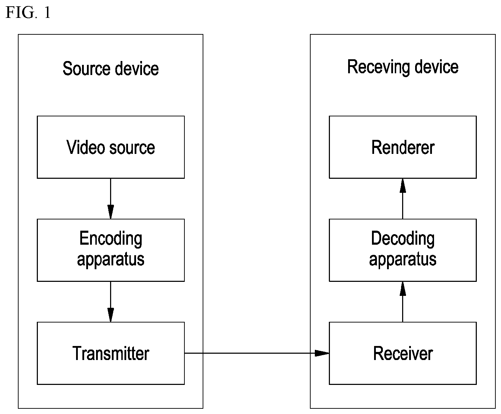

FIG. 1 illustrates a video/image coding system according to the present disclosure.

Referring to FIG. 1, the video/image coding system may include a first device (a source device) and a second device (a receiving device).

The source device may transmit encoded video/image information or data to the receiving device in a file or streaming form through a digital storage medium or a network. The source device may include a video source, an encoding apparatus, and a transmitter. The receiving device may include a receiver, a decoding apparatus, and a renderer. The encoding apparatus may be referred to as a video/image encoding apparatus, and the decoding apparatus may be referred to as a video/image decoding apparatus. A transmitter may be included in the encoding apparatus. A receiver may be included in the decoding apparatus. The renderer may include a display unit, and the display unit may be configured as a separate device or an external component.

The video source may obtain a video/image through processes such as capturing, synthesizing, or generating a video/image. The video source may include a video/image capture device and/or a video/image generation device. The video/image capture device may include one or more cameras, a video/image archive including previously captured video/images, and the like. The video/image generation device may include a computer, a tablet, a smartphone, and the like and may generate a video/image (electronically). For example, a virtual video/image may be generated through a computer, and in this case the video/image capture process may be replaced with a process of generating related data.

The encoding apparatus may encode an input video/image. The encoding apparatus may perform a series of procedures such as prediction, transform, and quantization for compression and coding efficiency. Encoded data (encoded video/image information) may be output in the form of a bitstream.

The transmitter may transmit encoded video/image information or data output in the form of a bitstream to the receiver of the receiving device in a file or streaming form through a digital storage medium or a network. The digital storage medium may include various storage media such as USB, SD, CD, DVD, Blu-ray, HDD, and SSD. The transmitter may include elements for generating a media file through a predetermined file format and may include elements for transmission through a broadcasting/communication network. The receiver may receive/extract the bitstream and transmit it to the decoding apparatus.

The decoding apparatus may decode a video/image by performing a series of procedures corresponding to the operation of the encoding apparatus such as dequantize, inverse transform, and prediction.

The renderer may render the decoded video/image. The rendered video/image may be displayed through a display unit.

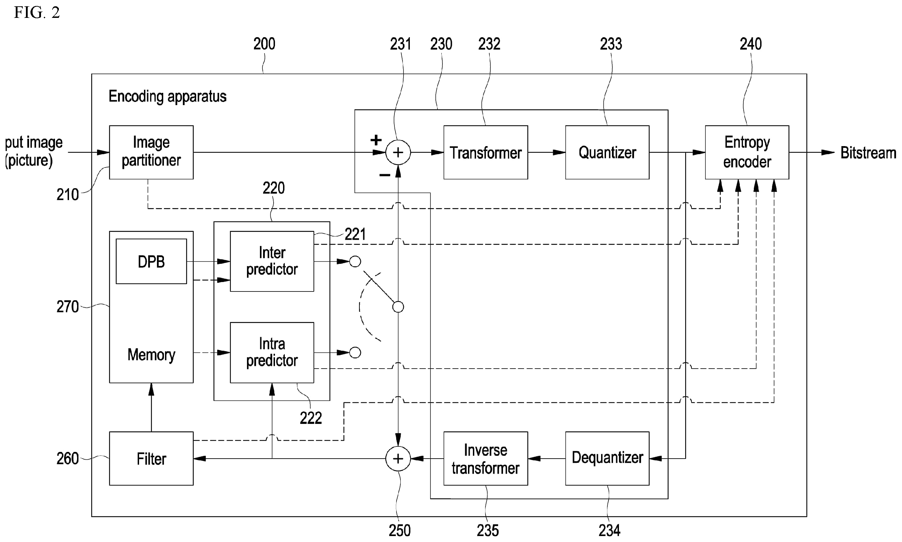

FIG. 2 illustrates a schematic block diagram of an encoding apparatus to which an embodiment of the present disclosure may be applied and in which encoding of a video/image signal is performed.

Referring to FIG. 2, the encoding apparatus 200 may be configured to include an image partitioner 210, a predictor 220, a residual processor 230, an entropy encoder 240, an adder 250, a filter 260, and a memory 270. The predictor 220 may include an inter predictor 221 and an intra predictor 222. The residual processor 230 may include a transformer 232, a quantizer 233, a dequantizer 234, and an inverse transformer 235. The residual processor 230 may further include a subtractor 231. The adder 250 may be referred to as a reconstructor or a reconstructed block generator. The above-described image partitioner 210, predictor 220, residual processor 230, entropy encoder 240, adder 250, and filter 260 may be configured by one or more hardware components (for example, an encoding apparatus chipset or a processor) according to an embodiment. Also, the memory 270 may include a DPB (decoded picture buffer), and may also be configured by a digital storage medium. The hardware component may further include the memory 270 as an internal/external component.

The image partitioner 210 may split an input image (or picture, frame) input to the encoding apparatus 200 into one or more processing units (PUs: Processing Units). As one example, the processing unit may be referred to as a coding unit (CU: Coding Unit). In this case, the coding unit may be recursively split from a coding tree unit (CTU) or a largest coding unit (LCU) according to a QTBTTT (Quad-Tree Binary-Tree Ternary-Tree) structure.

For example, one coding unit may be split into a plurality of coding units having a deeper depth based on a quad-tree structure, a binary-tree structure, and/or a ternary structure. In this case, for example, the quad-tree structure may be first applied and the binary-tree structure and/or the ternary structure may be later applied. Alternatively, the binary-tree structure may be applied prior to the quad-tree structure. A coding procedure according to the present specification may be performed based on a final coding unit that is no longer split. In this case, based on coding efficiency according to image characteristics, etc., the largest coding unit may be directly used as the final coding unit, or as necessary, the coding unit may be recursively split into coding units of a lower depth, such that a coding unit having an optimal size is used as the final coding unit. Here, the coding procedure may include procedures such as prediction, transform, and reconstruct, which will be described later.

As another example, the processing unit may further include a prediction unit (PU: Prediction Unit) or a transform unit (TU: Transform Unit). In this case, the prediction unit and the transform unit may each be split or partitioned from the above-described final coding unit. The prediction unit may be a unit of sample prediction, and the transform unit may be a unit for deriving transform coefficients and/or a unit for deriving a residual signal from the transform coefficients.

The term unit may, in some cases, be used interchangeably with terms such as block or area. In general, an MxN block may represent a set of samples or transform coefficients composed of M columns and N rows. A sample may generally represent a pixel or a value of a pixel, and may represent only a pixel/pixel value of a luma component or may represent only a pixel/pixel value of a chroma component. A sample may be used as a term corresponding to a pixel or pel of one picture (or image).

The encoding apparatus 200 may generate a residual signal (residual signal, residual block, residual sample array) by subtracting a prediction signal (prediction block, prediction sample array) output from the inter predictor 221 or the intra predictor 222 from an input image signal (original block, original sample array), and the generated residual signal is transmitted to the transformer 232. In this case, a unit that subtracts the prediction signal (prediction block, prediction sample array) from the input image signal (original block, original sample array) in the encoding apparatus 200 may be referred to as the subtractor 231.

The predictor 220 may perform prediction for a block to be processed (hereinafter, referred to as a current block), and may generate a predicted block including prediction samples for the current block. The predictor 220 may determine, in units of the current block or CU, whether intra prediction is applied or inter prediction is applied. The predictor 220 may generate various information regarding prediction, such as prediction mode information, as will be described later in descriptions of respective prediction modes, and transmit the same to the entropy encoder 240. The information regarding prediction may be encoded by the entropy encoder 240 and output in the form of a bitstream.

The intra predictor 222 may predict the current block by referring to samples in the current picture. The referred samples, that is, reference samples, may be located in the neighborhood of the current block according to a prediction mode, or may be located at a predetermined distance from the current block. In intra prediction, the prediction modes may include one or more non-directional modes and a plurality of directional modes. The non-directional modes may include at least one of a DC mode or a Planar mode. The directional modes may include 33 directional modes or 65 directional modes according to the fineness of a prediction direction. However, this is an example, and a number of directional modes greater than or less than that may be used according to settings. The intra predictor 222 may determine a prediction mode applied to the current block by using a prediction mode applied to a neighboring block.

The inter predictor 221 may derive a prediction block for the current block based on a reference block (reference sample array) specified by a motion vector on a reference picture. At this time, in order to reduce an amount of motion information transmitted in an inter prediction mode, the motion information may be predicted in units of a block, a subblock, or a sample based on a correlation of the motion information between a neighboring block and the current block. The motion information may include a motion vector and a reference picture index. The motion information may further include inter prediction direction information (L0 prediction, L1 prediction, Bi prediction, etc.). In the case of inter prediction, the neighboring block may include a spatial neighboring block existing in the current picture and a temporal neighboring block existing in the reference picture. A reference picture including the reference block and a reference picture including the temporal neighboring block may be the same as or different from each other. The temporal neighboring block may be referred to by names such as a collocated reference block or a collocated CU (colCU), and the reference picture including the temporal neighboring block may also be referred to as a collocated picture (colPic). For example, the inter predictor 221 may configure a motion information candidate list based on neighboring blocks, and may generate information indicating which candidate is used to derive a motion vector and/or a reference picture index of the current block. Inter prediction may be performed based on various prediction modes. For example, in the case of a skip mode and a merge mode, the inter predictor 221 may use motion information of a neighboring block as motion information of the current block. In the case of the skip mode, unlike the merge mode, a residual signal may not be transmitted. In the case of a motion vector prediction (MVP) mode, a motion vector of a neighboring block may be used as a motion vector predictor, and a motion vector of the current block may be indicated by signaling a motion vector difference.

The predictor 220 may generate a prediction signal based on various prediction methods to be described later. For example, the predictor may not only apply intra prediction or inter prediction for prediction for one block, but may also simultaneously apply intra prediction and inter prediction. This may be referred to as a combined inter and intra prediction (CIIP) mode. Also, the predictor may be based on an intra block copy (IBC) prediction mode or may be based on a palette mode for prediction for a block. The IBC prediction mode or palette mode may be used for coding a content image/video such as a game, such as SCC (screen content coding). IBC basically performs prediction within the current picture, but may be performed similarly to inter prediction in that a reference block is derived within the current picture. That is, IBC may use at least one of inter prediction techniques described in the present specification. The palette mode may be regarded as one example of intra coding or intra prediction. When the palette mode is applied, sample values in a picture may be signaled based on information regarding a palette table and a palette index. The prediction signal generated through the predictor 220 may be used to generate a reconstruct signal, or may be used to generate a residual signal.

The transformer 232 may generate transform coefficients by applying a transform technique to the residual signal. For example, the transform technique may include at least one of a DCT (Discrete Cosine Transform), a DST (Discrete Sine Transform), a KLT (Karhunen-Loeve Transform), a GBT (Graph-Based Transform), or a CNT (Conditionally Non-linear Transform). Here, the GBT means a transform obtained from a graph when relationship information between pixels is represented as the graph. The CNT means a transform obtained based on generating a prediction signal using all previously reconstructed pixels. Also, the transform process may be applied to a pixel block having the same square size, or may be applied to a non-square variable-size block.

The quantizer 233 quantizes the transform coefficients and transmits the same to the entropy encoder 240, and the entropy encoder 240 may encode the quantized signal (information regarding the quantized transform coefficients) and output the same as a bitstream. The information regarding the quantized transform coefficients may be referred to as residual information. The quantizer 233 may rearrange quantized transform coefficients in a block form into a one-dimensional vector form based on a coefficient scan order, and may also generate information regarding the quantized transform coefficients based on the quantized transform coefficients in the one-dimensional vector form.

The entropy encoder 240 may perform various encoding methods such as exponential Golomb, CAVLC (context-adaptive variable length coding), CABAC (context-adaptive binary arithmetic coding), and the like. The entropy encoder 240 may encode, together with or separately from the quantized transform coefficients, information required for video/-image reconstruct (for example, values of syntax elements).

Encoded information (e.g., encoded video/image information) may be transmitted or stored in units of a NAL (network abstraction layer) unit in the form of a bitstream. The video/image information may further include information regarding various parameter sets such as an APS (adaptation parameter set), a PPS (picture parameter set), an SPS (sequence parameter set), or a VPS (video parameter set). Also, the video/image information may further include general constraint information. In the present specification, information and/or syntax elements transmitted/signaled from an encoding apparatus to a decoding apparatus may be included in the video/image information. The video/image information may be encoded through the above-described encoding procedure and included in the bitstream. The bitstream may be transmitted through a network, or may be stored in a digital storage medium. Here, the network may include a broadcasting network and/or a communication network, and the digital storage medium may include various storage media such as USB, SD, CD, DVD, Blu-ray, HDD, and SSD. A transmitter (not shown) for transmitting and/or a storage unit (not shown) for storing the signal output from the entropy encoder 240 may be configured as an internal/external element of the encoding apparatus 200, or the transmitter may be included in the entropy encoder 240.

The quantized transform coefficients output from the quantizer 233 may be used to generate a prediction signal. For example, by applying dequantize and inverse transform to the quantized transform coefficients through the dequantizer 234 and the inverse transformer 235, a residual signal (a residual block or residual samples) may be reconstruct. The adder 250 may generate a reconstructed signal (a reconstructed picture, a reconstructed block, a reconstructed sample array) by adding the reconstructed residual signal to the prediction signal output from the inter predictor 221 or the intra predictor 222. When there is no residual for a block to be processed, as in a case in which the skip mode is applied, the predicted block may be used as a reconstructed block. The adder 250 may be referred to as a reconstructor or a reconstructed block generator. The generated reconstructed signal may be used for intra prediction of a next block to be processed in the current picture, and may also be used for inter prediction of a next picture through filtering as will be described later. Meanwhile, LMCS (luma mapping with chroma scaling) may also be applied in a picture encoding and/or reconstruct process.

The filter 260 may improve subjective/objective image quality by applying filtering to the reconstruct signal. For example, the filter 260 may generate a modified reconstructed picture by applying various filtering methods to the reconstructed picture, and may store the modified reconstructed picture in the memory 270, specifically in the DPB of the memory 270. The various filtering methods may include deblocking filtering, sample adaptive offset, adaptive loop filter, bilateral filter, and the like. The filter 260 may generate various information regarding filtering and transmit the same to the entropy encoder 240. The information regarding filtering may be encoded by the entropy encoder 240 and output in the form of a bitstream.

The modified reconstructed picture transmitted to the memory 270 may be used as a reference picture in the inter predictor 221. Through this, when inter prediction is applied, the encoding apparatus can avoid a prediction mismatch between the encoding apparatus 200 and the decoding apparatus, and coding efficiency can also be improved.

The DPB of the memory 270 may store the modified reconstructed picture for use as a reference picture in the inter predictor 221. The memory 270 may store motion information of a block in the current picture for which motion information is derived (or encoded) and/or motion information of blocks in an already reconstructed picture. The stored motion information may be transmitted to the inter predictor 221 for use as motion information of a spatial neighboring block or motion information of a temporal neighboring block. The memory 270 may store reconstructed samples of reconstructed blocks in the current picture and may transmit the same to the intra predictor 222.

Image information output from the encoding apparatus 200 in the form of a bitstream may be transmitted to the decoding apparatus 300.

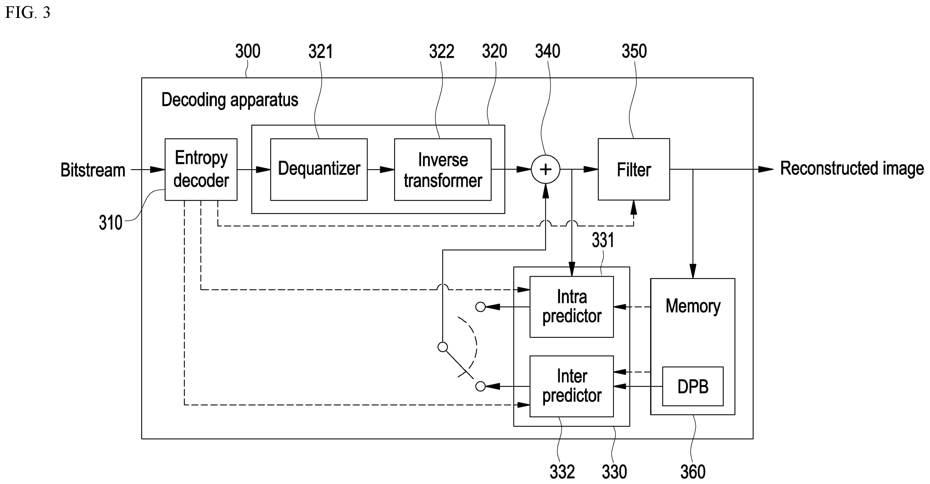

FIG. 3 illustrates a schematic block diagram of a decoding apparatus to which an embodiment of the present disclosure may be applied and in which decoding of a video/image signal is performed.

Image information transmitted in the form of a bitstream from the encoding apparatus 200 may be received by the decoding apparatus 300.

Referring to FIG. 3, the decoding apparatus 300 may be configured to include an entropy decoder 310, a residual processor 320, a predictor 330, an adder 340, a filter 350, and a memory 360. The predictor 330 may include an inter predictor 332 and an intra predictor 331. The residual processor 320 may include a dequantizer 321 and an inverse transformer 321.

The above-described entropy decoder 310, residual processor 320, predictor 330, adder 340, and filter 350 may be configured by one hardware component (for example, a decoding apparatus chipset or a processor) according to an embodiment. Also, the memory 360 may include a DPB (decoded picture buffer), and may also be configured by a digital storage medium. The hardware component may further include the memory 360 as an internal/external component.

When a bitstream including video/image information is input, the decoding apparatus 300 may Reconstruct an image corresponding to the process in which the video/image information is processed in the encoding apparatus of FIG. 2. For example, the decoding apparatus 300 may derive units/blocks based on block split-related information obtained from the bitstream. The decoding apparatus 300 may perform decoding by using a processing unit applied in the encoding apparatus. Accordingly, a processing unit of decoding may be a coding unit, and the coding unit may be split from a coding tree unit or a largest coding unit according to a quad-tree structure, a binary-tree structure, and/or a ternary-tree structure. One or more transform units may be derived from the coding unit. Also, a reconstructed image signal decoded and output through the decoding apparatus 300 may be played through a playback apparatus.

The decoding apparatus 300 may receive, in the form of a bitstream, a signal output from the encoding apparatus of FIG. 2, and the received signal may be decoded through the entropy decoder 310. For example, the entropy decoder 310 may parse the bitstream and derive information (e.g., video/image information) required for image Reconstruct (or picture Reconstruct). The video/image information may further include information regarding various parameter sets such as an APS (adaptation parameter set), a PPS (picture parameter set), an SPS (sequence parameter set), or a VPS (video parameter set). Also, the video/image information may further include general constraint information. The decoding apparatus may decode a picture further based on the information regarding the parameter sets and/or the general constraint information. In the present specification, information and/or syntax elements signaled/received, which will be described later, may be decoded through the decoding procedure and obtained from the bitstream. For example, the entropy decoder 310 may decode information in the bitstream based on a coding method such as exponential Golomb coding, CAVLC, or CABAC, and may output values of syntax elements required for image Reconstruct and quantized values of transform coefficients regarding a residual. More specifically, the CABAC entropy decoding method may receive bins corresponding to respective syntax elements from the bitstream, determine a context model by using syntax element information to be decoded and decoding information of neighboring and decoding target blocks or information of symbols/bins decoded in a previous step, predict an occurrence probability of a bin according to the determined context model, perform arithmetic decoding of the bin, and generate a symbol corresponding to a value of each syntax element. At this time, the CABAC entropy decoding method may update the context model after determining the context model by using information of the decoded symbol/bin for a context model of a next symbol/bin. Among the information decoded by the entropy decoder 310, information regarding prediction is provided to the predictor (the inter predictor 332 and the intra predictor 331), and residual values for which entropy decoding is performed by the entropy decoder 310, that is, quantized transform coefficients and related parameter information, may be input to the residual processor 320. The residual processor 320 may derive a residual signal (a residual block, residual samples, a residual sample array). Also, among the information decoded by the entropy decoder 310, information regarding filtering may be provided to the filter 350.

Meanwhile, a receiver (not shown) receiving a signal output from the encoding apparatus may be further configured as an internal/external element of the decoding apparatus 300, or the receiver may be a component of the entropy decoder 310.

Meanwhile, the decoding apparatus according to the present specification may be referred to as a video/image/picture decoding apparatus, and the decoding apparatus may also be divided into an information decoding apparatus (a video/image/picture information decoding apparatus) and a sample decoding apparatus (a video/image/picture sample decoding apparatus). The information decoding apparatus may include the entropy decoder 310, and the sample decoding apparatus may include at least one of the dequantizer 321, the inverse transformer 322, the adder 340, the filter 350, the memory 360, the inter predictor 332, or the intra predictor 331.

In the dequantizer 321, the quantized transform coefficients may be dequantized to output transform coefficients. The dequantizer 321 may rearrange the quantized transform coefficients in the form of a two-dimensional block. In this case, the rearrangement may be performed based on a coefficient scan order performed in the encoding apparatus. The dequantizer 321 may perform dequantize on the quantized transform coefficients by using a quantization parameter (for example, quantization step size information), and may obtain transform coefficients.

In the inverse transformer 322, the transform coefficients are inverse-transformed to obtain a residual signal (a residual block, a residual sample array).

The predictor 320 may perform prediction for a current block, and may generate a predicted block including prediction samples for the current block. The predictor 320 may determine, based on the information regarding prediction output from the entropy decoder 310, whether intra prediction is applied to the current block or inter prediction is applied to the current block, and may determine a specific intra/inter prediction mode.

The predictor 320 may generate a prediction signal based on various prediction methods which will be described later. For example, the predictor 320 may not only apply intra prediction or inter prediction for prediction for one block, but may also simultaneously apply intra prediction and inter prediction. This may be referred to as a combined inter and intra prediction (CIIP) mode. Also, the predictor may be based on an intra block copy (IBC) prediction mode or may be based on a palette mode for prediction for a block. The IBC prediction mode or the palette mode may be used for content image/video coding such as games, such as SCC (screen content coding). IBC basically performs prediction within the current picture, but may be performed similarly to inter prediction in that a reference block is derived within the current picture. That is, IBC may use at least one of the inter prediction techniques described in the present specification. The palette mode may be regarded as one example of intra coding or intra prediction. When the palette mode is applied, information regarding a palette table and a palette index may be included in the video/image information and signaled.

The intra predictor 331 may predict the current block by referring to samples in the current picture. The referred samples may be located in the neighborhood of the current block according to a prediction mode, or may be located at a predetermined distance from the current block. In intra prediction, prediction modes may include one or more non-directional modes and a plurality of directional modes. The intra predictor 331 may determine a prediction mode applied to the current block by using a prediction mode applied to a neighboring block.

The inter predictor 332 may derive a prediction block for the current block based on a reference block (a reference sample array) specified by a motion vector on a reference picture. At this time, in order to reduce an amount of motion information transmitted in an inter prediction mode, the motion information may be predicted in units of a block, a subblock, or a sample based on correlation of motion information between a neighboring block and the current block. The motion information may include a motion vector and a reference picture index. The motion information may further include inter prediction direction information (L0 prediction, L1 prediction, Bi prediction, etc.). In the case of inter prediction, the neighboring block may include a spatial neighboring block existing in the current picture and a temporal neighboring block existing in the reference picture. For example, the inter predictor 332 may configure a motion information candidate list based on neighboring blocks, and may derive a motion vector and/or a reference picture index of the current block based on received candidate selection information. Inter prediction may be performed based on various prediction modes, and the information regarding the prediction may include information indicating an inter prediction mode for the current block.

The adder 340 may generate a reconstructed signal (a reconstructed picture, a reconstructed block, a reconstructed sample array) by adding the obtained residual signal to a prediction signal (a prediction block, a prediction sample array) output from the predictor (including the inter predictor 332 and/or the intra predictor 331). When there is no residual for a block to be processed, such as when a skip mode is applied, the prediction block may be used as a reconstructed block.

The adder 340 may be referred to as a reconstructor or a reconstructed block generator. The generated reconstructed signal may be used for intra prediction of a next block to be processed in the current picture, and may be output through filtering as will be described later, or may be used for inter prediction of a next picture. Meanwhile, LMCS (luma mapping with chroma scaling) may also be applied in a picture decoding process.

The filter 350 may improve subjective/objective image quality by applying filtering to the reconstructed signal. For example, the filter 350 may generate a modified reconstructed picture by applying various filtering methods to the reconstructed picture, and may transmit the modified reconstructed picture to the memory 360, specifically to the DPB of the memory 360. The various filtering methods may include deblocking filtering, sample adaptive offset, adaptive loop filter, bilateral filter, and the like.

The (modified) reconstructed picture stored in the DPB of the memory 360 may be used as a reference picture in the inter predictor 332. The memory 360 may store motion information of a block in the current picture for which motion information is derived (or decoded) and/or motion information of blocks in an already reconstructed picture. The stored motion information may be transmitted to the inter predictor 332 in order to be used as motion information of a spatial neighboring block or motion information of a temporal neighboring block. The memory 360 may store reconstructed samples of reconstructed blocks in the current picture, and may transmit the same to the intra predictor 331.

In the present specification, the embodiments described in the filter 260, the inter predictor 221, and the intra predictor 222 of the encoding apparatus 200 may be applied to the filter 350, the inter predictor 332, and the intra predictor 331 of the decoding apparatus 300 so as to be the same as or correspond thereto, respectively.

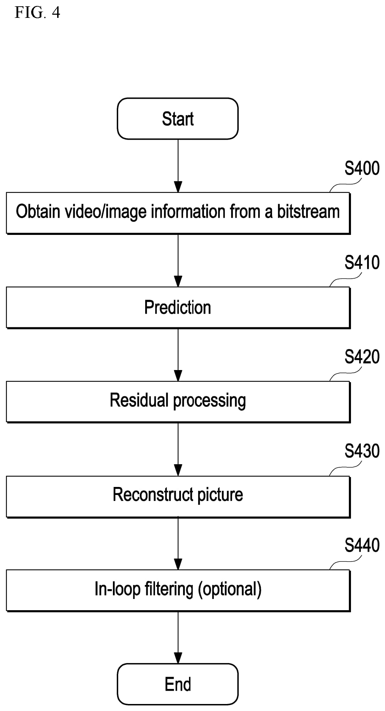

FIG. 4 illustrates an example of a video/image decoding method to which an embodiment of the present disclosure may be applied.

In video/image coding, pictures constituting a video/image may be encoded/decoded according to a series of decoding orders. A picture order corresponding to an output order of decoded pictures may be set differently from the decoding order, and based on this, not only forward prediction but also backward prediction may be performed in inter prediction.

In FIG. 4, S400 may be performed by the entropy decoder 310 of the above-described decoding apparatus 300, S410 may be performed by the predictor 330, S420 may be performed by the residual processor 320, S430 may be performed by the adder 340, and S440 may be performed by the filter 350. S400 may include a decoding procedure according to the present disclosure, S410 may include an inter/intra prediction procedure according to the present disclosure, S420 may include a residual processing procedure according to the present disclosure, S430 may include a block/picture reconstruct procedure according to the present disclosure, and S440 may include an in-loop filtering procedure according to the present disclosure.

Referring to FIG. 4, the decoding apparatus may obtain video/image information from a bitstream (S400), perform prediction based on the obtained video/image information (S410), and reconstruct a picture through residual processing (S420, dequantize and inverse transform for quantized transform coefficients) (S430).

Through the reconstruct procedure, an in-loop filtering procedure (S440) may be applied to the reconstructed picture generated through the reconstruct procedure to generate a modified reconstructed picture, and the modified reconstructed picture may be output as a decoded picture and may also be stored in a buffer or memory of the decoding apparatus and used as a reference picture in an inter prediction procedure when decoding a next picture. In some cases, the in-loop filtering procedure may be omitted, and in this case the reconstructed picture may be output as a decoded picture and may also be stored in a buffer or memory of the decoding apparatus and used as a reference picture in an inter prediction procedure when decoding a subsequent picture.

The in-loop filtering procedure (S440) may include a deblocking filtering procedure, an SAO (sample adaptive offset) procedure, an ALF (adaptive loop filter) procedure, and/or a bilateral filter procedure, and some or all of them may be omitted. Also, one or some of the deblocking filtering procedure, the SAO procedure, the ALF procedure, and the bilateral filter procedure may be sequentially applied, or all of them may be sequentially applied. For example, an SAO procedure may be performed after a deblocking filtering procedure is applied to the reconstructed picture. Alternatively, for example, an ALF procedure may be performed after a deblocking filtering procedure is applied to the reconstructed picture. The same may be performed in the encoding apparatus.

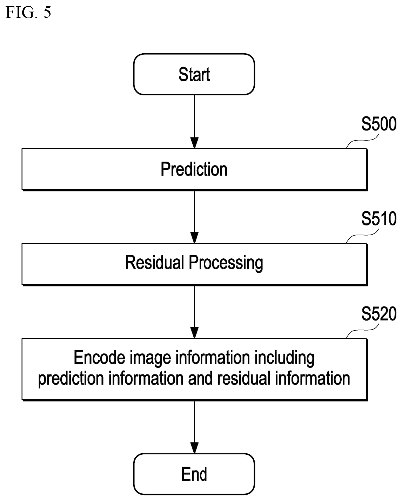

FIG. 5 illustrates an example of a video/image encoding method to which an embodiment of the present disclosure may be applied.

In FIG. 5, a prediction step (S500) may be performed by the predictor 220 of the above-described encoding apparatus 200, residual processing based on the prediction result (S510) may be performed by the residual processor 230, and a step of encoding video information including prediction information and residual information (S520) may be performed by the entropy encoder 240. S500 may include an inter/intra prediction procedure according to the present disclosure, S510 may include a residual processing procedure according to the present disclosure, and S520 may include an encoding procedure according to the present disclosure.

The encoding procedure may optionally include not only a procedure of encoding information for picture reconstruct (e.g., prediction information, residual information, partitioning information, etc.) and outputting the same in the form of a bitstream, but also a procedure of generating a reconstructed picture for the current picture and a procedure of applying in-loop filtering to the reconstructed picture.

The encoding apparatus 200 may derive (modified) residual samples from quantized transform coefficients through the dequantizer 234 and the inverse transformer 235, and may generate a reconstructed picture based on the prediction samples which are the output of S500 and the (modified) residual samples. The reconstructed picture generated in this manner may be the same as the reconstructed picture generated in the above-described decoding apparatus 300. A modified reconstructed picture may be generated through an in-loop filtering procedure for the reconstructed picture, and the modified reconstructed picture may be stored in a buffer or memory and may be used as a reference picture in an inter prediction procedure when encoding a subsequent picture, similarly to the case of the decoding apparatus.

As described above, in some cases, some or all of the in-loop filtering procedure may be omitted. When the in-loop filtering procedure is performed, filtering-related information (parameters) may be encoded by the entropy encoder 240 and output in the form of a bitstream, and the decoding apparatus 300 may perform the in-loop filtering procedure in the same manner as the encoding apparatus based on the filtering-related information.

Through such an in-loop filtering procedure, noise occurring during image/video coding such as blocking artifacts and ringing artifacts may be reduced, and subjective/objective image quality may be improved. Also, by performing the in-loop filtering procedure in both the encoding apparatus 200 and the decoding apparatus 300, the encoding apparatus 200 and the decoding apparatus 300 may derive the same prediction result, thereby improving reliability of picture coding and reducing an amount of data required to be transmitted for picture coding.

As described above, a picture reconstruct procedure may be performed not only in the decoding apparatus 300 but also in the encoding apparatus 200. A reconstructed block may be generated based on intra prediction/inter prediction in units of each block, and a reconstructed picture including reconstructed blocks may be generated. When a current picture/slice/tile group is an I picture/slice/tile group, blocks included in the current picture/slice/tile group may be reconstructed based only on intra prediction. Meanwhile, when a current picture/slice/tile group is a P or B picture/slice/tile group, blocks included in the current picture/slice/tile group may be reconstructed based on intra prediction or inter prediction. In this case, inter prediction may be applied to some blocks within the current picture/slice/tile group, and intra prediction may be applied to other blocks.

Color components of a picture may include a luma component and a chroma component, and unless explicitly limited in the present disclosure, embodiments according to the present disclosure may be applied to both the luma component and the chroma component.

## Intra prediction

The predictor 220 and 330 of the encoding apparatus 200 and the decoding apparatus 300 may derive reference samples according to an intra prediction mode of a current block among neighboring samples of the current block, and may generate prediction samples of the current block based on the reference samples.

For example, (i) prediction samples may be derived based on an average or interpolation of neighboring reference samples of the current block, and (ii) the prediction samples may be derived based on reference samples located in a specific (prediction) direction for the prediction samples among the neighboring reference samples of the current block. Case (i) may be referred to as a non-directional mode or a non-angular mode, and case (ii) may be referred to as a directional mode or an angular mode.

Also, linear interpolation intra prediction (LIP) in which intra prediction is performed for the current block by linearly interpolating prediction sample values generated based on the intra prediction mode of the current block may be applied.

Also, temporary prediction samples of the current block may be derived based on filtered neighboring reference samples, and prediction samples of the current block may be derived by performing a weighted sum of at least one reference sample derived according to the intra prediction mode among existing neighboring reference samples, that is, unfiltered neighboring reference samples, and the temporary prediction samples. Such prediction may be referred to as PDPC (Position Dependent intra Prediction Combination).

Also, intra prediction coding may be performed by selecting a reference sample line having the highest prediction accuracy among multiple neighboring reference sample lines of the current block, deriving prediction samples by using reference samples located in a prediction direction on the selected line, and indicating (signaling) the reference sample line used to the decoding apparatus. Such a case may be referred to as multi-reference line intra prediction (MRL) or MRL-based intra prediction.

Also, intra prediction may be performed based on the same intra prediction mode by dividing the current block into vertical or horizontal sub-partitions, and neighboring reference samples may be derived and used in units of the sub-partitions. That is, in this case, the intra prediction mode for the current block is equally applied to the sub-partitions, but prediction performance may be improved in some cases by deriving and using neighboring reference samples in units of the sub-partitions. Such a prediction method may be referred to as intra sub-partitions (ISP) or ISP-based intra prediction.

Also, when a prediction direction based on a prediction sample points between neighboring reference samples, that is, when the prediction direction points to a fractional sample position, a value of the prediction sample may be derived by interpolation of a plurality of reference samples located around the prediction direction (around the fractional sample position).

The above-described intra prediction methods may be referred to as intra prediction types in distinction from intra prediction modes. An intra prediction type may be referred to by various terms such as an intra prediction technique, an intra prediction tool, a detailed intra prediction mode, or an additional intra prediction mode. For example, the intra prediction type (or additional intra prediction mode, etc.) may include at least one of the above-described LIP, PDPC, MRL, or ISP. Information regarding the intra prediction type may be encoded by the encoding apparatus, included in the bitstream, and transmitted to the decoding apparatus. Information regarding the intra prediction type may be implemented and transmitted in various forms such as flag information indicating whether each intra prediction type is applied or index information indicating one of a plurality of intra prediction types.

An MPM list for deriving the above-described intra prediction mode may be configured differently according to the intra prediction type. Alternatively, the MPM list may be configured commonly regardless of the intra prediction type.

## PDPC (Position Dependent intra Prediction Combination) prediction

According to PDPC, filtered reference samples may be derived by performing filtering based on a predefined filter, and temporary prediction samples of the current block may be derived based on an intra prediction mode of the current block and the filtered reference samples. Prediction samples of the current block may be derived by performing a weighted sum of at least one reference sample derived according to the intra prediction mode among existing reference samples, that is, unfiltered reference samples, and the temporary prediction samples. Here, the predefined filter may be one of five 7-tap filters. Alternatively, the predefined filter may be one of a 3-tap filter, a 5-tap filter, or a 7-tap filter. The 3-tap filter, the 5-tap filter, and the 7-tap filter may respectively represent a filter having three filter coefficients, a filter having five filter coefficients, and a filter having seven filter coefficients.

For example, a prediction result of an intra Planar mode may be further modified by PDPC.

Alternatively, as an example, PDPC may be applied, without separate signaling, to an intra Planar mode, an intra DC mode, a horizontal intra prediction mode, a vertical intra prediction mode, an intra prediction mode in a bottom-left direction (that is, intra prediction mode 2), eight directional intra prediction modes adjacent to the intra prediction mode in the bottom-left direction, an intra prediction mode in a top-right direction, and eight directional intra prediction modes adjacent to the intra prediction mode in the top-right direction.

Specifically, when PDPC is applied, a prediction sample at coordinates (x, y) predicted based on a linear combination of the intra prediction mode and reference samples may be derived as shown in Equation 1 below.

[equation 1]
$$pred(x,y) = (wL \times R_{-1,y} + wT \times R_{x,-1} - wTL \times R_{-1,-1} + (64 - wL - wT + wTL) \times pred(x,y) + 32) >> 6$$

Here, $R_{x,-1}$ and $R_{-1,y}$ represent a top reference sample and a left reference sample located above and to the left of a current sample at coordinates (x, y), and R-1,-1 represents a top-left reference sample located at a top-left corner of the current block.

Meanwhile, when PDPC is applied to an intra Planar mode, an intra DC mode, a horizontal intra prediction mode, and a vertical intra prediction mode, additional boundary filters such as a DC mode boundary filter or a vertical/horizontal mode edge filter of conventional HEVC may not be required.

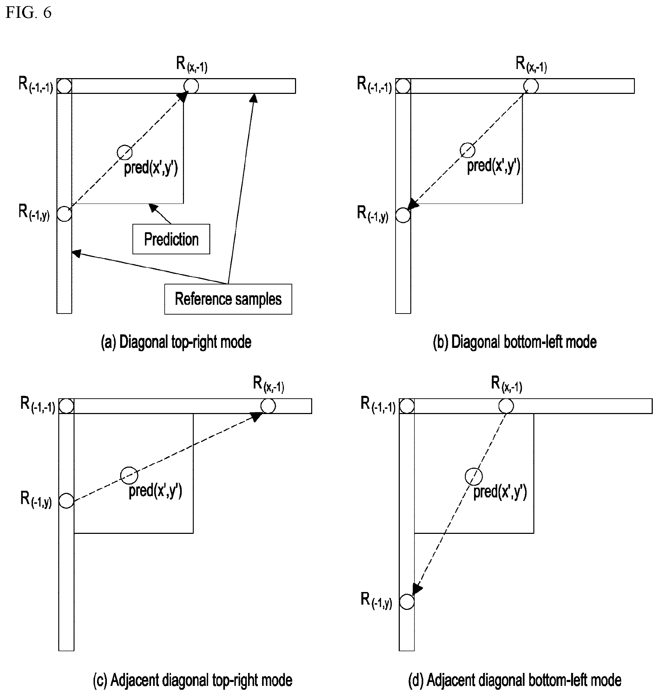

FIG. 6 illustrates reference samples (Rx,-1, R-1,y, R-1,-1) defined in PDPC according to various prediction modes.

Referring to FIG. 6, in PDPC, reference samples may be derived according to (a) a diagonal top-right mode, (b) a diagonal bottom-left mode, (c) an adjacent diagonal top-right mode, and (d) an adjacent diagonal bottom-left mode.

Weights of PDPC may be derived as shown in [Table 1] below based on prediction modes.

[Table 1]

| Prediction modes | wT | wL | wTL |
|---|---|---|---|
| Diagonal top-right | 16 >> ( ( y'<<1 ) >> shift) | 16 >> ( ( x'<<1 ) >> shift) | 0 |
| Diagonal bottom-left | 16 >> ( ( y'<<1 ) >> shift) | 16 >> ( ( x'<<1 ) >> shift) | 0 |
| Adjacent diagonal top-right | 32 >> ( ( y'<<1 ) >> shift) | 0 | 0 |
| Adjacent diagonal bottom-left | 0 | 32 >> ( ( x'<<1 ) >> shift ) | 0 |

PDPC generates a prediction sample by using reference samples according to a prediction mode, and then refines the prediction sample by using surrounding reference samples. PDPC may be applied in a limited manner to Planar, DC, mode 2 (bottom-right directional mode), VDIA (top-left directional mode), Hor (horizontal directional mode), Ver (vertical directional mode), neighboring modes of mode 2 (mode 3 to mode 10), and neighboring modes of the VDIA mode (mode 58 to mode 65), based on 65 directional intra prediction modes. Also, instead of being applied to all prediction samples within a block to be coded, PDPC may be variably applied in consideration of a size of the block.

## ISP (Intra Sub-Partitions) prediction

Conventional intra prediction performs coding without partitioning by considering a block to be coded as one coding unit. However, an Intra Sub-Partitions (ISP) prediction method performs intra prediction coding by splitting a block to be coded in a horizontal direction or a vertical direction. At this time, coding/decoding is performed in units of the split blocks to generate reconstructed blocks, and the reconstructed blocks are used as reference blocks for a next split block. Currently, an Intra Sub-Partitions (ISP) may be split according to a block size as shown in [Table 2] below.

[Table 2]

| Block Size (CU) | Number of partitions |
|---|---|
| 4x4 | not available |
| 4x8, 8x4 | 2 |
| Other size | 4 |

The ISP tool may split luma intra-predicted blocks into two or four sub-partitions in a vertical direction or a horizontal direction according to a block size. For example, a minimum block size of ISP is $4 \times 8$ (or $8 \times 4$). When the block size is larger than $4 \times 8$ (or $8 \times 4$), the block may be split into four sub-partitions.

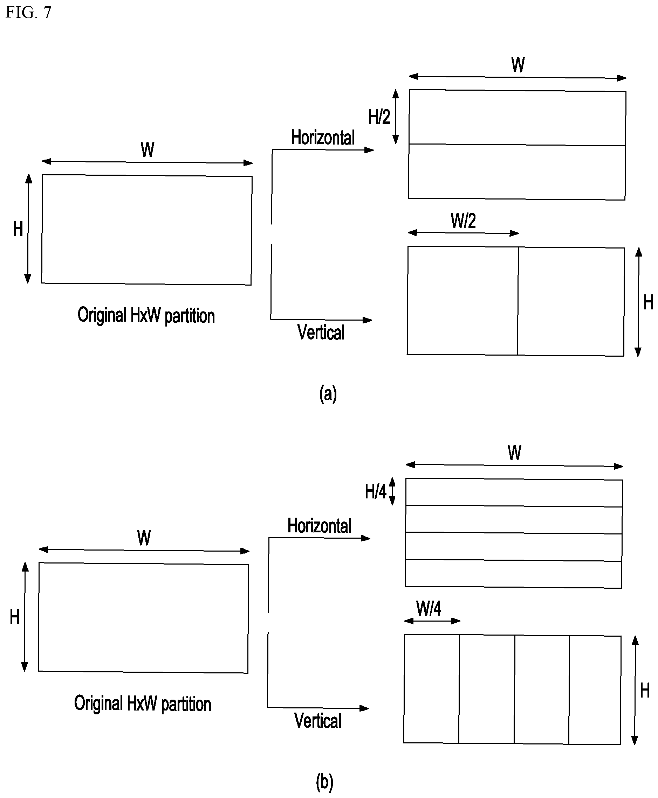

FIG. 7 illustrates an example in which intra sub-partitions are split.

Referring to FIG. 7 together with [Table 2], a block having a size of $4 \times 8$ may be split in a horizontal direction or a vertical direction and divided into two sub-partitions as illustrated in (a). Blocks having sizes other than $4 \times 4$, $4 \times 8$, and $8 \times 4$ may be split in a horizontal direction or a vertical direction and divided into four sub-partitions as illustrated in (b).

In order to reduce coding complexity, the intra sub-partition method generates an MPM (Most Probable Mode) list according to each partitioning method (horizontal partitioning and vertical partitioning), and compares prediction modes in the generated MPM list from a rate distortion optimization (RDO) perspective to determine an optimal mode. In addition, when multiple reference line (MRL) intra prediction is used, the intra sub-partition method described above may not be used. That is, the intra sub-partition method is applied only when a 0-th reference line is used (i.e., intra_luma_ref_idx has a value of 0). In addition, when the intra sub-partition method described above is used, the PDPC described above may not be used.

In the intra sub-partition method, whether the intra sub-partition is applied is first transmitted on a block basis, and if a current block uses an intra sub-partition (intra_subpartitions_mode_flag), information indicating whether the partition is a horizontal partition or a vertical partition (intra_subpartitions_split_flag) is encoded/decoded again.

When the intra sub-partition method is applied, an intra prediction mode for the current block is identically applied to the sub-partitions, and intra prediction performance may be improved by deriving and using neighboring reference samples in units of sub-partitions. That is, when the intra sub-partition method is applied, a residual sample processing procedure is performed in units of sub-partitions. In other words, intra prediction samples are derived for each sub-partition, and reconstructed samples are obtained by adding a residual signal (residual samples) for the corresponding sub-partition thereto.

The residual signal (residual samples) may be derived through inverse quantization/inverse transform procedures based on residual information (quantized transform coefficient information or residual coding syntax) in the bitstream described above. That is, prediction samples for a first sub-partition may be derived, residual samples may be derived, and reconstructed samples for the first sub-partition may be derived based on the same. In this case, when prediction samples for a second sub-partition are derived, some of the reconstructed samples in the first sub-partition (e.g., left or top neighboring reference samples of the second sub-partition) may be used as neighboring reference samples for the second sub-partition.

Similarly, prediction samples for the second sub-partition may be derived, residual samples may be derived, and reconstructed samples for the second sub-partition may be derived based on the same. In this case, when prediction samples for a third sub-partition are derived, some of the reconstructed samples in the second sub-partition (e.g., left or top neighboring reference samples of the third sub-partition) may be used as neighboring reference samples for the third sub-partition. The same description may be applied to subsequent sub-partitions.

## Matrix-based Intra Prediction (MIP)

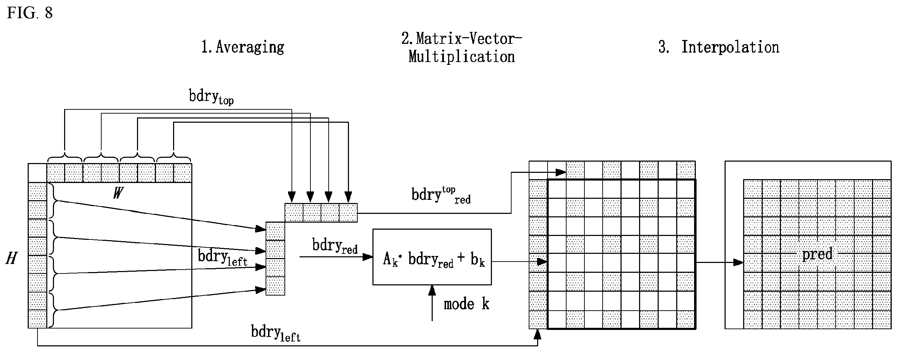

FIG. 8 schematically illustrates a matrix-based intra prediction process.

Matrix-based intra prediction (MIP) may also be referred to as affine linear weighted intra prediction (ALWIP: Affine Linear Weighted Intra Prediction) or matrix weighted intra prediction (MWIP: Matrix Weighted Intra Prediction). In order to predict samples of a rectangular block having an equal width and height, MIP uses one row of reconstructed neighboring boundary samples on a left side of the block and one row of reconstructed neighboring boundary samples above the block as inputs. When reconstructed samples are not available, they are generated as performed in conventional intra prediction.

As illustrated in FIG. 8, generation of a prediction signal may be performed according to the following three steps.

In a case where W=H=4, four samples are extracted from boundary samples by averaging, and in all other cases eight samples are extracted (Averaging).

A matrix-vector multiplication is performed using the averaged samples as inputs and an offset is added, and as a result a prediction signal for a subsampled sample set in an original block is reduced (Matrix-Vector-Multiplication).

Prediction signals at remaining positions are generated by linear interpolation that linearly interpolates prediction signals of the subsampled set by one step in each direction (Interpolation).

Matrices and offset vectors required to generate prediction signals (prediction blocks or prediction samples) are taken from three sets S0, S1, and S2 of matrices. Set S0 consists of 18 matrices $A_{0_i}$, $i \in \{0,...,17\}$, each having 16 rows and 4 columns, and 18 offset vectors $b_{0_i}$, $i \in \{0,...,17\}$, each having a size of 16. Matrices and offset vectors of the set are used for blocks having a size of 4×4. Set S1 consists of 10 matrices $A_1^i$, $i \in \{0,...,9\}$, each having 16 rows and 8 columns, and 10 offset vectors $b_{1_i}$, $i \in \{0,...,9\}$, each having a size of 16. Matrices and offset vectors of the set are used for blocks having sizes of 4×8, 8×4, and 8×8. Finally, set S2 consists of 6 matrices $A_{2_i}$, $i \in \{0,...,5\}$, each having 64 rows and 8 columns, and 6 offset vectors $b_{2_i}$, $i \in \{0,...,5\}$, each having a size of 64. Matrices and offset vectors of the set, or some of the matrices and offset vectors, are used for all other block shapes.

A total number of multiplications required to calculate the matrix-vector multiplication is less than or equal to $4 \cdot W \cdot H$. In other words, in the MIP mode, at most four multiplications per sample are required.

## Decoder Side Intra Mode Derivation (DIMD)

In DIMD (Decoder Side Intra Mode Derivation), intra prediction may be derived as a weighted average between planar and two derived directions. Two angular modes may be selected from HoG (Histogram of Gradient) calculated from neighboring pixels of a current block. When the two angular modes are selected, predictors of the angular modes and a planar predictor are calculated, and a weighted average thereof is used as a final predictor for the corresponding block. In order to determine weights, a corresponding amplitude of HoG is used for each of the two modes.

Derived intra modes are included in an initial list of MPM, and therefore a DIMD procedure is performed before the MPM list is constructed. A first derived intra mode of a DIMD block is stored together with the block and may be used for constructing MPM lists of neighboring blocks.

## Fusion for Template-Based Intra Mode Derivation (TIMD)

For each intra prediction of MPM, SATD (Sum of Absolute Transformed Differences) between a prediction sample of a template and a reconstructed sample is calculated. The first two intra prediction modes having the minimum SATD may be selected as TIMD modes. The two TIMD modes are fused by applying weights, and the intra prediction to which the weights are applied is used for coding a current CU. PDPC may be included in derivation of the TIMD mode.

Costs of the two selected modes are compared with a threshold and a cost factor of 2 is applied in the test as follows:

$$costMode2 < 2 * costMode1.$$

When this condition is satisfied, fusion is applied, otherwise only mode 1 is used.

Weights of the modes are calculated from SATD costs as follows:

$$weight1 = costMode2 / (costMode1 + costMode2)$$

$$weight2 = 1 - weight1$$

## Spatial Geometric Partitioning Mode (SGPM)

SGPM is an intra mode similar to an inter coding tool of GPM, and two prediction parts are generated in an intra prediction process. In this mode, a candidate list is constructed in which each entry includes one partition split and two intra prediction modes, and a partition mode and three intra prediction modes are used to form a combination. A length of the candidate list may be set to 16, and a selected candidate index may be signaled.

The candidate list is reordered using a template, where SAD between prediction and reconstruction of the template is used for ordering. A template size may be fixed to 1.

For each partition mode, an IPM list for each part is derived using the same intra-inter GPM list derivation. A size of the IPM list may be set to 3. In the list, a TIMD-derived mode may be replaced with two derived modes in horizontal and vertical directions.

The SGPM mode may be applied to block sizes restricted as follows:

$$4 \leq \text{width} \leq 64, \ 4 \leq \text{height} \leq 64, \ \text{width} < \text{height} * 8, \ \text{height} < \text{width} * 8, \ \text{width} * \text{height} \geq 32.$$

Adaptive blending is also used in spatial GPM, and a blending depth $\tau$ may be derived as follows:

- If min(width, height) = 4, 1/2 $\tau$ is selected.
- Else if min(width, height) = 8, $\tau$ is selected.
- Else if min(width, height) = 16, 2 $\tau$ is selected.
- Else if min(width, height) = 32, 4 $\tau$ is selected.
- Else, 8 $\tau$ is selected.

## Intra Block Copy (IBC)

IBC is a tool adopted in the HEVC extension of SCC. It is well known that coding efficiency of screen content material is significantly improved. Since the IBC mode is implemented as a block-level coding mode, block matching (BM) may be performed at an encoder to find an optimal block vector (or motion vector) for each CU. Here, the block vector may be used to represent a displacement from a current block to a reference block that has already been reconstructed within the current picture. A luma block vector of an IBC-coded CU may have an integer resolution (or precision). A chroma block vector may be rounded to an integer resolution. Then combined with AMVR, the IBC mode may switch between 1-pel and 4-pel motion vector resolutions. An IBC-coded CU may be treated as a third prediction mode rather than an intra or inter prediction mode. The IBC mode may be applied to CUs having both width and height less than or equal to 64 luma samples.

At the encoder side, hash-based motion estimation may be performed for IBC. The encoder may perform BD checks for blocks having widths and heights not larger than 16 luma samples. For a non-merge mode, a block vector search may first be performed using a hash-based search. When the hash search does not return a valid candidate, a block matching-based local search may be performed.

In the hash-based search, hash key matching (32-bit CRC) between a current block and a reference block may be extended to all allowable block sizes. Calculation of hash keys for all positions of a current picture is based on $4 \times 4$ sub-blocks. For a current block having a larger size, when all hash keys of the $4 \times 4$ sub-blocks match hash keys of corresponding reference positions, the hash key may be determined to match that of the reference block.

When hash keys of multiple predicted blocks are found to match that of the current block, a block vector cost of each matched reference is calculated and a minimum cost may be selected.

In the block matching search, a search range may be set to cover both previous and current CTUs. At a CU level, the IBC mode is signaled with a flag and may be signaled as an IBC AMVP mode or an IBC skip/merge mode as follows.

IBC skip/merge mode: a merge candidate index may be used to indicate which block vectors among a list of neighboring candidate IBC-coded blocks are used to predict the current block. The merge list may include spatial, HMVP, and pairwise candidates.

IBC AMVP mode: a block vector difference may be coded in the same manner as a motion vector difference. A block vector prediction method may use two candidates (in the case of IBC coding), one predictor from a left neighbor and one predictor from a top neighbor. When neither neighbor is available, a default block is used as a predictor. A flag may be signaled to indicate a block vector predictor index.

Meanwhile, when inter prediction is applied, a predictor of the encoding apparatus/decoding apparatus may derive prediction samples by performing inter prediction on a block basis. Inter prediction may represent prediction derived in a manner dependent on data elements (e.g., sample values or motion information) of picture(s) other than a current picture. When inter prediction is applied to a current block, a predicted block (prediction sample array) for the current block may be derived based on a reference block (reference sample array) specified by a motion vector in a reference picture indicated by a reference picture index.

In order to reduce an amount of motion information transmitted in an inter prediction mode, motion information of the current block may be predicted in units of blocks, sub-blocks, or samples based on correlation of motion information between neighboring blocks and the current block. The motion information may include a motion vector and/or a reference picture index. The motion information may further include inter prediction type information (L0 prediction, L1 prediction, bi prediction, etc.). When inter prediction is applied, neighboring blocks may include spatial neighboring blocks present in the current picture and temporal neighboring blocks present in reference pictures.

A reference picture including the reference block and a reference picture including the temporal neighboring block may be the same or different. The temporal neighboring block may be referred to as a collocated reference block or a collocated CU (colCU), and a reference picture including the temporal neighboring block may be referred to as a collocated picture (colPic). For example, a motion information candidate list may be constructed based on neighboring blocks of the current block, and flag or index information indicating which candidate is selected (used) to derive a motion vector and/or a reference picture index of the current block may be signaled.

Inter prediction may be performed based on various prediction modes. For example, in skip mode and merge mode, motion information of the current block may be the same as motion information of a selected neighboring block. In the skip mode, unlike the merge mode, a residual signal may not be transmitted. In a motion vector prediction (MVP) mode, a motion vector of a selected neighboring block is used as a motion vector predictor, and a motion vector difference (MVD) may be signaled. In this case, a motion vector of the current block may be derived using a sum of the motion vector predictor and the motion vector difference.

The motion information may include L0 motion information and/or L1 motion information according to an inter prediction type (L0 prediction, L1 prediction, bi prediction, etc.). A motion vector in an L0 direction may be referred to as an L0 motion vector or MVL0, and a motion vector in an L1 direction may be referred to as an L1 motion vector or MVL1. Prediction based on the L0 motion vector may be referred to as L0 prediction, prediction based on the L1 motion vector may be referred to as L1 prediction, and prediction based on both the L0 motion vector and the L1 motion vector may be referred to as bi prediction. Here, the L0 motion vector may represent a motion vector associated with a reference picture list L0, and the L1 motion vector may represent a motion vector associated with a reference picture list L1. The reference picture list L0 may include pictures earlier than the current picture in an output order as reference pictures, and the reference picture list L1 may include pictures later than the current picture in the output order. The earlier pictures may be referred to as forward reference pictures, and the later pictures may be referred to as backward reference pictures.

The reference picture list L0 may further include pictures later than the current picture in the output order as reference pictures. In this case, in the reference picture list L0, the earlier pictures may be indexed first and the later pictures may be indexed afterward. The reference picture list L1 may further include pictures earlier than the current picture in the output order as reference pictures. In this case, in the reference picture list L1, the later pictures may be indexed first and the earlier pictures may be indexed afterward. Here, the output order may correspond to a picture order count (POC) order.

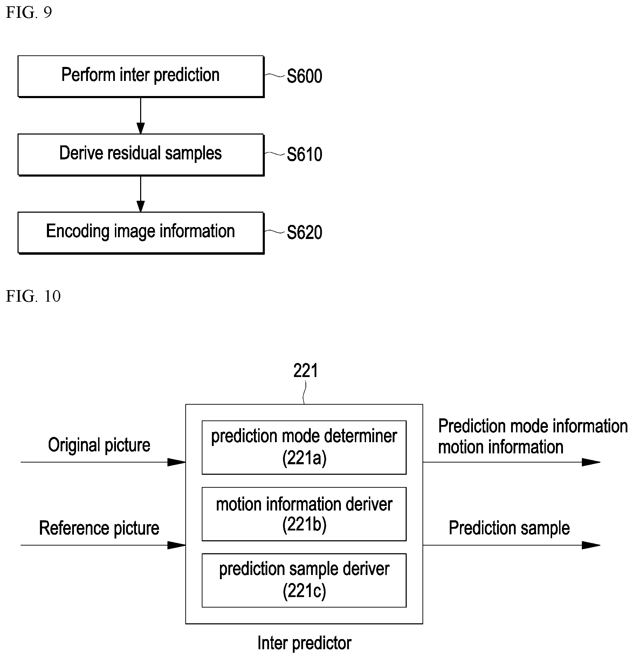

FIGS. 9 and 10 illustrate examples of an inter prediction-based video/image encoding method to which embodiments of the present disclosure may be applied.

Referring to FIG. 9, the encoding apparatus (200) may perform inter prediction on a current block (S600). The encoding apparatus may derive an inter prediction mode and motion information of the current block and generate prediction samples of the current block. Here, procedures of determining the inter prediction mode, deriving motion information, and generating prediction samples may be performed simultaneously, or one procedure may be performed before another procedure. For example, as illustrated in FIG. 10, an inter predictor (221) of the encoding apparatus (200) may include a prediction mode determiner (221a), a motion information deriver (221b), and a prediction sample deriver (221c). The prediction mode determiner (221a) may determine a prediction mode for the current block, the motion information deriver (221b) may derive motion information of the current block, and the prediction sample deriver (221c) may derive prediction samples of the current block.

For example, the inter predictor of the encoding apparatus may search for a block similar to the current block within a predetermined region (search region) of reference pictures through motion estimation, and may derive a reference block having a minimum difference from the current block or a difference less than or equal to a predetermined threshold. Based on this, a reference picture index indicating a reference picture in which the reference block is located may be derived, and a motion vector may be derived based on a positional difference between the reference block and the current block. The encoding apparatus may determine a mode to be applied to the current block among various prediction modes. The encoding apparatus may compare RD costs of the various prediction modes and determine an optimal prediction mode for the current block.

For example, when a skip mode or a merge mode is applied to the current block, the encoding apparatus may construct a merge candidate list described later, and may derive a reference block having a minimum difference or a difference less than or equal to a predetermined threshold in terms of sample differences (e.g., SAD or SATD) between the current block and reference blocks indicated by merge candidates included in the merge candidate list. In this case, a merge candidate associated with the derived reference block is selected, and merge index information indicating the selected merge candidate may be generated and signaled to the decoding apparatus. Motion information of the current block may be derived using motion information of the selected merge candidate.

As another example, when an (A)MVP mode is applied to the current block, the encoding apparatus may construct an (A)MVP candidate list described later, and may use a motion vector of a selected motion vector predictor candidate among motion vector predictor (MVP) candidates included in the (A)MVP candidate list as a motion vector predictor of the current block. In this case, for example, a motion vector indicating a reference block derived by the motion estimation described above may be used as a motion vector of the current block, and a motion vector predictor candidate having a motion vector with the smallest difference from the motion vector of the current block among the motion vector predictor candidates may be selected as the motion vector predictor candidate. A motion vector difference (MVD), which is a difference between the motion vector of the current block and the motion vector predictor, may be derived. In this case, information on the MVD may be signaled to the decoding apparatus. Also, when the (A)MVP mode is applied, a value of a reference picture index may be configured as reference picture index information and may be separately signaled to the decoding apparatus.

The encoding apparatus may derive residual samples based on the prediction samples (S610). The encoding apparatus may derive the residual samples by comparing original samples of the current block and the prediction samples.

The encoding apparatus may encode video/image information including prediction information and residual information (S620). The encoding apparatus may output encoded video/image information in a form of a bitstream. The prediction information may include information related to a prediction procedure, such as prediction mode information (e.g., a skip flag, a merge flag, or a merge index) and/or motion information. The motion information may include candidate selection information (e.g., a merge index, an MVP flag, or an MVP index) which is information for deriving a motion vector. In addition, the motion information may include information on the MVD described above and/or reference picture index information. Further, the motion information may include information indicating whether L0 prediction, L1 prediction, or bi prediction is applied. The residual information is information related to residual samples. The residual information may include information on quantized transform coefficients of the residual samples.

The output bitstream may be stored in a (digital) storage medium and transmitted to the decoding apparatus, or may be transmitted to the decoding apparatus through a network.

Meanwhile, as described above, the encoding apparatus may generate a reconstructed picture (including reconstructed samples and reconstructed blocks) based on reference samples and residual samples. This is to derive the same prediction result in the encoding apparatus as that performed in the decoding apparatus, thereby improving coding efficiency. Accordingly, the encoding apparatus may store the reconstructed picture (or reconstructed samples or reconstructed blocks) in a memory and use the same as a reference picture for inter prediction. As described above, an in-loop filtering procedure or the like may be further applied to the reconstructed picture.

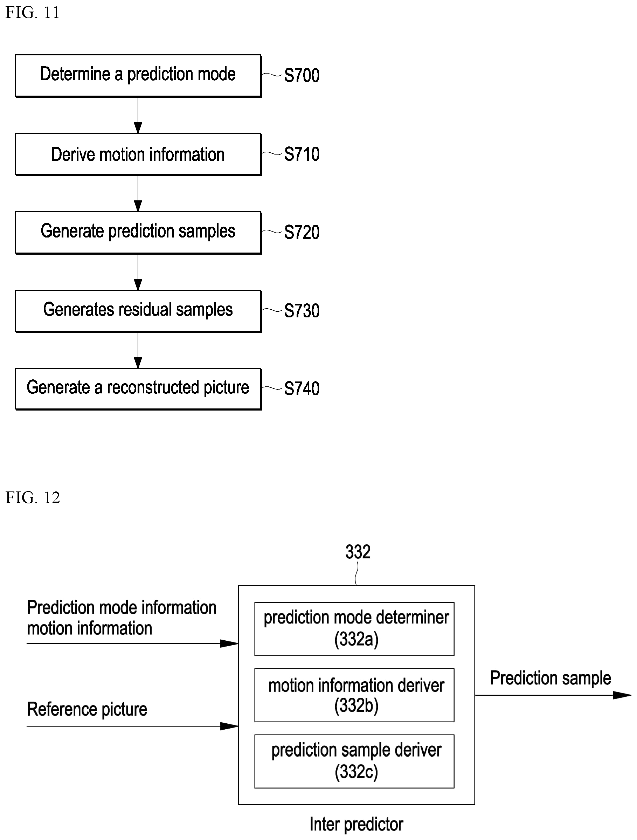

FIGS. 11 and 12 illustrate examples of an inter prediction-based video/image decoding method to which an embodiment of the present disclosure may be applied.

A video/image decoding procedure based on inter prediction may schematically include, for example, the following.

Referring to FIG. 11, the decoding apparatus 300 may perform an operation corresponding to an operation performed in the encoding apparatus 200. The decoding apparatus may perform prediction on a current block and derive prediction samples based on received prediction information.

Specifically, the decoding apparatus may determine a prediction mode for the current block based on the received prediction information (S700). A prediction mode determiner 332a of the decoding apparatus 300 may determine which inter prediction mode is applied to the current block based on prediction mode information in the prediction information.

For example, it may be determined, based on a merge flag, whether a merge mode is applied to the current block or whether an (A)MVP mode is determined. Alternatively, one of various inter prediction mode candidates may be selected based on a mode index. The inter prediction mode candidates may include a skip mode, a merge mode, and/or an (A)MVP mode, or may include various inter prediction modes to be described later.

The decoding apparatus may derive motion information of the current block based on the determined inter prediction mode (S710). For example, when a skip mode or a merge mode is applied to the current block, a motion information deriver 332b of the decoding apparatus 300 may configure a merge candidate list to be described later and select one merge candidate among merge candidates included in the merge candidate list. Such selection may be performed based on the above-described selection information (merge index). Motion information of the current block may be derived by using motion information of the selected merge candidate. The motion information of the selected merge candidate may be used as the motion information of the current block.

As another example, when an (A)MVP mode is applied to the current block, the decoding apparatus may configure an (A)MVP candidate list to be described later and may use a motion vector of a selected mvp (motion vector predictor) candidate among mvp candidates included in the (A)MVP candidate list as an mvp of the current block. Such selection may be performed based on the above-described selection information (mvp flag or mvp index). In this case, an MVD of the current block may be derived based on information regarding MVD, and a motion vector of the current block may be derived based on the mvp and the MVD of the current block. Also, a reference picture index of the current block may be derived based on reference picture index information. In a reference picture list regarding the current block, a picture indicated by the reference picture index may be derived as a reference picture referenced for inter prediction of the current block.

Meanwhile, as will be described later, the motion information of the current block may be derived without configuring a candidate list, and in this case the motion information of the current block may be derived according to a procedure disclosed in a prediction mode to be described later. In this case, the above-described configuration of the candidate list may be omitted.

The decoding apparatus may generate prediction samples for the current block based on the motion information of the current block (S720). In this case, a prediction sample deriver 332c of the decoding apparatus 300 may derive a reference picture based on a reference picture index of the current block and may derive prediction samples of the current block by using samples of a reference block indicated by a motion vector of the current block on the reference picture. In this case, as will be described later, a prediction sample filtering procedure for all or some of the prediction samples of the current block may be further performed in some cases.

In other words, the inter predictor 332 of the decoding apparatus 300 may include the prediction mode determiner 332a, the motion information deriver 332b, and the prediction sample deriver 332c. The prediction mode determiner 332a may determine a prediction mode for the current block based on received prediction mode information, the motion information deriver 332b may derive motion information (a motion vector and/or a reference picture index, etc.) of the current block based on received information regarding motion information, and the prediction sample deriver 332c may derive or generate prediction samples of the current block.

The decoding apparatus generates residual samples for the current block based on received residual information (S730). The decoding apparatus 300 may generate reconstructed samples for the current block based on the prediction samples and the residual samples, and may generate a reconstructed picture based thereon (S740). Thereafter, as described above, an in-loop filtering procedure or the like may be further applied to the reconstructed picture.

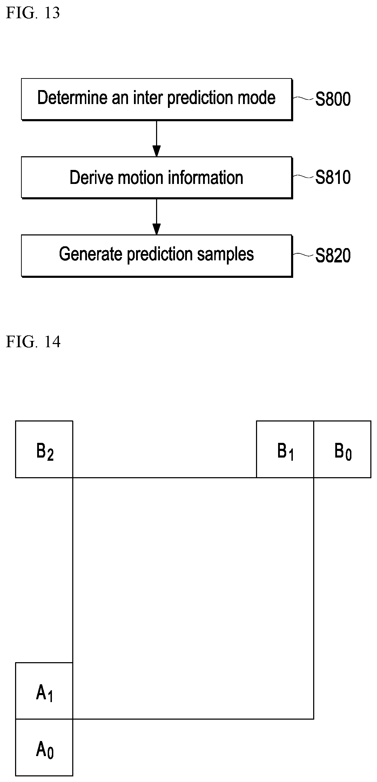

FIG. 13 exemplarily illustrates an inter prediction procedure to which an embodiment of the present disclosure may be applied.

Referring to FIG. 13, as described above, the inter prediction procedure (S600) may include an inter prediction mode determination step, a motion information derivation step according to the determined prediction mode, and a prediction performing (prediction sample generation) step based on the derived motion information. The inter prediction procedure may be performed in the encoding apparatus and the decoding apparatus as described above. In the present document, a coding apparatus may include the encoding apparatus and/or the decoding apparatus.

Referring to FIG. 13, the coding apparatus determines an inter prediction mode for the current block (S800). Various inter prediction modes may be used for prediction of the current block in a picture. For example, various modes such as a merge mode, a skip mode, an MVP (Motion Vector Prediction) mode, an Affine mode, a subblock merge mode, and an MMVD (Merge with MVD) mode may be used. A DMVR (Decoder side Motion Vector Refinement) mode, an AMVR (Adaptive Motion Vector Resolution) mode, BCW (Bi-prediction with CU-level Weight), BDOF (Bi-Directional Optical Flow), and the like may be used as additional modes. Also, according to one embodiment of the present disclosure, the above-described inter prediction mode may include a multi-hypothesis prediction (MHP) mode. The multi-hypothesis prediction mode indicates a method of performing prediction by weighted-summing an additional prediction block generated based on additional motion information with an inter prediction block. The multi-hypothesis prediction mode will be described in detail later.

In the present disclosure, the Affine mode may also be referred to as an affine motion prediction mode. Also, the MVP mode may also be referred to as an AMVP (Advanced Motion Vector Prediction) mode. In the present disclosure, some modes and/or a motion information candidate derived by some modes may be included as one of motion information-related candidates of another mode. For example, an HMVP candidate may be additionally included as a merge candidate of a merge/skip mode, or may also be additionally included as a motion vector predictor candidate of an AMVP mode. When the HMVP candidate is used as a motion information candidate of a merge mode or a skip mode, the HMVP candidate may be referred to as an HMVP merge candidate.

Prediction mode information indicating an inter prediction mode of the current block may be signaled from the encoding apparatus to the decoding apparatus. The prediction mode information may be included in a bitstream and received by the decoding apparatus. The prediction mode information may include index information indicating one of a plurality of candidate modes. Alternatively, the inter prediction mode may also be indicated through hierarchical signaling of flag information.

In this case, the prediction mode information may include one or more flags. For example, a skip flag may be signaled to indicate whether a skip mode is applied, a merge flag may be signaled when the skip mode is not applied to indicate whether a merge mode is applied, and when the merge mode is not applied, it may be indicated that an MVP mode is applied, or a flag for additional distinction may be further signaled. The Affine mode may be signaled as an independent mode, or may be signaled as a mode dependent on a merge mode or an MVP mode. For example, the Affine mode may include an affine merge mode and an affine MVP mode.

The coding apparatus may derive motion information for the current block (S810). The motion information may be derived based on the inter prediction mode determined in the above-described step. The coding apparatus may perform inter prediction by using the motion information of the current block. The encoding apparatus may derive optimal motion information for the current block through a motion estimation procedure.

For example, the encoding apparatus may search, in units of fractional pixels, for a similar reference block having high correlation within a predetermined search range in a reference picture by using an original block in an original picture for the current block, and may derive motion information through the same. Similarity of blocks may be derived based on a difference in phase-based sample values. For example, similarity of blocks may be calculated based on SAD between the current block (or a template of the current block) and the reference block (or a template of the reference block). In this case, motion information may be derived based on a reference block having the smallest SAD within the search range. The derived motion information may be signaled to the decoding apparatus in various ways based on the inter prediction mode.

The coding apparatus may perform inter prediction based on motion information for the current block to generate prediction samples (S820). The current block including the prediction samples may be referred to as a prediction block.

Meanwhile, information indicating whether the above-described List0 (L0) prediction, List1 (L1) prediction, or bi-prediction is used for the current block (current coding unit) may be signaled. Such information may be referred to as motion prediction direction information, inter prediction direction information, or inter prediction indication information, and may be configured/encoded/signaled, for example, in a form of an inter_pred_idc syntax element. That is, the inter_pred_idc syntax element may indicate whether the above-described List0 (L0) prediction, List1 (L1) prediction, or bi-prediction is used for the current block (current coding unit). In the present document, for convenience of description, an inter prediction type (L0 prediction, L1 prediction, or BI prediction) indicated by the inter_pred_idc syntax element may be indicated as a motion prediction direction. L0 prediction may also be represented as pred_L0, L1 prediction may also be represented as pred_L1, and bi-prediction may also be represented as pred_BI. For example, according to a value of the inter_pred_idc syntax element, a prediction type as shown in Table 3 below may be indicated.

[Table 3]

| inter_pred_idc | Name of inter_pred_idc | |
| --- | --- | --- |
| | ( cbWidth - cbHeight ) '= 8 | ( cbWidhth - cbHeight ) = = 8 |
| 0 | PRED_L0 | FRED_L0 |
| 1 | PRED_L1 | PRED_L1 |
| 2 | PRED_BI | n.a. |

As described above, one picture may include one or more slices. A slice may have one type among slice types including an intra (I) slice, a predictive (P) slice, and a bi-predictive (B) slice. Such a slice type may be indicated based on slice type information. For blocks in an I slice, inter prediction is not used for prediction and only intra prediction may be used. Of course, even in this case, original sample values may be coded and signaled without prediction. For blocks in a P slice, intra prediction or inter prediction may be used, and when inter prediction is used, only uni prediction may be used. Meanwhile, for blocks in a B slice, intra prediction or inter prediction may be used, and when inter prediction is used, up to bi prediction may be used.

L0 and L1 may include reference pictures encoded/decoded before the current picture. For example, L0 may include reference pictures before and/or after the current picture in POC order, and L1 may include reference pictures after and/or before the current picture in POC order. In this case, in L0, relatively lower reference picture indexes may be assigned to reference pictures before the current picture in POC order, and in L1, relatively lower reference picture indexes may be assigned to reference pictures after the current picture in POC order. In the case of a B slice, bi prediction may be applied, and even in this case, unidirectional bi prediction may be applied, or bidirectional bi prediction may be applied. Bidirectional bi prediction may be referred to as true bi prediction.

Inter prediction may be performed by using motion information of the current block. The encoding apparatus may derive optimal motion information for the current block through a motion estimation procedure. For example, the encoding apparatus may search, in units of fractional pixels, for a similar reference block having high correlation within a predetermined search range in a reference picture by using an original block in an original picture for the current block, and may derive motion information through the same. Similarity of blocks may be derived based on a difference in phase-based sample values. For example, similarity of blocks may be calculated based on SAD between the current block (or a template of the current block) and the reference block (or a template of the reference block). In this case, motion information may be derived based on a reference block having the smallest SAD within the search region. The derived motion information may be signaled to the decoding apparatus according to various methods based on an inter prediction mode.

**Merge mode and skip mode**

When a merge mode is applied, motion information of a current prediction block is not directly transmitted, and motion information of the current prediction block is derived by using motion information of a neighboring prediction block. Therefore, motion information of the current prediction block may be indicated by transmitting flag information indicating that the merge mode is used and a merge index indicating which neighboring prediction block is used. The merge mode may also be referred to as a regular merge mode.

In order to perform the merge mode, an encoder may search for a merge candidate block for deriving motion information of the current prediction block. For example, up to five merge candidate blocks may be used, but the present disclosure is not limited thereto. Also, a maximum number of merge candidate blocks may be transmitted in a slice header or a tile group header, but the present disclosure is not limited thereto. After finding merge candidate blocks, the encoder may generate a merge candidate list and may select, as a final merge candidate block, a merge candidate block having the smallest cost among them.

FIG. 14 illustrates an example of blocks used for configuring a merge candidate list.

The present disclosure provides various embodiments for merge candidate blocks configuring a merge candidate list.

The merge candidate list may use, for example, five merge candidate blocks. For example, four spatial merge candidates and one temporal merge candidate may be used. As a specific example, in the case of the spatial merge candidates, blocks illustrated in FIG. 14 may be used as the spatial merge candidates. Hereinafter, a spatial merge candidate or a spatial MVP candidate to be described later may be referred to as SMVP, and a temporal merge candidate or a temporal MVP candidate to be described later may be referred to as TMVP.

A merge candidate list for the current block may be configured, for example, based on the following procedure:

- inserting spatial merge candidates derived by searching spatial neighboring blocks into the merge candidate list
- inserting a temporal merge candidate derived by searching a temporal neighboring block into the merge candidate list
- comparing a current number of merge candidates with a maximum number of merge candidates
- when the current number of merge candidates is smaller than the maximum number of merge candidates, inserting an additional merge candidate into the merge candidate list

Describing the above procedure in detail, a coding apparatus (encoder/decoder) inserts spatial merge candidates derived by searching spatial neighboring blocks of the current block into the merge candidate list. For example, the spatial neighboring blocks may include a neighboring block around a bottom-left corner of the current block, a left neighboring block, a neighboring block around a top-right corner, a top neighboring block, and a neighboring block around a top-left corner. However, this is an example, and in addition to the spatial neighboring blocks described above, additional neighboring blocks such as a right neighboring block, a bottom neighboring block, and a bottom-right neighboring block may also be used as the spatial neighboring blocks. The coding apparatus may search the spatial neighboring blocks based on priority to detect available blocks and may derive motion information of the detected blocks as spatial merge candidates. For example, the encoder and decoder may search five blocks illustrated in FIG. 14 in an order of A1, B1, B0, A0, and B2, and may sequentially index available candidates to configure a merge candidate list.

The coding apparatus inserts a temporal merge candidate derived by searching a temporal neighboring block of the current block into the merge candidate list. The temporal neighboring block may be located on a reference picture which is a picture different from the current picture in which the current block is located. A reference picture in which the temporal neighboring block is located may be referred to as a collocated picture or a col picture. The temporal neighboring block may be searched on the col picture in an order of a neighboring block around a bottom-right corner of a co-located block for the current block and a bottom-right center block.

Meanwhile, when motion data compression is applied, specific motion information may be stored as representative motion information for each predetermined storage unit in the col picture. In this case, it is not necessary to store motion information for all blocks within the predetermined storage unit, and a motion data compression effect may be obtained through the same. In this case, the predetermined storage unit may be predefined, for example, in units of 16x16 samples or units of 8x8 samples, or size information regarding the predetermined storage unit may be signaled from the encoder to the decoder. When motion data compression is applied, motion information of the temporal neighboring block may be replaced with representative motion information of a predetermined storage unit in which the temporal neighboring block is located. That is, in this case, from an implementation aspect, a temporal merge candidate may be derived based on motion information of a prediction block covering a position obtained by arithmetically right-shifting the coordinates of the temporal neighboring block by a predetermined value and then arithmetically left-shifting the same, rather than a prediction block located at the coordinates of the temporal neighboring block. For example, when the predetermined storage unit is in units of $2n \times 2n$ samples, if coordinates of the temporal neighboring block are (xTnb, yTnb), motion information of a prediction block located at a modified position $(((xTnb>>n)<<n), ((yTnb>>n)<<n))$ may be used for the temporal merge candidate. Specifically, for example, when the predetermined storage unit is in units of 16x16 samples, if coordinates of the temporal neighboring block are (xTnb, yTnb), motion information of a prediction block located at a modified position $(((xTnb>>4)<<4), ((yTnb>>4)<<4))$ may be used for the temporal merge candidate. Alternatively, for example, when the predetermined storage unit is in units of 8x8 samples, if coordinates of the temporal neighboring block are (xTnb, yTnb), motion information of a prediction block located at a modified position ((xTnb>>3)<<3), ((yTnb>>3)<<3)) may be used for the temporal merge candidate.

The coding apparatus may compare a number of current merge candidates with a maximum number of merge candidates. The maximum number of merge candidates may be predefined or may be signaled from the encoder to the decoder.For example, the encoder may generate information regarding the maximum number of merge candidates, encode the same, and transmit the same to the decoder in a form of a bitstream. When the maximum number of merge candidates is filled, a subsequent candidate addition process may not be performed.

When, as a result of the comparison, the number of current merge candidates is smaller than the maximum number of merge candidates, the coding apparatus inserts an additional merge candidate into the merge candidate list. The additional merge candidate may include, for example, at least one of history based merge candidate(s), pair-wise average merge candidate(s), ATMVP, a combined bi-predictive merge candidate (when a slice/tile group type of the current slice/tile group is a B type), and/or a zero-vector merge candidate, which will be described later.

When, as a result of the comparison, the number of current merge candidates is not smaller than the maximum number of merge candidates, the coding apparatus may terminate configuration of the merge candidate list. In this case, the encoder may select, based on an RD (rate-distortion) cost, an optimal merge candidate among merge candidates configuring the merge candidate list, and may signal selection information (e.g., a merge index) indicating the selected merge candidate to the decoder. The decoder may select an optimal merge candidate based on the merge candidate list and the selection information.

As described above, motion information of the selected merge candidate may be used as motion information of the current block, and prediction samples of the current block may be derived based on motion information of the current block. The encoder may derive residual samples of the current block based on the prediction samples, and may encode residual information regarding the residual samples and transmit the same to the decoder. As described above, the decoder may generate reconstructed samples based on residual samples derived based on the transmitted residual information and the prediction samples, and may generate a reconstructed picture based thereon.

When a skip mode is applied, motion information of the current block may be derived in the same manner as when the merge mode is applied, described above. However, when the skip mode is applied, a residual signal for the corresponding block is omitted, and thus the prediction samples may be directly used as reconstructed samples.

## **Merge mode with MVD (MMVD)**

The MMVD mode mentioned above will be described. In addition to the merge mode in which implicitly derived motion information is directly used for prediction samples of the current block, a merge mode using a difference of motion vectors (MMVD) may be used. Since a motion information derivation method similar to the skip mode and the merge mode is used, MMVD may also be applied to the skip mode. After signaling a skip flag and a merge flag, MMVD (e.g., mmvd_flag) flag information may be signaled to indicate whether to use the MMVD mode for the current block.

In MMVD, after a merge candidate is selected, the candidate may be further refined according to signaled MVD information. When MMVD is applied to the current block (that is, when mmvd_flag is 1), additional information regarding MMVD may be signaled. The additional information may include a merge candidate flag (e.g., mmvd_merge_flag) indicating whether a first or second candidate in the merge candidate list is used together with a motion vector difference, a distance index (e.g., mmvd_distance_idx) indicating a motion magnitude, and a direction index (e.g., mmvd_direction_idx) for indicating a motion direction. In the MMVD mode, one of the first two candidates in the merge list may be selected to be used as an MV basis. The merge candidate flag is signaled to indicate a candidate to be used.

The distance index indicates motion magnitude information and indicates a predefined offset from a starting point. The offset is added to a horizontal component or a vertical component of a starting MV. A relationship between the distance index and the predefined offset may be represented as shown in Table 4 below.

[Table 4]

| mmvd_distance_idx[ x0 ][ y0 ] | MmvdDistance[ x0 ][ y0 ] | |
|---|---|---|
| | slice_fpel_mmvd_enabled_flag = = 0 | slice_fpel_mmvd_enabled_flag = = 1 |
| 0 | 1 | 4 |
| 1 | 2 | 8 |
| 2 | 4 | 16 |
| 3 | 8 | 32 |
| 4 | 16 | 64 |

(continued)

| mmvd_distance_idx[ x0 ][ y0 ] | MmvdDistance[ x0 ][ y0 ] | |
| --- | --- | --- |
| | slice_fpel_mmvd_enabled_flag = = 0 | slice_fpel_mmvd_enabled_flag = = 1 |
| 5 | 32 | 128 |
| 6 | 64 | 256 |
| 7 | 128 | 512 |

Here, when slice_fpel_mmvd_enabled_flag is equal to 1, it indicates that a merge mode with a motion vector difference uses integer sample precision in a current slice. When slice_fpel_mmvd_enabled_flag is equal to 0, it indicates that a merge mode with a motion vector difference may use fractional sample precision in the current slice. The slice_fpel_mmvd_enabled_flag syntax element is signaled through a slice header, or may be included in the slice header.

The direction index indicates a direction of MVD with respect to a starting point. The direction index may indicate one of four directions as shown in Table 5 below. A meaning of an MVD sign may vary according to information of a starting MV. When the starting MV is a non-predicted MV or bidirectional MVs in which both lists point to the same side of the current picture (that is, when POCs of both references are both greater than or less than the POC of the current picture), a sign in Table 5 below may indicate a sign of an MV offset added to the starting MV. When the starting MVs are bidirectional prediction MVs and the two MVs point to different sides of the current picture (that is, when a POC of one reference is greater than the POC of the current picture and a POC of the other reference is less than the POC of the current picture), a sign in Table 5 below indicates a sign of an MV offset added to a list 0 MV component of the starting MV, and a sign of list 1 MV has an opposite value.

[Table 5]

| mmvd_direction_idx[ x0 ][ y0 ] | MmvdSign[ x0 ][ y0 ][0] | MmvdSign[ x0 ][ y0 ][1] |
| --- | --- | --- |
| 0 | +1 | 0 |
| 1 | -1 | 0 |
| 2 | 0 | +1 |
| 3 | 0 | -1 |

Two elements of a merge plus MVD offset MmvdOffset[x0][y0] may be derived as follows.

$$\text{MmvdOffset[ x0 ][ y0 ][ 0 ] = ( MmvdDistance[ x0 ][ y0 ] << 2 ) * MmvdSign[ x0 ][ y0 ][ 0 ]}$$

$$\text{MmvdOffset[ x0 ][ y0 ][ 1 ] = ( MmvdDistance[ x0 ][ y0 ] << 2 ) * MmvdSign[ x0 ][ y0 ][ 1 ]}$$

**Motion Vector Prediction (MVP)**

The MVP (Motion Vector Prediction) mode may also be referred to as an AMVP (advanced motion vector prediction) mode. When the MVP mode is applied, an mvp (motion vector predictor) candidate list may be generated by using motion vectors of reconstructed spatial neighboring blocks and/or motion vectors corresponding to a temporal neighboring block (or a col block). That is, motion vectors of reconstructed spatial neighboring blocks and/or motion vectors corresponding to the temporal neighboring block may be used as motion vector predictor candidates. When bi prediction is applied, an mvp candidate list for deriving L0 motion information and an mvp candidate list for deriving L1 motion information may be separately generated and used.

The above-described prediction information (or information related to prediction) may include selection information (e.g., an MVP flag or an MVP index) indicating an optimal motion vector predictor candidate selected among motion vector predictor candidates included in the list. In this case, the predictor may select a motion vector predictor of the current block among the motion vector predictor candidates included in the motion vector candidate list by using the selection information.

The predictor of the encoding apparatus may obtain a motion vector difference (MVD) between a motion vector of the current block and the motion vector predictor and may encode the same and output the same in a form of a bitstream. That is, the MVD may be obtained as a value obtained by subtracting the motion vector predictor from the motion vector of the current block. In this case, the predictor of the decoding apparatus may obtain the motion vector difference included in the prediction information and may derive the motion vector of the current block by adding the motion vector difference and the motion vector predictor. The predictor of the decoding apparatus may obtain or derive a reference picture index indicating a reference picture from the prediction information. For example, the motion vector predictor candidate list may be configured as follows:

- searching spatial candidate blocks for motion vector prediction and inserting them into a prediction candidate list
- checking whether a number of spatial candidate blocks is less than 2
- if the number of spatial candidate blocks is less than 2, searching a temporal candidate block and additionally inserting it into the prediction candidate list
- if the temporal candidate block is unavailable, using a zero motion vector
- if the number of spatial candidate blocks is not less than 2, terminating configuration of the motion vector predictor candidate list

Meanwhile, when the MVP mode is applied, a reference picture index may be explicitly signaled. In this case, a reference picture index for L0 prediction (refidxL0) and a reference picture index for L1 prediction (refidxL1) may be separately signaled. For example, when the MVP mode is applied and bi prediction is applied, both information regarding refidxL0 and information regarding refidxL1 may be signaled.

**MVD (Motion Vector Difference) Coding**

When the MVP mode is applied, information regarding the MVD derived in the encoding apparatus as described above may be signaled or encoded and transmitted to the decoding apparatus. The information regarding the MVD may include, for example, information representing x and y components for an absolute value of the MVD and a sign thereof. In this case, whether the absolute value of the MVD is greater than 0 and whether the absolute value of the MVD is greater than 1, and information representing a remainder of the MVD may be signaled step by step. For example, information indicating whether the absolute value of the MVD is greater than 1 may be signaled only when a value of flag information indicating whether the absolute value of the MVD is greater than 0 is equal to 1.

For example, information regarding the MVD may be configured with the following syntax and may be encoded in the encoding apparatus and signaled to the decoding apparatus.

[Table 6]

| mvd_coding( x0, y0, refList,cpIdx ) ( | Descriptor |
|---|---|
| **abs_mvd_greater0_flag**[ 0 ] | ae(v) |
| **abs_mvd_greater0_flag**[ 1 ] | ae(v) |
| if( abs_mvd_greater0_flag[ 0 ] ) | |
| **abs_mvd_greater1_flag**[ 0 ] | ae(v) |
| if( abs_mvd_greater0_flag[ 1 ] ) | |
| **abs_mvd_greater1_flag**[ 1 ] | ae(v) |
| if( abs_mvd_greater0_flag[ 0 ] ) { | |
| if( abs_mvd_greater1_flag[ 0 ] ) | |
| **abs_mvd_minus2**[ 0 ] | ae(v) |
| **mvd_sign_flag**[ 0 ] | ae(v) |
| } | |
| if( abs_mvd_greater0_flag[ 1 ] ) { | |
| if( abs_mvd_greater1_flag[ 1 ] ) | |
| **abs_mvd_minus2**[ 1 ] | ae(v) |
| **mvd_sign_flag[ 1 ]** | ae(v) |
| } | |
| } | |

For example, MVD[compIdx] may be derived based on abs_mvd_greater0_flag[compIdx] * ( abs_mvd_minus2 [compIdx] + 2) * ( 1 - 2 * mvd_sign_flag[compIdx] ). Here, compIdx (or cpIdx) represents an index of each component and may have a value of 0 or 1. A value of compIdx equal to 0 may represent an x component, and a value of compIdx equal to 1 may represent a y component. However, this is only an example, and values for respective components may be represented using coordinate systems other than an x, y coordinate system.

Meanwhile, an MVD for L0 prediction (MVDL0) and an MVD for L1 prediction (MVDL1) may be separately signaled, and information regarding the MVD may include information regarding MVDL0 and/or information regarding MVDL1. For example, when the MVP mode is applied to a current block and BI prediction is applied, both information regarding the MVDL0 and information regarding the MVDL1 may be signaled.

**Affine Prediction**

A conventional video coding system uses only one motion vector to represent motion of a coding block (i.e., using a translation motion model). Such a method may represent optimal motion at a block level, but since it is not optimal motion for each pixel, coding efficiency may be improved if an optimal motion vector can be determined at a pixel level. For this purpose, an affine motion prediction method that performs coding using an affine motion model will be described.

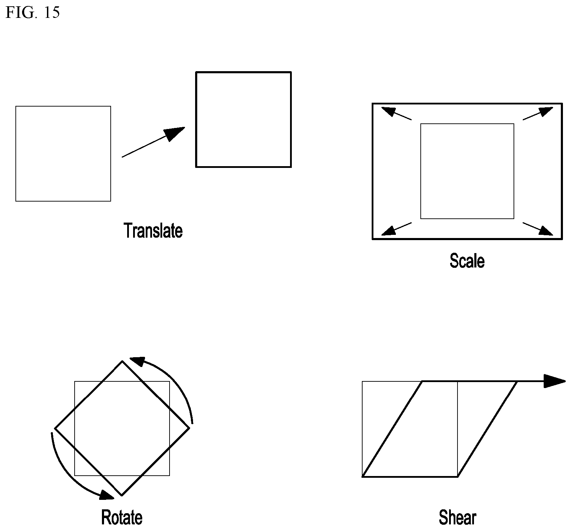

FIG. 15 illustrates four types of motion that may be represented in an affine motion model.

An affine motion prediction method may represent motion vectors at a pixel level of a block by using two, three, or four motion vectors.

As shown in FIG. 15, the affine motion model may represent four types of motion. Among motions that may be represented by the affine motion model, an affine motion model representing three motions (translation, scale, and rotate) is referred to as a similarity (or simplified) affine motion model, and in the following description, proposed methods will be described based on the similarity affine motion model. However, the disclosed embodiments are not limited to the corresponding motion model.

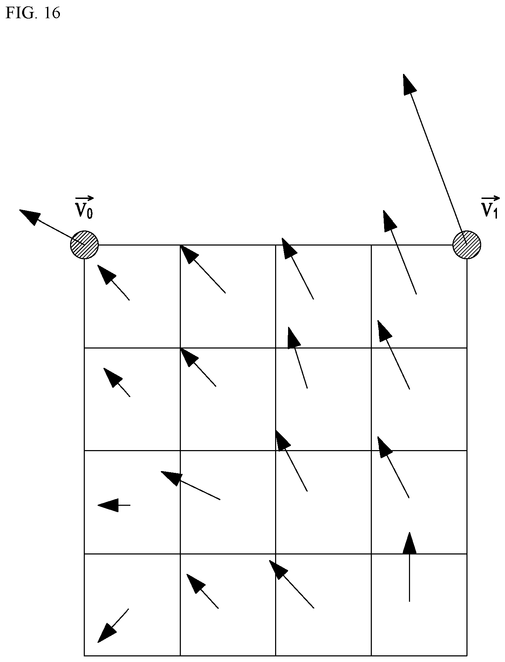

FIG. 16 illustrates an example of control point motion vectors used in affine motion prediction.

As illustrated in FIG. 16, affine motion prediction may determine a motion vector of a pixel position included in a block by using two or more control point motion vectors (CPMVs). In this case, a set of motion vectors is referred to as an affine motion vector field (MVF), and may be determined by the following equations.

For a 4-parameter affine motion model, a motion vector at a sample position (x, y) of a block may be derived according to Equation 2 below.

[Equation 2]
$$\begin{cases} mv_x = \dfrac{mv_{1x}-mv_{0x}}{W}x + \dfrac{mv_{1y}-mv_{0y}}{W}y + mv_{0x} \\ mv_y = \dfrac{mv_{1y}-mv_{0y}}{W}x + \dfrac{mv_{1x}-mv_{0x}}{W}y + mv_{0y} \end{cases}$$

For a 6-parameter affine motion model, a motion vector at a sample position (x, y) of a block may be derived according to Equation 3 below.

[Equation 3]
$$\begin{cases} mv_x = \dfrac{mv_{1x}-mv_{0x}}{W}x + \dfrac{mv_{2x}-mv_{0x}}{H}y + mv_{0x} \\ mv_y = \dfrac{mv_{1y}-mv_{0y}}{W}x + \dfrac{mv_{2y}-mv_{0y}}{H}y + mv_{0y} \end{cases}$$

Here, $\vec{v_0} = \{v_{0x}, v_{0y}\}$ is a CPMV of a CP at a top-left corner position of a coding block, $\vec{v_1} = \{v_{1x}, v_{1y}\}$ is a CPMV of a CP at a top-right corner position, and $\vec{v_2} = \{v_{2x}, v_{2y}\}$ is a CPMV of a CP at a bottom-left corner position. In addition, W corresponds to a width of a current block, H corresponds to a height of the current block, and $\vec{v} = \{v_x, v_y\}$ is a motion vector at a position {x, y}.

During an encoding/decoding process, an affine MVF may be determined on a pixel basis or on a predefined subblock basis. When determined on a pixel basis, a motion vector is obtained based on each pixel value, and when determined on a subblock basis, a motion vector of the block is obtained based on a pixel value at a center of a subblock (i.e., a bottom-right sample among four center samples). For example, as illustrated in FIG. 16, an affine MVF may be determined on a 4×4 subblock basis. However, this is only an example, and a size of a subblock applied to affine prediction may be variously modified.

When affine prediction is available, a motion model applicable to a current block may include three models: a translational motion model, a 4-parameter affine motion model, and a 6-parameter affine motion model. Here, the translational motion model may represent a model in which a conventional block-level motion vector is used, the 4-parameter affine motion model may represent a model in which two CPMVs are used, and the 6-parameter affine motion model may represent a model in which three CPMVs are used.

Affine motion prediction may include an affine MVP (or affine inter) mode and an affine merge mode. In affine motion prediction, motion vectors of a current block may be derived on a sample basis or on a subblock basis.

**Affine merge**

In an affine merge mode, CPMVs may be determined according to an affine motion model of a neighboring block coded according to affine motion prediction. Affine-coded neighboring blocks may be used for the affine merge mode according to a search order. When one or more neighboring blocks are coded using affine motion prediction, a current block may be coded using affine merge.

That is, when the affine merge mode is applied, CPMVs of a current block may be derived using CPMVs of neighboring blocks. In this case, CPMVs of neighboring blocks may be directly used as CPMVs of the current block, or CPMVs of neighboring blocks may be modified based on a size of the neighboring block and a size of the current block and used as CPMVs of the current block.

Meanwhile, in a case of affine merge in which MVs are derived on a subblock basis, the mode may be referred to as a subblock merge mode and may be indicated based on a merge_subblock_flag (value 1). In this case, an affine merging candidate list described later may also be referred to as a subblock merging candidate list. In this case, the subblock merging candidate list may further include a candidate derived by SbTMVP. In this case, the candidate derived by sbTMVP may be used as a candidate of index 0 in the subblock merging candidate list. In other words, the candidate derived by sbTMVP may be positioned before inherited affine candidates and constructed affine candidates described later within the subblock merging candidate list.

When the affine merge mode is applied, an affine merge candidate list may be constructed to derive CPMVs for a current block. The affine merge candidate list may include at least one of the following candidates:

- inherited affine candidates
- constructed affine candidates
- zero MVs candidate

Here, an inherited affine candidate is a candidate derived based on CPMVs of a neighboring block when the neighboring block is coded in an affine mode, a constructed affine candidate is a candidate derived by constructing CPMVs based on MVs of neighboring blocks around each CP, and a zero MVs candidate may represent a candidate composed of CPMVs having a value of 0. For example, the zero MVs candidate may be optionally inserted into the candidate list when a number of current candidates is less than a maximum number of candidates.

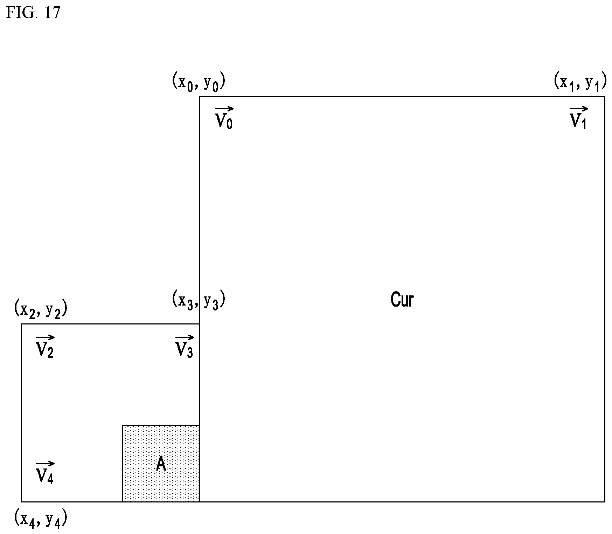

FIG. 16 illustrates an example of inheritance of control point motion vectors, and FIG. 17 illustrates an example of positions of candidates in a constructed affine merge mode.

Two inherited affine candidates may be derived from an affine motion model of neighboring blocks. One of them may be derived from left neighboring CUs, and the other may be derived from top CUs.

Referring again to FIG. 14 described above, for a left predictor, a scan order is A0 → A1, and for a top predictor, a scan order is B0 → B1 → B2. Only a first inherited candidate on each side may be selected, and a pruning check is not performed between the two inherited candidates.

When a neighboring affine CU is identified, control point motion vectors may be used to derive a CPMVP candidate in an affine merge list of a current CU. Referring to FIG. 16, when a neighboring bottom-left block A is coded in an affine mode, motion vectors v2, v3, and v4 at a top-left corner, a top-right corner, and a bottom-left corner of a CU including block A may be obtained. When block A is coded using a 4-parameter affine model, two CPMVs of the current CU may be calculated according to v2 and v3. When block A is coded using a 6-parameter affine model, three CPMVs of the current CU may be calculated according to v2, v3, and v4.

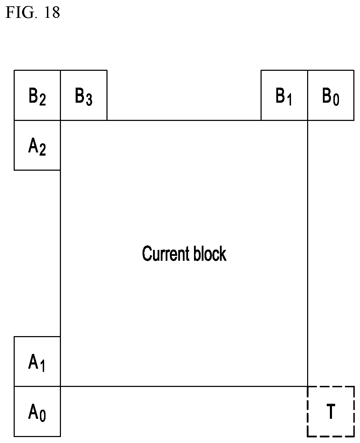

FIG. 18 illustrates an example of neighboring blocks of a current block.

A constructed affine candidate may refer to a candidate constructed by combining neighbor translational motion information around each control point. Motion information for each control point may be derived from designated spatial neighbors and temporal neighbors as illustrated in FIG. 18.

CPMVk (k = 1, 2, 3, 4) represents a k-th control point. For CPMV1, blocks are checked in an order of B2 → B3 → A2, and an MV of a first available block is used. For CPMV2, blocks are checked in an order of B1 → B0, and for CPMV3, blocks are checked in an order of A1 → A0. TMVP may be used as CPMV4 when available.

After motion vectors of four control points are obtained, an affine merge candidate may be constructed based on motion information. The following combinations of control point MVs may be used sequentially for construction:

{CPMV1, CPMV2, CPMV3}, {CPMV1, CPMV2, CPMV4}, {CPMV1, CPMV3, CPMV4}, {CPMV2, CPMV3, CPMV4}, {CPMV1, CPMV2}, {CPMV1, CPMV3}.

A combination of three CPMVs constructs a 6-parameter affine merge candidate, and a combination of two CPMVs constructs a 4-parameter affine merge candidate. To omit a motion scaling procedure, when reference indices of control points are different, a corresponding combination of control point MVs is not used.

### DMVR (Decoder side Motion Vector Refinement)

DMVR (Decoder side Motion Vector Refinement) is a method of performing motion prediction by refining motion information of neighboring blocks at a decoder side. When DMVR is applied, the decoder may derive refined motion information through cost comparison based on templates generated using motion information of neighboring blocks in a merge/skip mode. Through this, precision of motion prediction may be increased and compression performance may be improved without additional signaling information.

In the present disclosure, a decoder is mainly described for convenience of explanation, but DMVR may also be performed in the same manner in an encoder.

Meanwhile, DMVR may be regarded as an example of a motion information derivation procedure in terms that a motion vector is refined, and may also be regarded as an example of a prediction sample generation procedure in terms that prediction samples are generated based on reference blocks indicated by a refined MV pair.

In a bi-prediction procedure, refined MVs may be searched around initial MVs in reference picture lists L0 and L1. A BM method calculates distortion between two candidate blocks from reference picture lists L0 and L1.

SAD is calculated based on each MV candidate within a search range around an initial MV. An MV candidate having a lowest SAD becomes a refined MV and is used to generate a bi-predicted signal.

In one embodiment, a decoder may perform a DMVR process to improve accuracy of initial motion compensated prediction (i.e., motion compensated prediction using a conventional merge/skip mode). For example, the decoder may perform the DMVR process when a prediction mode of a current block is a merge mode or a skip mode and bi-prediction in which reference pictures are located in opposite directions with respect to the current picture in display order is applied to the current block.

For example, DMVR may be applied to CUs coded according to the following modes and conditions:

- a CU-level merge mode using bi-prediction MVs
- one reference picture is a past picture and another reference picture is a future picture with respect to a current picture
- a distance (i.e., POC difference) from the two reference pictures to the current picture is the same
- a CU includes more than 64 luma samples
- both a CU height and a CU width are greater than or equal to 8 luma samples
- a BCW weight index represents the same weight
- WP is not available for a current block
- refined MVs derived by the DMVR process are used to generate inter prediction samples and may also be used in temporal motion vector prediction for coding of a next picture. An original MV is used in a deblocking process and may also be used in spatial motion vector prediction for coding of a subsequent CU.

### GPM (Geometric Partitioning Mode)

In VVC, GPM may be supported for inter prediction. GPM is a type of merge mode and may be signaled using a CU-level flag. Other merge modes may include a regular merge mode, an MMVD mode, a CIIP mode, and a subblock merge mode. For each possible CU size w x h = 2m x 2n, a total of 64 partitions may be supported, where m, n $\in$ {3 ... 6}, and 8×64 and 64×8 are excluded.

When this mode is used, a CU may be divided into two parts by a geometrically positioned straight line. A position of the partition line may be mathematically derived from angle and offset parameters of a specific partition. Each part of a geometric partition of the CU may be inter-predicted using its own motion. Only uni-prediction is allowed for each partition, that is, each part has one motion vector and one reference index. A uni-prediction motion constraint may be applied to ensure that only two motion-compensated predictions are required for each CU, similar to conventional bi-prediction.

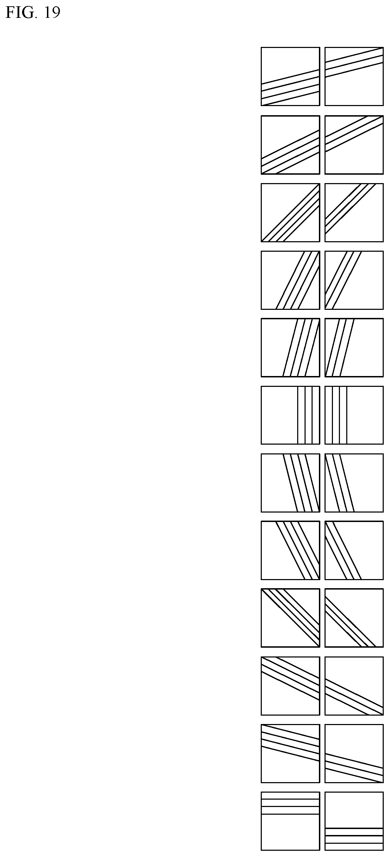

FIG. 19 illustrates GPM partitions grouped with the same angle.

A uni-prediction motion for each partition may be derived using a process illustrated in FIG. 19.

When GPM is used for a current block, a geometric partition index representing a partition mode of geometric partitioning (angle and offset) and two merge indices (one for each partition) may be additionally signaled. A maximum number of GPM candidate sizes is explicitly signaled in an SPS and may specify syntax binarization of GPM merge indices. After each part of the geometric partition is predicted, sample values may be adjusted using blending processing with adaptive weights along the geometric partition edge as described below. This becomes a prediction signal for an entire CU, and transform and quantization processes may be applied to the entire CU as in other prediction modes. Finally, a motion field of a CU predicted using GPM may be stored in a motion field storage for the geometric partitioning mode.

## CIIP (Combined Inter and Intra Prediction)

Combined inter and intra prediction (CIIP) may be applied to a current block. An additional flag (e.g., ciip_flag) may be signaled to indicate whether a CIIP mode is applied to a current CU. For example, when a CU is coded in a merge mode, an additional flag may be signaled to indicate whether the CIIP mode is applied to the current CU when the CU includes at least 64 luma samples (i.e., a product of CU width and CU height is greater than or equal to 64) and both the CU width and CU height are smaller than 128 luma samples.

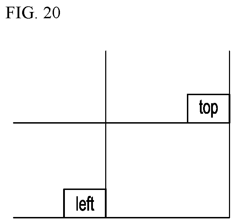

CIIP prediction combines an inter prediction signal and an intra prediction signal. An inter prediction signal (P_{inter}) of the CIIP mode may be derived using the same inter prediction process applied to a regular merge mode, and an intra prediction signal (P_{intra}) may be derived according to a regular intra prediction process of a planar mode. The intra and inter prediction signals may then be combined using a weighted average. FIG. 20 illustrates top-left neighboring blocks used in CIIP weight derivation. Here, a weight value may be calculated according to coding modes of top-left neighboring blocks as follows:

- if a top neighbor is available and intra-coded, isIntraTop is set to 1; otherwise isIntraTop is set to 0
- if a left neighbor is available and intra-coded, isIntraLeft is set to 1; otherwise isIntraLeft is set to 0
- if (isIntraTop + isIntraLeft) = 2, wt is set to 3
- otherwise, if (isIntraTop + isIntraLeft) = 1, wt is set to 2
- otherwise, wt is set to 1

CIIP prediction may be configured according to Equation 4 below.

[Equation 4]

$$P_{\text{CIIP}} = \big((4 - wt) * P_{inter} + wt * P_{intra} + 2\big) \gg 2$$

## GPM including inter and intra prediction

In GPM including inter and intra prediction, final prediction samples may be generated by weighting inter-predicted samples and intra-predicted samples for each GPM-separated region. The inter-predicted samples are derived by inter GPM, whereas the intra-predicted samples may be derived by an intra prediction mode (IPM) candidate list and an index signaled from an encoder. A size of the IPM candidate list may be predefined as 3.

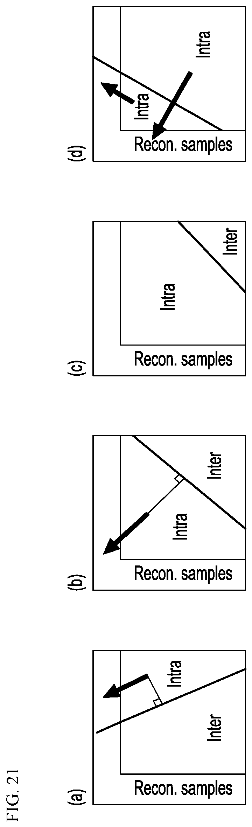

FIG. 21 illustrates available IPM candidates for GPM including inter and intra prediction.

Available IPM candidates may be a parallel angular mode (parallel mode), a perpendicular angular mode (perpendicular mode), and a planar mode with respect to a GPM block boundary as illustrated in (a), (b), and (c) of FIG. 21. Furthermore, as illustrated in (d) of FIG. 21, GPM including inter and intra prediction may be restricted in order to reduce signaling overhead for IPMs and prevent an increase in a size of an intra prediction circuit of a hardware decoder. In addition, direct motion vector and IPM storage for a GPM blending region may be introduced to further improve coding performance.

In IPM derivation based on DIMD and neighboring modes, the parallel mode may be registered first. Accordingly, when there is no identical IPM candidate in a list, a decoder-side intra mode derivation (DIMD) method and/or up to two IPM candidates derived from neighboring blocks may be registered.

In deriving neighboring modes, there are up to five positions for available neighboring blocks, but they may be restricted by a GPM block boundary angle already used in GPM using template matching (GPM-TM).

Table 7 illustrates positions of available neighboring blocks for deriving IPM candidates according to a GPM block boundary angle. A and L may represent a top side and a left side of a prediction block.

[Table 7]

| Angle of GPM | 0 | 2 | 3 | 4 | 5 | 8 | 11 | 12 | 13 | 14 |
|---|---|---|---|---|---|---|---|---|---|---|
| 1st partition | A | A | A | A | L+A | L+A | L+A | L+A | A | A |
| 2nd partition | L+A | L+A | L+A | L | L | L | L | L+A | L+A | L+A |
| Partition angle | 16 | 18 | 19 | 20 | 21 | 24 | 27 | 28 | 29 | 30 |
| 1st partition | A | A | A | A | L+A | L+A | L+A | L+A | A | A |
| 2nd partition | L+A | L+A | L+A | L | L | L | L | L+A | L+A | L+A |

GPM-intra may be combined with GPM-MMVD (GPM with merge with motion vector difference). To further improve coding performance, TIMD may be used for IPM candidates of GPM-intra. A parallel mode may be registered first, and then TIMD, DIMD, and IPM candidates of neighboring blocks may be registered.

## MHP (Multi-Hypothesis Prediction)

In a multi-hypothesis inter prediction mode, one or more additional motion compensated prediction signals are signaled in addition to a conventional bi-prediction signal, and a resulting overall prediction signal may be obtained by sample-wise weighted superposition. By using a bi-prediction signal $p_{bi}$ and a first additional inter prediction signal/hypothesis $h_3$, a resulting prediction signal $p_3$ may be obtained as follows.

$$[\text{Equation 5}]$$
$$p_3 = (1 - \alpha)p_{bi} + \alpha h_3$$

A weighting factor $\alpha$ may be specified by a new syntax element add_hyp_weight_idx according to a mapping shown in Table 8 below.

[Table 8]

| add_hyp_weight_idx | $\alpha$ |
|---|---|
| 0 | 1/4 |
| 1 | -1/8 |

Similarly, one or more additional prediction signals may be used. A resulting overall prediction signal may be iteratively accumulated together with each additional signal according to Equation 6 below.

$$[\text{Equation 6}]$$
$$p_{n+1} = (1 - \alpha_{n+1})p_n + \alpha_{n+1}h_{n+1}$$

A resulting overall prediction signal may be obtained as a final (p_n) (i.e., (p_n) having a largest index (n)). For example, up to two additional prediction signals may be used (i.e., (n) is limited to 2).

Motion parameters of each additional prediction hypothesis may be explicitly signaled by specifying a reference index, a motion vector predictor index, and a motion vector difference, or may be implicitly signaled by specifying a merge index. A separate multi-hypothesis merge flag may distinguish these two signaling modes.

For an inter AMVP mode, MHP may be applied only when a non-equal weight of BCW is selected in a bi-prediction mode.

Combination of MHP and BDOF is possible, but BDOF may be applied only to a bi-directional signal portion of a prediction signal (i.e., two general first hypotheses).

## OBMC (Overlapped Block Motion Compensation)

OBMC may be performed for all motion compensated block boundaries among right and bottom boundaries of a CU. Therefore, it may be applied to both luma and chroma components. To process CU/subblock boundaries in a uniform manner, OBMC may be performed at a subblock level for all MC (Motion Compensation) block boundaries.

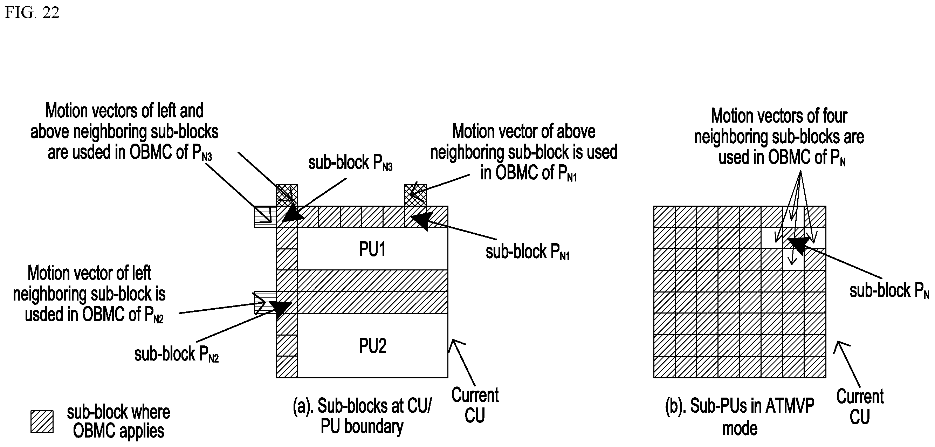

FIG. 22 illustrates subblocks at a CU/PU boundary and sub-PUs of an ATMVP mode. Here, a size of a subblock may be set to $4 \times 4$.

When OBMC is applied to a current subblock, in addition to current motion vectors, four connected neighboring subblocks that are available and different from the current motion vector may also be used to derive a prediction block for the current subblock. Such multiple prediction blocks based on multiple motion vectors may be weighted to generate a final prediction signal of the current subblock.

A prediction block based on a motion vector of a neighboring subblock is denoted as $P_N$ (where N represents an index of neighboring subblocks in upper, lower, left, and right directions), and a prediction block based on motion vectors of the current block is denoted as ($P_C$). When ($P_N$) belongs to the same PU as ($P_C$) (since they include identical motion information), OBMC may not be performed from ($P_N$). Otherwise, all pixels of ($P_N$) may be added to corresponding pixels of ($P_C$). That is, four rows/columns of ($P_N$) may be added to ($P_C$). Weighting factors ({1/4, 1/8, 1/16, 1/32}) may be used for ($P_N$), and weighting factors ({3/4, 7/8, 15/16, 31/32}) may be used for ($P_C$). An exception is small MC blocks in which only two rows/columns of ($P_N$) are added to ($P_C$) (i.e., when a CU size is 8×4 or 4×8, or when the CU is coded in an sbTMVP mode). In this case, weighting factors ({1/4, 1/8}) may be used for ($P_N$), and weighting factors ({3/4, 7/8}) may be used for ($P_C$). For ($P_N$) generated based on a motion vector of a vertically (or horizontally) neighboring subblock, pixels located in a same row (or column) of ($P_N$) may be added to ($P_C$) with the same weighting factor.

### LIC (Local Illumination Compensation)

LIC is an inter prediction technique for modeling a local illumination change between a current block and a prediction block as a variation function between a current block template and a reference block template. Parameters of this function may be represented as a scaling factor ($\alpha$) and an offset ($\beta$) that form a linear equation. That is, illumination variation may be compensated by ($\alpha \cdot p[x] + \beta$), where ($p[x]$) is a reference sample pointed to by an MV at position (x) of a reference picture. When wrap-around motion compensation is enabled, the MV may be clipped considering a wrap-around offset. Since ($\alpha$) and ($\beta$) may be derived based on the current block template and the reference block template, no signaling overhead is required for them except for signaling an LIC flag indicating use of LIC in an AMVP mode.

LIC may be used in inter CUs having the following aspects:

- intra neighboring samples may be used in LIC parameter derivation
- LIC may be disabled for blocks having fewer than 32 luma samples
- for both non-subblock and affine modes, LIC parameter derivation may be performed based on template block samples corresponding to a current CU instead of partial template block samples corresponding to a first top-left 16×16 unit

samples of a reference block template may be generated using a block MV and MC without rounding them to integer-pel resolution (or precision).

For bi-prediction inter CUs, two sets of LIC parameters may be separately derived for L0 and L1 prediction samples. An iterative method may be applied to derive L0 and L1 LIC parameters. Specifically, an L0 LIC parameter may first be derived by minimizing a difference between an L0 template prediction (T_0) and a template (T), and samples of (T) may be updated by subtracting corresponding samples of (T_0). Then, L1 parameters may be calculated to minimize a difference between an L1 template prediction (T_1) and the updated template. Finally, the L0 parameter may be adjusted again in the same manner.

According to the present disclosure, when bi-prediction is applied to a current block, prediction samples may be derived based on a weighted average. Conventionally, a bi-prediction signal (i.e., bi-prediction samples) may be derived by a simple average of an L0 prediction signal (L0 prediction samples) and an L1 prediction signal (L1 prediction samples). That is, the bi-prediction samples were derived as an average of L0 prediction samples based on an L0 reference picture and MVL0 and L1 prediction samples based on an L1 reference picture and MVL1. However, according to the present disclosure, when bi-prediction is applied, a bi-prediction signal (bi-prediction samples) may be derived through a weighted average of an L0 prediction signal and an L1 prediction signal according to Equation 7 below.

$$[\text{Equation } 7]$$
$$P_{\text{bi-pred}} = \left((8 - w) * P_0 + w * P_1 + 4\right) \gg 3$$

In weighted bi-prediction, five weights ($w \in \{-2, 3, 4, 5, 10\}$) may be allowed. For each bi-predicted CU, the weight (w) may be determined by one of the following two methods:

For a non-merge CU, a weight index may be signaled after a motion vector difference.

For a merge CU, a weight index may be inferred from neighboring blocks based on a merge candidate index.

Weighted bi-prediction may be applied only to CUs having 256 or more luma samples (i.e., CU width × CU height is greater than or equal to 256). For low-delay pictures, all five weights may be used, and for non-low-delay pictures, only three weights ($w \in \{3,4,5\}$) may be used.

In an encoder, a fast search algorithm may be applied to find a weight index without significantly increasing encoder complexity. These algorithms may be summarized as follows:

When combined with AMVR, non-equal weights may be conditionally checked for 1-pel and 4-pel motion vector precision when a current picture is a low-delay picture.

When combined with affine, affine ME (Motion Estimation) for non-equal weights may be performed only when an affine mode is selected as a current best mode.

When two reference pictures are the same in bi-prediction, non-equal weights may be conditionally checked.

Depending on a POC distance between a current picture and reference pictures, a coding QP, and a temporal level, non-equal weights may not be searched when certain conditions are satisfied.

A BCW weight index may be coded using one context-coded bin and one bypass-coded bin. A first context-coded bin indicates whether an equal weight is used, and when a non-equal weight is used, additional bins may be signaled through bypass coding to indicate which non-equal weight is used.

Weighted Prediction (WP) is a coding tool for efficiently coding video content when fading exists. WP allows weight parameters (a weight and an offset) to be signaled for each reference picture in each of reference picture lists L0 and L1. During motion compensation, the weight and offset of a corresponding reference picture may be applied.

WP and BCW may be designed for different types of video content. To avoid interaction between WP and BCW that complicates decoder design, when a CU uses WP, a BCW weight index is not signaled and (w) may be inferred as 4 (i.e., an equal weight is applied).

For a merge CU, a weight index may be inferred from neighboring blocks based on a merge candidate index. This method may be applied to both a regular merge mode and an inherited affine merge mode. In a constructed affine merge mode, affine motion information may be constructed based on motion information of up to three blocks. A process of deriving a BCW index of a CU using a constructed affine merge mode is as follows.

A range of BCW indices {0,1,2,3,4} is divided into three groups {0}, {1,2,3}, and {4}. When BCW indices of all control points belong to the same group, a BCW index is derived according to step 2), otherwise the BCW index is set to 2.

When two or more control points have the same BCW index, the BCW index value is assigned to a candidate, otherwise the BCW index of a current constructed candidate is set to 2.

**Bi-Directional Optical Flow (BDOF)**

BDOF (Bi-Directional Optical Flow) may be used to improve a bi-prediction signal. For example, BDOF may be applied at a $4\times4$ subblock level and may be applied to a CU satisfying the following conditions:

- a height of the CU is not 4 and a CU size is not $4\times8$
- the CU is not coded using an affine mode or an ATMVP merge mode
- the CU is coded using a "true" bi-prediction mode (i.e., one of two reference pictures is earlier than a current picture in display order and the other is later than the current picture)

BDOF may be applied only to a luma component, may be applied only to a chroma component, or may be applied to both the luma component and the chroma component.

The BDOF mode is based on an optical flow concept assuming that motion of an object is smooth. For each $4\times4$ subblock, motion refinement $((v\_x, v\_y))$ may be calculated by minimizing a difference between L0 and L1 prediction samples. Then, the motion refinement may be used to adjust bi-prediction sample values of the $4\times4$ subblock. The following steps may be applied to the BDOF process.

First, horizontal and vertical gradients of two prediction samples $\frac{\partial I^{(k)}}{\partial x}(i,j)$ and $\frac{\partial I^{(k)}}{\partial y}(i,j)$ $((\mathrm{k}=0,1))$ may be obtained by directly calculating differences between two neighboring samples according to Equation 8 and Equation 9 below.

[Equation 8]
$$\frac{\partial I^{(k)}}{\partial x}(i,j) = \left(I^{(k)}(i+1,j) - I^{(k)}(i-1,j)\right) \gg 4$$

[Equation 9]
$$\frac{\partial I^{(k)}}{\partial y}(i,j) = \left(I^{(k)}(i,j+1) - I^{(k)}(i,j-1)\right) \gg 4$$

Here, $I^{(k)}(i,j)$ represents a sample value at coordinates (i,j) of a prediction signal in list k (k=0,1), and shift1 may be calculated as shift1 = max(6, bitDepth - 6) based on a luma bit depth bitDepth. In addition, auto- and cross-correlation of gradients, $S_1$, $S_2$, $S_3$, $S_5$, and $S_6$, may be calculated according to Equation 10 below.

[Equation 10]
$$S_1 = \sum_{(i,j)\in\Omega} \psi_x(i,j) \cdot \psi_x(i,j), \qquad S_3 = \sum_{(i,j)\in\Omega} \theta(i,j) \cdot \psi_x(i,j)$$
$$S_2 = \sum_{(i,j)\in\Omega} \psi_x(i,j) \cdot \psi_y(i,j)$$
$$S_5 = \sum_{(i,j)\in\Omega} \psi_y(i,j) \cdot \psi_y(i,j) \qquad S_6 = \sum_{(i,j)\in\Omega} \theta(i,j) \cdot \psi_y(i,j)$$

Here, $\psi_x(i,j)\,\psi_x(i,j)$, $\psi_y(i,j)$, $\theta(i,j)$ may be calculated according to Equation 11 below.

[Equation 11]

$$\psi_x(i,j) = \left(\frac{\partial I^{(1)}}{\partial x}(i,j) + \frac{\partial I^{(0)}}{\partial x}(i,j)\right) \gg n_a$$

$$\psi_y(i,j) = \left(\frac{\partial I^{(1)}}{\partial y}(i,j) + \frac{\partial I^{(0)}}{\partial y}(i,j)\right) \gg n_a$$

$$\theta(i,j) = \left(I^{(1)}(i,j) \gg n_b\right) - \left(I^{(0)}(i,j) \gg n_b\right)$$

$\Omega$ represents a 6×6 window around a 4×4 subblock.

Motion refinement $(v_x, v_y)$ may be derived using Equation 12 below.

[Equation 12]

$$v_x = S_1 > 0?\, clip3\left(-th'_{BIO}, th'_{BIO}, -\left((S_3 \cdot 2^{n_b-n_a})\right.\right.$$

$$\left.\left. \gg \lfloor\log_2 S_1\rfloor\right)\right):0$$

$$v_y = S_5 > 0?\, clip3\left(-th'_{BIO}, th'_{BIO}, -\left(\left(S_6 \cdot 2^{n_b-n_a}\right.\right.\right.$$

$$\left.\left.\left. -\left((v_xS_{2,m}) \ll n_{S_2} + v_xS_{2,s}\right)/2\right) \gg \lfloor\log_2 S_5\rfloor\right)\right):0$$

Here, $S_{2,m} = S_2 \gg n_{S_2}$, $S_{2,s} = S_2\&(2^{n_{S_2}}-1)$, $th'_{BIO} = 2^{13-BD}$ and, $\lfloor\cdot\rfloor$ is a floor function.

Based on the motion refinement and the gradients, an adjustment according to Equation 13 below may be calculated for each sample of the 4×4 subblock.

[Equation 13]

$$b(x,y) = rnd\left(\left(\left(v_x\left(\frac{\partial I^{(1)}(x,y)}{\partial x} - \frac{\partial I^{(0)}(x,y)}{\partial x}\right)\right)\right)\Big/2\right)$$

$$+ rnd\left(\left(\left(v_y\left(\frac{\partial I^{(1)}(x,y)}{\partial y} - \frac{\partial I^{(0)}(x,y)}{\partial y}\right)\right)\right)\Big/2\right)$$

Finally, BDOF samples of the CU may be calculated by adjusting bi-prediction samples according to Equation 14 below.

[Equation 14]

$$pred_{BDOF}(x,y) = \left(I^{(0)}(x,y) + I^{(1)}(x,y) + b(x,y) + o_{offset}\right) \gg shift$$

Above, values of na, nb, and ns2 are 3, 6, and 12, respectively. These values are selected so that a multiplier does not exceed 15 bits in a BDOF process, and a maximum bit width of intermediate parameters of the BDOF process is maintained within 32 bits.

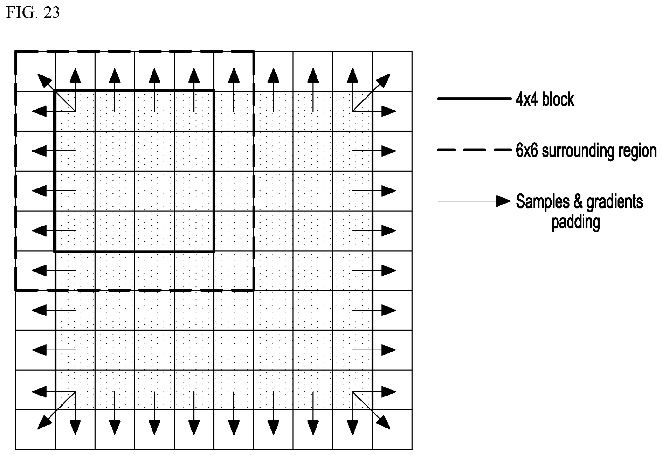

To derive gradient values, prediction samples $I^{(k)}(i,j)$ of list k (k=0,1) outside a boundary of a current CU should be generated. FIG. 23 illustrates an extended CU region used in BDOF. Referring to FIG. 23, BDOF uses one extended row/column around a boundary of the CU. To control computational complexity of generating prediction samples outside the boundary, a bilinear filter is used to generate prediction samples in the extended region, while a normal 8-tap motion compensation interpolation filter is used to generate prediction samples within the CU. These extended sample values are used only for gradient calculation. For remaining steps of the BDOF process, when any sample and gradient value outside the CU boundary is required, they are padded (i.e., repeated) from their nearest neighbors.

When a width and/or a height of a CU is greater than 16 luma samples, the CU may be divided into subblocks having a width and/or height equal to 16 luma samples, and boundaries of the subblocks may be treated as CU boundaries in the BDOF process. A maximum unit size for the BDOF process is limited to $16 \times 16$.

When BCW is allowed for a current block, that is, when a BCW weight index indicates a non-equal weight, BDOF is not allowed. Similarly, when WP is allowed for the current block, that is, when luma_weight_lx_flag is equal to 1 for one of two reference pictures, BDOF is also not allowed. BDOF is also not allowed when a CU is coded in a symmetric MVD mode.

Hereinafter, a multi-hypothesis prediction (MHP) mode will be described in detail. As described above, the multi-hypothesis prediction mode represents a method using an additional prediction block (or predictor) in addition to a regular prediction block. The multi-hypothesis prediction mode may be selectively used as one of various inter prediction modes described above. The multi-hypothesis prediction mode according to embodiments of the present disclosure is not limited to this name. In this specification, the multi-hypothesis prediction mode may also be referred to as a multi-reference mode, multi-reference prediction, multi-reference prediction mode, multi-prediction block mode, MHP mode, multi-hypothesis inter prediction mode, inter-inter combined prediction mode, combined inter prediction mode, combined prediction mode, multi-inter prediction mode, multi-prediction mode, additional reference prediction mode, additional reference mode, or multi-prediction block.

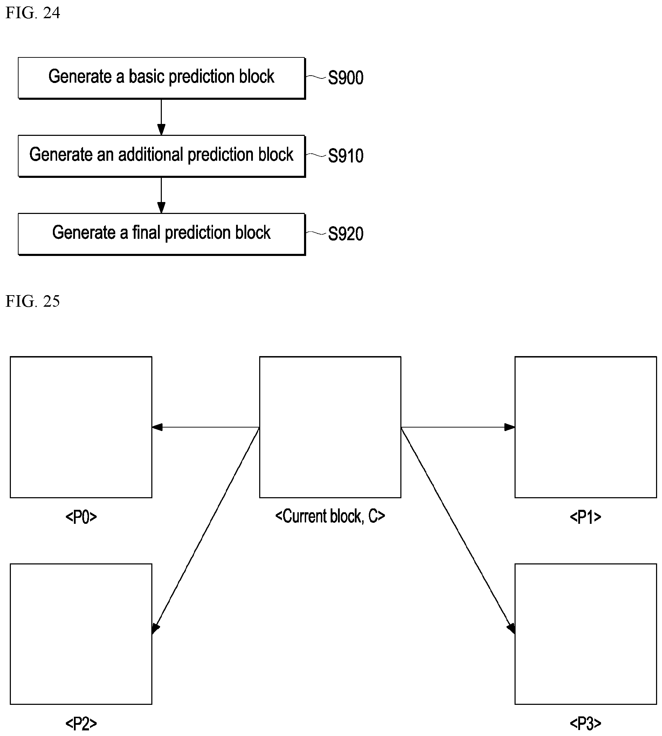

FIG. 24 illustrates an example of a method in which prediction is performed by a decoding apparatus according to an embodiment of the present disclosure, and FIG. 25 illustrates examples of prediction blocks used in a multi-prediction block mode according to an embodiment of the present disclosure. In this example, prediction is described as being performed by a decoding apparatus (300), but the same prediction may also be performed by an encoding apparatus (200).

Referring to FIG. 24, a decoding apparatus may perform inter prediction to generate a regular prediction block (S900). When an additional prediction block is generated in addition to a prediction block generated by uni-directional prediction or bi-directional prediction in general inter prediction, the mode may correspond to a multi-prediction block mode. When the multi-prediction block mode is applied, additional motion information and weight information may be signaled or derived in addition to motion information of each direction in an inter prediction process. For example, the decoding apparatus may generate (or derive) an additional prediction block in addition to a prediction block generated (or derived) by uni-directional prediction or bi-directional prediction, and may combine them with each other.

To distinguish from an additional prediction block, a prediction block generated (or derived) by uni-directional prediction or bi-directional prediction supported in general inter prediction will be referred to as a regular prediction block, and a prediction block additionally generated (or derived) according to a multi-prediction block mode will be referred to as an additional prediction block.

In addition, in the present disclosure, to distinguish prediction blocks generated (or derived) by regular inter prediction and prediction blocks generated (or derived) by additional prediction from a final prediction block, they may also be referred to as reference blocks, and the terms prediction block and reference block may be used interchangeably. In embodiments described later, they are mainly referred to as regular prediction blocks and additional prediction blocks, but any block falling within the scope of the regular prediction block or the additional prediction block defined and described in the present disclosure should be regarded as corresponding to the regular prediction block or the additional prediction block of the present disclosure even when it is referred to by another term such as a reference block. That is, regardless of a name, any block generated by a method described in the present disclosure and used according to the description of the present disclosure may fall within the scope of a prediction block or a reference block of the present disclosure.

In addition, in the present disclosure, a multi-prediction block or a multi-reference block may refer to an additional prediction block, and in some cases may be used to include both an additional prediction block and a regular prediction block.

In addition, deriving and generating a reference block or a prediction block may be used with the same meaning in the present disclosure. That is, describing that a reference block or a prediction block is derived may mean that the reference block or the prediction block is generated, and describing that a reference block or a prediction block is generated may mean that the reference block or the prediction block is derived.

As an example, the regular prediction block may include an L0 prediction block and/or an L1 prediction block. As described above, the regular prediction block may also be referred to as a regular reference block, and may also be referred to as an initial prediction block, an initial reference block, a temporary prediction block, a temporary reference block, a reference prediction block, a base prediction block, or a base reference block.

In addition, as an example, the regular prediction block may mean an L0 prediction block or an L1 prediction block, or may mean a block obtained by weighting and combining the L0 and L1 prediction blocks.

As a specific example, the decoding apparatus may derive a first regular prediction block and a second regular prediction block of the current block by performing bi-prediction, and may weight and combine the first regular prediction block and the second regular prediction block for combination with an additional prediction block. Alternatively, the decoding apparatus may generate a regular prediction block of the current block by performing uni-directional prediction. That is, the regular prediction block may mean each of a plurality of prediction blocks generated through bi-prediction, may mean a result obtained by weighting and combining these prediction blocks, or may mean a prediction block generated through uni-directional prediction.

In one embodiment, weights may be used to weight and combine the L0 and L1 prediction blocks. Here, the weights may collectively refer to BCW (Bi-prediction with CU-based Weights) and CW (CU-based Weights). The weights may be derived from a weight candidate list. The weight candidate list may include a plurality of weight candidates and may be predefined in an encoding apparatus and a decoding apparatus.

A weight candidate may be a weight set indicating weights applied to respective bi-prediction blocks (i.e., a first weight and a second weight), or may be a weight applied to a prediction block of one direction among the bi-prediction directions. When only a weight applied to one direction of a prediction block is derived from the weight candidate list, a weight applied to the prediction block of the other direction may be derived based on the weight derived from the weight candidate list. For example, the weight applied to the prediction block of the other direction may be derived by subtracting the weight derived from the weight candidate list from a predetermined value.

In one embodiment, a weight index indicating a weight used for weighted prediction of the current block may be derived from the weight candidate list. In the present disclosure, the weight index may be referred to as bcw_idx or a BCW index. The weight index may be derived by the decoding apparatus or may be signaled by the encoding apparatus. When derived by the decoding apparatus, the weight index may be derived as a weight index of a specific merge candidate in a merge candidate list. As an example, the specific merge candidate may be specified in the merge candidate list by a merge index.

The decoding apparatus may generate an additional prediction block based on a multi-prediction block mode (S910) and may generate a final prediction block by combining the regular prediction block and the additional prediction block (S920).

In one embodiment, when the multi-prediction block mode is applied, the decoding apparatus may derive additional prediction blocks up to a predefined number and may combine the derived additional prediction blocks with the regular prediction block. In other words, the decoding apparatus may combine additional prediction blocks of a number equal to or less than a predefined number with the regular prediction block. As an example of a method of combining the regular prediction block and the additional prediction block, a weighted sum may be applied. As an example, the predefined number may be 2. Alternatively, the predefined number may be one of 1, 2, 3, or 4. Here, the predefined number may be referred to as a maximum number of the multi-prediction block mode. The number of additional prediction blocks described above is merely an example applicable to the present disclosure, and various numbers of additional prediction blocks may also be applied to the multi-prediction block mode according to the present disclosure.

As illustrated in the example of FIG. 25, bi-prediction may be applied as regular prediction so that a first regular prediction block (P0) and a second regular prediction block (P1) are generated, and two additional prediction blocks (P2, P3) may be generated. In this example, two prediction blocks are illustrated as being generated for each prediction direction, but the number of prediction blocks for each prediction direction may vary.

When a plurality of additional prediction blocks (P2, P3) are combined, the plurality of additional prediction blocks (P2, P3) may be sequentially weighted and summed with the regular prediction block (P'). For example, when up to two additional prediction blocks are generated, a prediction block may be generated by weighting and summing the regular prediction block and a first additional prediction block (P2), and a final prediction block (P) may be generated by weighting and summing the generated prediction block and a second additional prediction block (P3). The prediction block generated by weighting and summing the regular prediction block and the first additional prediction block (P2) may be referred to as an intermediate prediction block. This process may be represented by Equation 15 below.

[Equation 15]
$$\text{Step 1: } P' = (P0 + P1) / 2$$
$$\text{Step 2: } P'' = w0 * P2 + (1\text{-}w0) * P'$$
$$\text{Step 3: } P = w1 * P3 + (1\text{-}w1) * P''$$

Here, w0 represents a weight of a first additional prediction block, and w1 represents a weight of a second additional prediction block. In addition, P' represents a regular prediction block obtained by weighting and combining a first regular prediction block and a second regular prediction block, and P" may represent an intermediate prediction block. In this example, the same weight (0.5) is assigned to the first regular prediction block (P0) and the second regular prediction block (P1), but different weights may also be assigned. In the present disclosure, the regular prediction block may represent a weighted sum of the first regular prediction block and the second regular prediction block, may represent one of the first regular prediction block and the second regular prediction block, or may represent both the first regular prediction block and the second regular prediction block. When uni-directional prediction is performed to generate the regular prediction block, the regular prediction block may represent a single prediction block generated by the uni-directional prediction.

Alternatively, when a plurality of additional prediction blocks are combined, the regular prediction block and the plurality of additional prediction blocks may be weighted and summed collectively. That is, after the plurality of additional prediction blocks are generated, weights may be applied to the plurality of additional prediction blocks and the regular prediction block (or the first regular prediction block and the second regular prediction block), respectively, and they may be weighted and summed collectively.

Meanwhile, although not illustrated in FIG. 24, as described above, in order for the decoding apparatus (300) to perform decoding, the decoding apparatus may receive a bitstream from the encoding apparatus (200) and may obtain image information from the received bitstream. Accordingly, to generate the regular prediction block (S900), information on a regular prediction mode may be obtained from the bitstream, and to generate the additional prediction block (S910), information on an additional prediction mode may be obtained from the bitstream. In addition, to generate the final prediction block (S920), weight information applied to the regular prediction block and the additional prediction block may be obtained from the bitstream.

In addition, the decoding apparatus (300) may determine whether a multi-prediction block mode is applied. In this case, a step of determining whether the multi-prediction block mode is applied may be added before step S910. Whether the multi-prediction block mode is applied may be explicitly signaled and transmitted, or may be implicitly derived (or determined) by the decoding apparatus.

As an example, whether the multi-prediction block mode is applied may be signaled and encoded by the encoding apparatus and transmitted to the decoding apparatus. Specifically, information indicating whether the multi-prediction block mode is applied (hereinafter referred to as multi-prediction block mode information), for example, a multi-prediction block mode flag, may be signaled by the encoding apparatus and transmitted to the decoding apparatus. In this case, a condition for signaling/parsing the multi-prediction block mode flag may be predefined. A signaling/parsing condition of the multi-prediction block mode flag may be an allowance condition of the multi-prediction block mode. When the signaling/parsing condition of the multi-prediction block mode flag is satisfied, the decoding apparatus may parse the multi-prediction block mode flag from the bitstream.

Alternatively, in another example, whether the multi-prediction block mode is applied may be derived by the decoding apparatus based on predefined coding information. As an example, whether the multi-prediction block mode is applied may be defined in the same manner as a multi-prediction block mode allowance condition (or a signaling/parsing condition) described later.

For example, the multi-prediction block mode information may be represented by a syntax element such as mhp_flag, and whether the multi-prediction block mode is applied, that is, whether an additional prediction block exists, may be signaled/derived through a value of mhp_flag. When a value of mhp _flag is 0, it may indicate that the multi-prediction block mode is not applied or that an additional prediction block does not exist, and when a value of mhp_flag is 1, it may indicate that the multi-prediction block mode is applied or that an additional prediction block exists.

For example, when a maximum number (MaxNum) of additional prediction blocks is 2, a value of mhp_flag may indicate the existence of additional prediction blocks in a manner as shown in Table 9 below.

[Table 9]

| Mhp_flag | 1st additional block | 2nd additional block |
|----------|---------------------|----------------------|
| '0' | X(not exist) | X(not exist) |
| '1', '0' | O(exist) | X(not exist) |
| '1', '1' | O(exist) | O(exist) |

When a multi-prediction block mode is applied to a current block, a decoding apparatus may obtain information on an additional prediction mode (hereinafter referred to as additional prediction mode information) to generate an additional prediction block. As an example, the additional prediction mode information may include prediction information and/or weight information. Based on the prediction information, an additional prediction block according to the multi-prediction block mode may be generated, and based on the weight information, the additional prediction block may be combined with a regular prediction block (or an intermediate prediction block).

Specifically, the prediction information may include information indicating a prediction mode applied to generation of the additional prediction block (hereinafter referred to as prediction mode information), information indicating a detailed prediction mode required to generate the additional prediction block according to the prediction mode (hereinafter referred to as detailed prediction mode information), and various other information required to generate the additional prediction block by applying the prediction mode and the detailed prediction mode. The weight information may represent a weight used to combine the additional prediction block with the regular prediction block.

In a conventional multi-prediction block mode, a prediction mode applied to generation of an additional prediction block is limited to an inter prediction mode. In the present disclosure, encoding/decoding efficiency may be improved by including intra prediction and/or IBC prediction in the prediction mode applied to generation of the additional prediction block.

For example, the additional prediction mode may include at least one of an inter mode, an intra mode, or an IBC mode. In addition, the inter mode may include a merge mode and an MVP mode (or an AMVP mode). The prediction mode information may include information indicating whether the additional prediction mode is the inter mode, the intra mode, or the IBC mode. In addition, the prediction mode information may include information indicating whether the additional prediction mode is the merge mode or the MVP mode among the inter modes.

For example, the prediction mode information may be represented by a syntax element indicating whether one of the additional prediction modes described above is applied. As an example, the prediction mode information may include a merge flag indicating whether the merge mode is applied as the additional prediction mode, or an intra flag indicating whether the intra mode is applied. Alternatively, a predefined prediction mode may be used to generate the additional prediction block. Alternatively, the additional prediction mode may be selected based on predefined coding information.

For example, when a merge mode is used to generate the additional prediction block, the prediction information may include a merge index. The merge index may indicate a specific merge candidate in a merge candidate list. When an AMVP mode is used to derive the additional prediction block, the prediction information may include a motion vector predictor index, a reference index, and motion vector difference information. The motion vector predictor index may indicate a specific candidate in a motion vector predictor candidate list.

As described above, the additional prediction mode information may include weight information. The weight information may represent a weight used when the additional prediction block is combined with the regular prediction block. When there are a plurality of additional prediction blocks, weight information for each of the plurality of additional prediction blocks may be included in the prediction information. As an example, the weight information may be indicated by a weight index.

An additional prediction mode used to derive the additional prediction block and a regular prediction mode used to derive the regular prediction block may be distinguished from each other. For example, an MVP candidate list for generating the regular prediction block and an MVP candidate list for generating the additional prediction block may be configured independently. In addition, a merge candidate list for generating the regular prediction block and a merge candidate list for generating the additional prediction block may also be configured independently. However, depending on an embodiment, the same candidate list may be used while indices indicating different candidates are used, or one candidate list may be derived from another candidate list.

In addition, information for the regular prediction block and information for the multi-prediction block may be distinguished from each other. For example, when a value of a multi-prediction block mode flag (mhp_flag) indicating whether the multi-prediction block mode is applied is 1, a merge flag indicating whether a merge mode or an inter mode is used for generation of the additional prediction block may be represented as mhp_mrg or mhp_mrg_flag. That is, a syntax element representing information on the additional prediction mode and a syntax element representing information on the regular prediction mode may be distinguished from each other.

The syntax names described in the present disclosure are merely examples, and the names may all be changed. Even when names different from the syntax names described in the present disclosure are used, if a syntax includes or represents information described in the present disclosure, the syntax falls within the scope of the syntax of the present disclosure.

In embodiments described later, for convenience of description, an inter mode used as the additional prediction mode may be referred to as MHP-INTER, an MHP-inter mode, an MHP-inter prediction mode, or MHP-inter prediction, and an intra mode used as the additional prediction mode may be referred to as MHP-INTRA, an MHP-intra mode, an MHP-intra prediction mode, or MHP-intra prediction. In addition, an IBC mode used as the additional prediction mode may be referred to as MHP-IBC, an MHP-IBC mode, an MHP-IBC prediction mode, or MHP-IBC prediction. In addition, a merge mode used as the additional prediction mode may be referred to as an MHP-merge mode, and an AMVP mode used as the additional prediction mode may be referred to as an MHP-AMVP mode.

In addition, among the prediction mode information described above, information indicating whether the MHP-inter prediction mode is applied may be referred to as MHP-inter information, and as an example, the MHP-inter information may include an MHP-inter flag (mhp_inter_flag).

In addition, information indicating whether the MHP-intra prediction mode is applied may be referred to as MHP-intra information, and as an example, the MHP-intra information may include an MHP-intra flag (mhp_intra_flag).

In addition, information indicating whether the MHP-merge mode is applied may be referred to as MHP-merge information, and as an example, the MHP-merge information may include an MHP-merge flag (mhp_mrg_flag or mhp_mrg).

Meanwhile, in embodiments according to the present disclosure, signaling information or a signal may correspond to generating the information or the signal, or may include generating the information or the signal. Signaling information or a signal may be performed by an encoding apparatus, and the encoding apparatus may encode the signaled or generated information or signal. Alternatively, signaling information or a signal may be used with the same meaning as encoding, or may be used to include both generating and encoding the information or signal.

In addition, in embodiments according to the present disclosure, parsing information or a signal may correspond to obtaining the information or the signal from a bitstream, or may include obtaining the information or the signal. Parsing information or a signal may be performed by a decoding apparatus, and the decoding apparatus may parse the information or the signal and may reconstruct a block or a picture based on the parsed information or signal.

## Embodiment 1

According to one embodiment, when a multi-prediction block mode is applied, MHP-intra information indicating whether an intra prediction mode is applied to generation of an additional prediction block may be signaled/parsed. In embodiments described later, a case in which an MHP-intra flag (mhp_intra_flag) is used as the MHP-intra information will be described as an example.

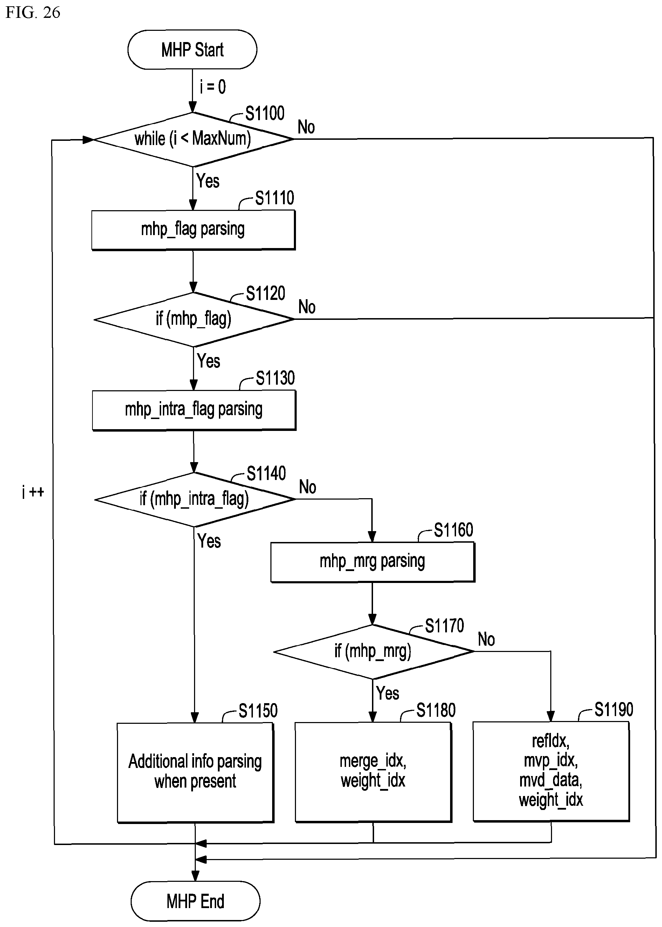

FIG. 26 is a flowchart illustrating an operation of obtaining additional prediction mode information in a decoding method performed by a decoding apparatus according to one embodiment.

A decoding apparatus (300) may receive a bitstream generated by an encoding apparatus (200), and may obtain additional prediction mode information from the received bitstream. As described above, the additional prediction mode information may include prediction information and weight information, and the prediction information may include information regarding a prediction mode used for generation of an additional prediction block (prediction mode information) and motion information.

Referring to FIG. 26, when a maximum number of additional prediction blocks that may be generated is MaxNum, the decoding apparatus may perform a multi-prediction block mode by repeating all or part of the process illustrated in FIG. 26 MaxNum times. That is, a loop may be performed up to the maximum number of additional prediction blocks (until a result of S1100 becomes No).

The decoding apparatus may parse a multi-prediction block mode flag (mhp_flag) from the bitstream (S1110). The multi-prediction block mode flag (mhp_flag) may indicate whether an additional prediction block exists. For example, when a value of the multi-prediction block mode flag (mhp_flag) is 1, it may indicate that an additional prediction block exists. When a value of the multi-prediction block mode flag (mhp_flag) is not 1, for example, when it is 0, it may indicate that an additional prediction block does not exist.

When a value of the multi-prediction block mode flag (mhp_flag) is 1 (Yes in S1120), MHP-intra information indicating whether intra prediction is used for generation of an additional prediction block is parsed (S1130). In this embodiment, before determining whether a merge mode or AMVP is applied to generation of the additional prediction block, whether intra prediction is applied may be first determined. As an example, the MHP-intra information may include an MHP-intra flag (mhp_intra_flag). When a value of the MHP-intra flag (mhp_intra_flag) is 1, it may indicate that intra prediction is applied to generation of the additional prediction block. When a value of the MHP-intra flag (mhp_intra_flag) is not 1, for example, when it is 0, it may indicate that intra prediction is not applied to generation of the additional prediction block.

When a value of the MHP-intra flag (mhp_intra_flag) is 1 (Yes in S1140), additional information used for intra prediction may be parsed (S1150). A detailed description thereof will be given later.

When a value of the MHP-intra flag (mhp_intra_flag) is not 1 (No in S1140), MHP-merge information indicating whether a merge mode is used for generation of the additional prediction block is parsed (S1160). Alternatively, the MHP-merge information may include an MHP-merge flag such as mhp_mrg or mhp_mrg_flag. When a value of the MHP-merge flag is 1, it may indicate that a merge mode is applied to generation of the additional prediction block. When a value of the MHP-merge flag is not 1, for example, when it is 0, it may indicate that a merge mode is not applied to generation of the additional prediction block.

When a value of the MHP-merge flag (mhp_mrg) is 1 (Yes in S1170), additional information used for the merge mode, for example, a merge index (merge_idx) and weight information (weight_idx), may be parsed and obtained (S1180).

When a value of the MHP-merge flag is not 1 (No in S1170), additional information used for AMVP may be parsed and obtained (S1190). As a specific example, a reference index (refldx), a motion vector predictor index (mvp_idx), motion vector difference information (mvd_data), and weight information (weight_idx) may be parsed and obtained.

Although the decoding method has been described in FIG. 26, operations having the same gist may also be applied to an encoding method performed by an encoding apparatus. The encoding apparatus (200) may generate and encode information regarding a multi-prediction block mode. The encoded information regarding the multi-prediction block mode may be output in a form of a bitstream and transmitted to the decoding apparatus (300).

Specifically, the encoding apparatus (200) may generate information indicating whether a multi-prediction block mode is applied to a current block, and may generate information regarding a regular prediction mode used to generate a regular prediction block and information regarding an additional prediction mode used to generate an additional prediction block, based on that the multi-prediction block mode is applied. The generated information may be encoded and output in a form of a bitstream.

For example, information indicating whether an additional prediction block exists (e.g., a multi-prediction block mode flag (mhp _flag)), MHP-intra information indicating whether intra prediction is used for generation of the additional prediction block (e.g., mhp_intra_flag), and information indicating whether a merge mode is used for generation of the additional prediction block (e.g., mhp_mrg or mhp_mrg_flag) may be generated or signaled and encoded.

In addition, when intra prediction is used for generation of the additional prediction block, additional information required for the intra prediction may be generated or signaled and encoded.

In addition, when a merge mode is used for generation of the additional prediction block, additional information required for application of the merge mode (e.g., a merge index, etc.) may be generated or signaled and encoded.

In addition, when an inter prediction mode, for example, an AMVP mode, is used for generation of the additional prediction block, additional information required for application of the AMVP mode (e.g., a reference index, a motion vector predictor index, motion vector difference information, etc.) may be generated or signaled and encoded.

In addition, weight information used to combine the additional prediction block with the regular prediction block or to combine a plurality of additional prediction blocks with each other may be generated or signaled and encoded.

As in this embodiment, combining an inter mode that finds a block most similar to a current block in a reference picture and an intra mode derived from neighboring samples of the current block not only increases compression efficiency but also has an effect of removing discontinuity between the current block and adjacent samples.

Meanwhile, in signaling/parsing MHP-intra information indicating whether intra prediction is applied to generation of an additional prediction block, it is also possible to signal/parse the corresponding information only when a predetermined condition is satisfied. Accordingly, signaling/parsing overhead may be reduced, and complexity in the encoding apparatus and the decoding apparatus may also be reduced. Hereinafter, related contents will be described in detail.

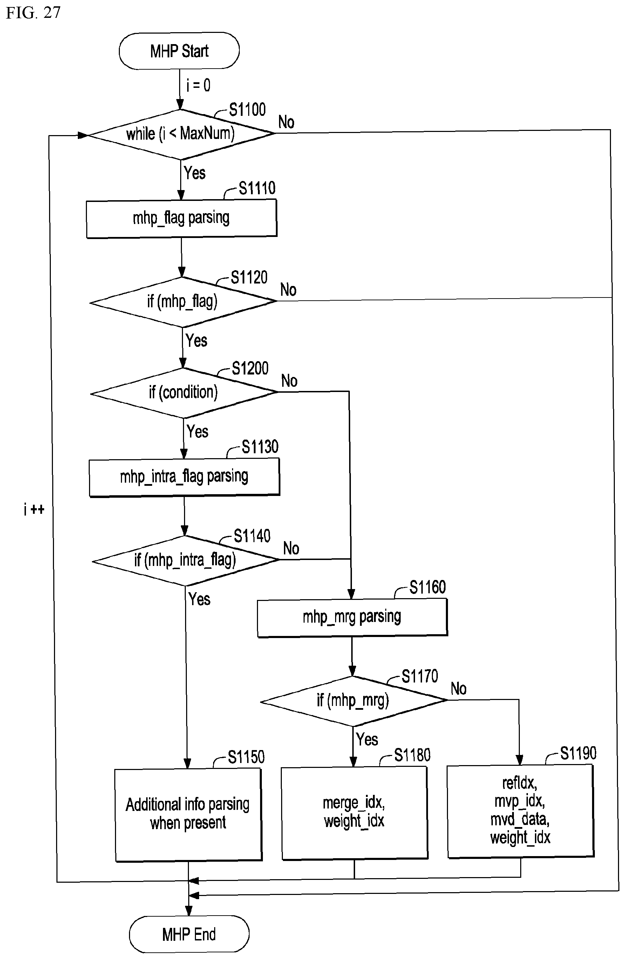

FIG. 27 is a flowchart illustrating another example of an operation of obtaining additional prediction mode information in a decoding method performed by a decoding apparatus according to one embodiment.

Referring to FIG. 27, when a value of the multi-prediction block mode flag (mhp_flag) is 1 (Yes in S1120), the decoding apparatus (300) may determine whether a predetermined condition is satisfied (S1200). When the predetermined condition is satisfied (Yes in S1200), the decoding apparatus may determine whether MHP-intra prediction is applied by parsing the MHP-intra flag according to the above description, and may perform the remaining operations (S1130 to S1190).

When the predetermined condition is not satisfied (No in S1200), the decoding apparatus may determine whether an MHP-merge mode is applied by parsing MHP-merge information without determining whether MHP-intra prediction is applied (S1160).

Hereinafter, the predetermined condition for determining whether to signal/parse the MHP-intra information will be described in detail.

The predetermined condition may relate to a regular prediction mode of the current block. The predetermined condition may be satisfied when the regular prediction mode does not include a specific prediction mode. As an example, MHP-intra prediction may not be applied when the regular prediction mode is at least one of an AMVP mode, a CIIP mode, or a GPM mode. In other words, when the regular prediction mode is at least one of the above-described modes, the predetermined condition is not satisfied, and MHP-intra information may not be signaled/parsed. That is, in this case, intra prediction may not be used for generation or derivation of the additional prediction block.

The predetermined condition may relate to whether refine is applied to the current block. Here, the refine applied to the current block may mean a tool or technique such as DMVR that refines motion information or BDOF that refines sample values in a block. As an example, MHP-intra prediction may not be applied when refine is applied based on a technique such as DMVR or BDOF to the current block. In other words, when refine is applied to the current block, the predetermined condition is not satisfied, and MHP-intra information may not be signaled/parsed. That is, in this case, intra prediction may not be used for generation or derivation of the additional prediction block.

The predetermined condition may relate to a size of a block. For example, the condition may be determined according to a size of the block or an aspect ratio of the block. Specifically, when a size (width x height) of the block is smaller than a predetermined size, the predetermined condition is satisfied and MHP-intra prediction may be allowed. As an example, MHP-intra prediction may be allowed when the size of the block is smaller than 1024. In other words, when a size of the current block is smaller than the predetermined size, MHP-intra information may be signaled/parsed, and when the size is equal to or greater than the predetermined size, MHP-intra information may not be signaled/parsed.

The predetermined condition may relate to a quantization parameter (QP). For example, when the quantization parameter is smaller than a threshold value, the predetermined condition is satisfied and MHP-intra prediction may be allowed. As an example, the threshold value may be set to a value greater than 32, and MHP-intra prediction may be allowed when the quantization parameter is 32. In other words, when the quantization parameter is smaller than the threshold value, MHP-intra information may be signaled/parsed, and when it is equal to or greater than the threshold value, MHP-intra information may not be signaled/parsed.

The predetermined condition may relate to a temporal layer. For example, MHP-intra prediction may be allowed when a temporal layer index is smaller than a threshold value. As an example, the threshold value may be set to a value greater than 4, and MHP-intra prediction may be allowed when the temporal layer index is 4. In other words, when the temporal layer index is smaller than the threshold value, MHP-intra information may be signaled/parsed, and when it is equal to or greater than the threshold value, MHP-intra information may not be signaled/parsed.

The above-described conditions are merely examples applicable to one embodiment, and other conditions may also be applied in addition thereto. In addition, one of the above-described conditions may be applied, or two or more conditions may be applied together.

Although the decoding method has been described in FIG. 27, operations having the same gist may also be applied to an encoding method performed by the encoding apparatus (200). Therefore, in addition to the operation or the encoding method of the encoding apparatus (200) described above with reference to FIG. 26, the encoding apparatus may signal MHP-intra information when the above-described condition is satisfied.

When decoding or encoding according to the above description, prediction modes used for generation of the additional prediction block may have combinations as described in Table 10 below. The combinations below are derived on the assumption that MaxNum is 2 and 3, respectively. In the following, "INTRA" is used as a term indicating MHP-intra prediction, and "INTER" is used as a term indicating one of MHP-inter prediction and an MHP-merge mode.

[Table 10]

| MaxNum == 2 | MaxNum == 3 |
|---|---|
| {No data}, **{INTRA},** {INTER}, **{INTRA, INTRA} {INTRA,** INTER}, {INTER, **INTRA},** {INTER, INTER}, | {No data}, **{INTRA}**, {INTER}, **{INTRA, INTRA} {INTRA,** INTER}, {INTER, **INTRA},** {INTER, INTER}, **{INTRA,** INTER, INTER}, {INTER, **INTRA,** INTER}, {INTER, INTER, **INTRA}, {INTRA, INTRA,** INTER}, **{INTRA,** INTER, **INTRA},** {INTER, **INTRA, INTRA}, {INTRA, INTRA, INTRA},** {INTER, INTER, INTER}, |

According to one embodiment, the number of additional prediction blocks generated by intra prediction may be included as a condition for determining whether to signal/parse MHP-intra information. As an example, it may be allowed that only one additional prediction block is generated by intra prediction. In embodiments described later, for convenience of description, an additional prediction block to which intra prediction is applied will be referred to as an intra additional prediction block, an MHP-intra block, or an MHP-intra prediction block.

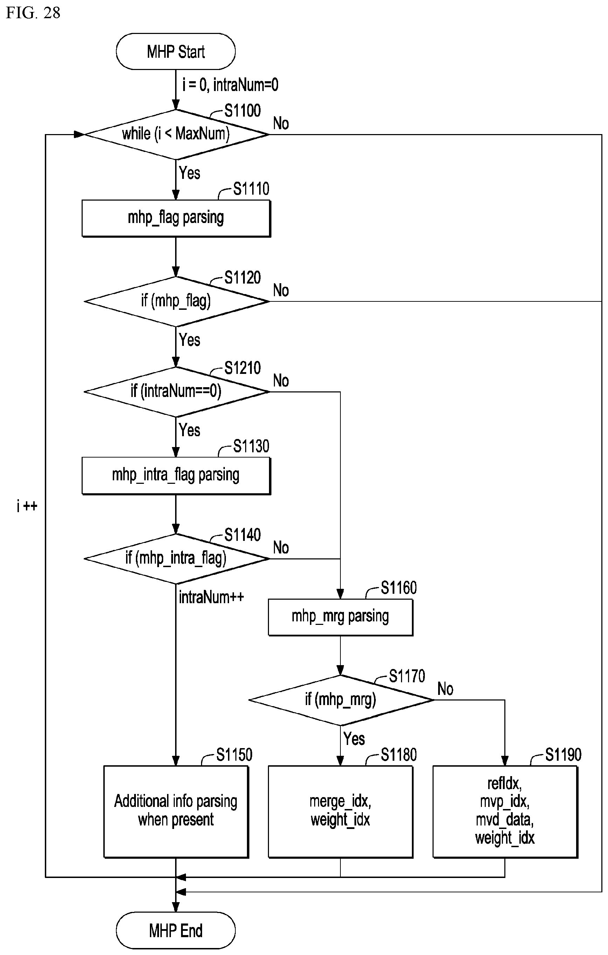

FIG. 28 is a flowchart illustrating another example of an operation of obtaining additional prediction mode information in a decoding method performed by a decoding apparatus according to one embodiment. In the example of FIG. 28, the number of intra additional prediction blocks may be determined as a condition for determining whether to signal/parse the MHP-intra information.

Referring to FIG. 28, as an example of determining the predetermined condition (S1200) described above, the number of intra additional prediction blocks may be determined (S1210), and as an example, the number of intra additional prediction blocks may be limited to one. Accordingly, when the number of currently generated intra additional prediction blocks is 0 (Yes in S1210), the predetermined condition is satisfied, and the decoding apparatus may parse MHP-intra information to determine whether MHP-intra prediction is applied and may perform the remaining operations (S1130 to S1190).

When the number of currently generated intra additional prediction blocks is not 0 (No in S1210), that is, when one intra additional prediction block has already been generated, the decoding apparatus may determine whether an MHP-merge mode is applied by parsing MHP-merge information without determining whether MHP-intra prediction is applied (S1160), and may perform the remaining operations (S1170 to S1190).

Although the decoding method has been described in FIG. 28, operations having the same gist may also be applied to an encoding method performed by the encoding apparatus (200). Therefore, in the operation or encoding method of the encoding apparatus (200) described above with reference to FIG. 26 and FIG. 27, the number of intra additional prediction blocks may be determined as the predetermined condition, and MHP-intra information may be generated or signaled only until the number of intra additional prediction blocks is smaller than a predetermined number.

Referring again to Table 10 above, when MaxNum is 2 and the combination is {INTER, INTER}, the MHP-intra flag is signaled/parsed twice even though an intra mode is not applied to generation of the additional prediction blocks. In addition, when MaxNum is 3 and the combination is {INTER, INTER, INTER}, the MHP-intra flag is signaled/parsed three times even though an intra mode is not applied to generation of the additional prediction blocks.

However, when the number of intra additional prediction blocks is limited to one, signaling/parsing overhead may be reduced and efficient encoding/decoding may be achieved. In this case, prediction modes used to generate additional prediction blocks may have combinations as described in Table 11 below.

[Table 11]

| MaxNum == 2 | MaxNum == 3 |
|---|---|
| {No data},<br>**{INTRA}**,<br>{INTER}, | {No data},<br>**{INTRA}**,<br>{INTER}, |
| {**INTRA**, INTER},<br>{INTER, **INTRA**},<br>{INTER, INTER}, | {**INTRA**, INTER},<br>{INTER, **INTRA**},<br>{INTER, INTER},<br>{**INTRA,** INTER, INTER},<br>{INTER, **INTRA,** INTER},<br>{INTER, INTER, **INTRA**}, |
|  | {INTER, INTER, INTER}, |

In the above example, since only one intra additional prediction block is allowed, combinations including two or more "INTRA" are not allowed. When Table 11 is compared with Table 10 described above, when MaxNum is 2, the combination {INTRA, INTRA} does not occur. In addition, when MaxNum is 3, the combinations {INTRA, INTRA}, {INTRA, INTRA, INTER}, {INTRA, INTER, INTRA}, {INTER, INTRA, INTRA}, and {INTRA, INTRA, INTRA} do not occur.

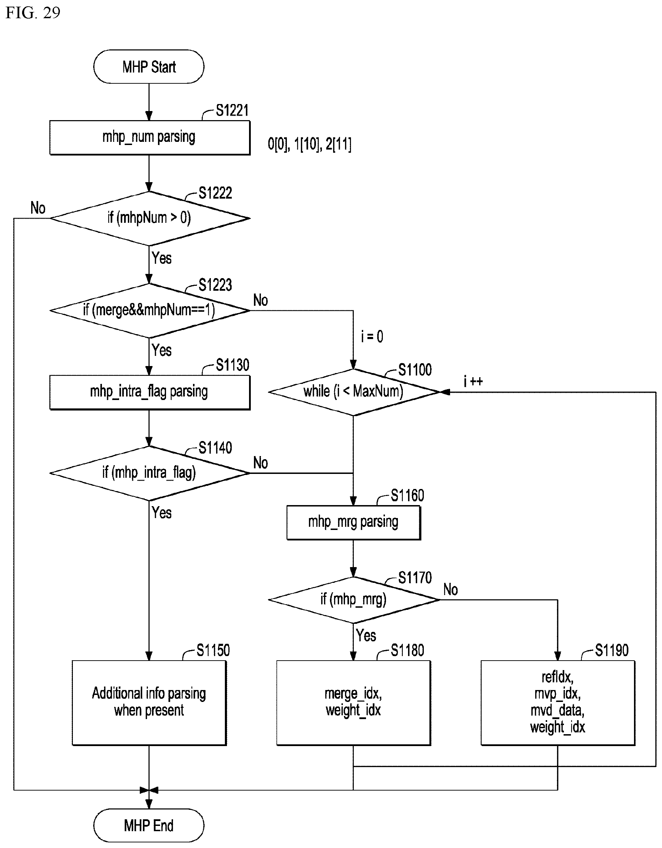

FIG. 29 is a flowchart illustrating another example of an operation of obtaining multi-prediction block mode information in a decoding method performed by a decoding apparatus according to one embodiment. In the example of FIG. 29, the number of additional prediction blocks determined in advance may be determined as a condition for determining whether to signal/parse the MHP-intra information.

Referring to FIG. 29, information indicating the number of additional prediction blocks may be parsed (S1221). For this purpose, the encoding apparatus (200) may signal the number of additional prediction blocks applied to the current block and transmit the information to the decoding apparatus (300). As an example, information indicating the number of additional prediction blocks may be signaled using a syntax such as mhp_num. When a value of mhp_num is '0', it may indicate that there is no additional prediction block, when it is '10', it may indicate that one additional prediction block may exist, and when it is '11', it may indicate that two additional prediction blocks may exist. This binarization method is merely an example of a method for signaling information indicating the number of additional prediction blocks. In addition, information indicating the number of additional prediction blocks may be signaled using various methods such as a fixed length code, truncated rice, truncated binary, exponential-Golomb, etc., and when the number of allowable additional prediction blocks increases, the meaning of mhp_num may be extended and applied.

As an example, MHP-intra information may be parsed only when the number of additional prediction blocks is one. Accordingly, when the number of additional prediction blocks is greater than 0 (Yes in S1222), whether the number of additional prediction blocks is 1 is determined (S1223). In the flowchart of FIG. 29, the case is limited to when a merge mode is applied to the current block, but this is merely an example, and other conditions among the various conditions described above may also be applied.

When the number of additional prediction blocks is 1 (Yes in S1223), the MHP-intra flag may be parsed (S1130). When the number of additional prediction blocks is not 1, that is, when it is greater than 1 (No in S1223), the MHP-merge flag may be parsed (S1160). Operations performed after parsing each flag are the same as described above.

Although the decoding method has been described in FIG. 29, operations having the same gist may also be applied to an encoding method performed by the encoding apparatus (200). Therefore, in the operation or encoding method of the encoding apparatus (200) described above with reference to FIG. 26 and FIG. 28, the number of additional prediction blocks applied to the current block may be signaled. The method for signaling the number of additional prediction blocks is the same as described above in relation to the decoding method of FIG. 29.

In addition, the encoding method may signal MHP-intra information only when the number of additional prediction blocks is a specific number. As an example, the MHP-intra flag may be signaled only when the number of additional prediction blocks is one.

Referring again to Table 11 above, when a first additional prediction block is not an intra additional prediction block, MHP-intra information is signaled/parsed until an intra additional prediction block occurs. In particular, in combinations {INTER, INTER} and {INTER, INTER, INTER}, the MHP-intra information is signaled/parsed two times and three times, respectively, even though an intra additional prediction block does not exist.

However, when MHP-intra prediction is allowed only when the number of additional prediction blocks is a specific number (e.g., one), signaling/parsing overhead may be reduced and efficient encoding/decoding may be achieved. In this case, prediction modes used for generation of additional prediction blocks may have combinations as described in Table 12 below.

[Table 12]

| MaxNum == 2 | MaxNum == 3 |
|---|---|
| {No data}, {**INTRA**}, {INTER}, | {No data}, {**INTRA**}, {INTER}, |
| {INTER, INTER}, | {INTER, INTER}, |
| | {INTER, INTER, INTER}, |

In the above example, since MHP-intra prediction is allowed only when the number of additional prediction blocks is one, only the combination {INTRA} including "INTRA" is possible.

In the embodiments described above, MHP-intra information is signaled/parsed prior to MHP-merge information, but it is also possible to change the order in consideration of applicability of prediction modes. For example, it is possible to determine whether the MHP-merge mode is applied first. That is, MHP-merge information may be signaled/parsed prior to MHP-intra information.

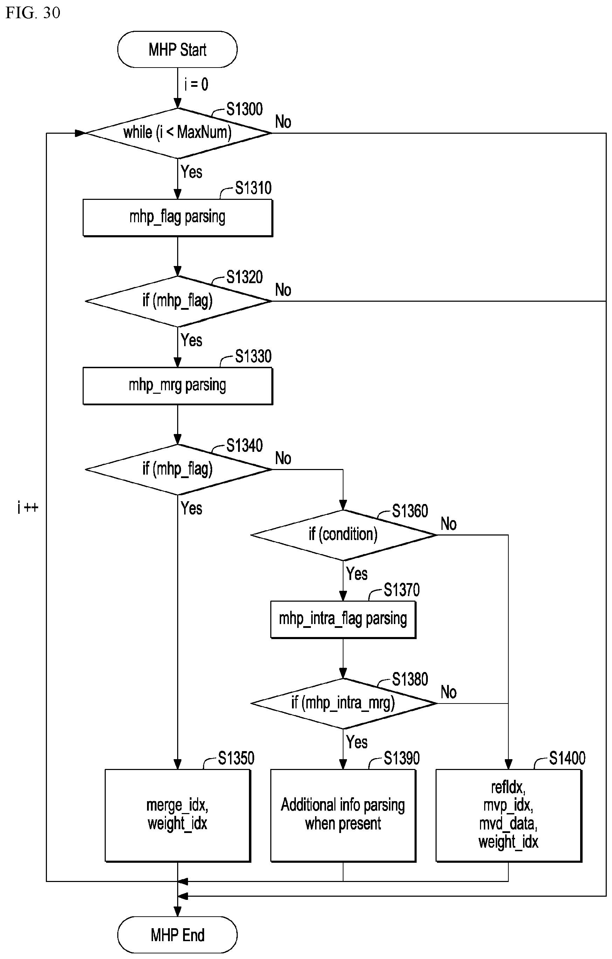

FIG. 30 is a flowchart illustrating another example of an operation of obtaining multi-prediction block mode information in a decoding method performed by a decoding apparatus according to one embodiment. In the example of FIG. 30, MHP-merge information is parsed prior to MHP-intra information.

Referring to FIG. 30, an operation of determining a current iteration count to perform a loop for MaxNum times (S1300), parsing a multi-prediction block mode flag (S1310), and determining its value (S1320) are the same as described above.

When a value of the multi-prediction block mode flag (mhp_flag) is 1 (Yes in S1320), MHP-merge information is first parsed before MHP-intra information (S1330). When a value of an MHP-merge flag (mhp_mrg), which is an example of the MHP-merge information, is 1, it indicates that a merge mode is used for generation of the additional prediction block, and when the value of the MHP-merge flag (mhp_mrg) is 0, it indicates that a merge mode is not used for generation of the additional prediction block.

When the MHP-merge information indicates that the MHP-merge mode is applied, that is, when a value of the MHP-merge flag (mhp_mrg) is 1 (Yes in S1340), information required to apply the MHP-merge mode, for example, a merge index (merge _idx) and weight information (weight_idx), may be parsed (S1350).

When the MHP-merge information indicates that the MHP-merge mode is not applied, that is, when a value of the MHP-merge flag (mhp_mrg) is 0 (No in S1340), MHP-intra information, for example an MHP-intra flag (mhp_intra_flag), may be parsed (S1370). In this case, depending on an embodiment, whether a predetermined condition is satisfied may first be determined (S1360), and when the predetermined condition is satisfied (Yes in S1360), the MHP-intra information may be parsed. A description of the predetermined condition has been given above.

When the MHP-intra information indicates that the MHP-intra mode is applied, that is, when a value of the MHP-intra flag (mhp_intra_flag) is 1 (Yes in S1380), additional information required to apply the MHP-intra mode is parsed (S1390).

When the MHP-intra information indicates that the MHP-intra mode is not applied, that is, when a value of the MHP-intra flag (mhp_intra_flag) is 0 (No in S1380), it is determined that MHP-AMVP is applied, and information required to apply MHP-AMVP, for example a reference index (refIdx), a motion vector predictor index (mvp_idx), motion vector difference information (mvd_data), and a weight index (weight_idx), may be parsed (S1400).

Although the decoding method has been described in FIG. 30, operations having the same gist may also be applied to an encoding method performed by an encoding apparatus. The encoding apparatus (200) may generate and encode information indicating whether an additional prediction block exists (e.g., a multi-prediction block mode flag (mhp_flag)), and when an additional prediction block exists, MHP-merge information may be generated and encoded. When the MHP-merge mode is applied, additional information required to apply the MHP-merge mode (e.g., a merge index, a weight index, etc.) may be generated and encoded.

When the MHP-merge mode is not applied, MHP-intra information may be generated and encoded according to whether a predetermined condition is satisfied, and when the MHP-intra mode is applied, additional information required to apply the MHP-intra mode may be generated and encoded. When the MHP-intra mode is not applied, additional information required to apply an MHP-inter mode (e.g., a reference index, a motion vector predictor index, motion vector difference information, etc.) may be generated and encoded.

Assuming that the applicability of the MHP-merge mode is higher, when MHP-merge information is signaled/-parsed prior to MHP-intra information as in the example described above, unnecessary signaling/parsing may be reduced, signaling/parsing overhead may be reduced, and efficient encoding/decoding may be implemented.

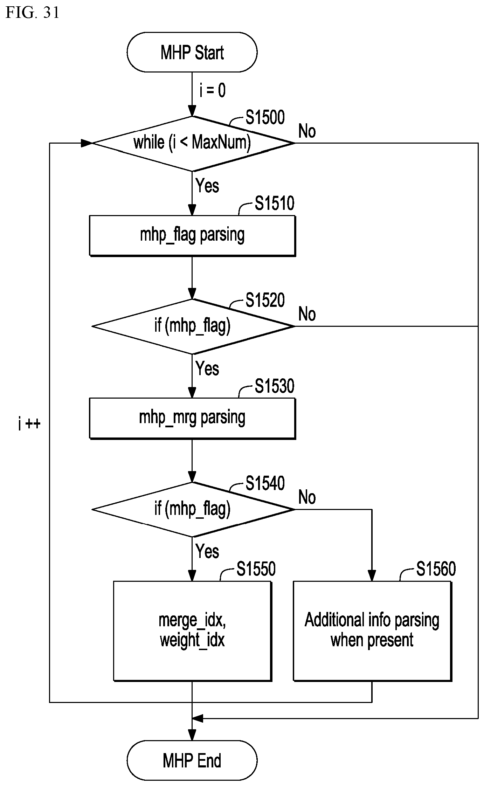

FIG. 31 is a flowchart illustrating another example of an operation of obtaining multi-prediction block mode information in a decoding method performed by a decoding apparatus according to one embodiment. In this example, whether the MHP-merge mode or the MHP-intra mode is applied may be distinguished using MHP-merge information without separately signaling/parsing MHP-intra information.

Referring to FIG. 31, determining a current iteration count to perform a loop for MaxNum times (S1500), parsing a multi-prediction block mode flag (S1510), and determining its value (S1520) are the same as described above.

When a value of the multi-prediction block mode flag is 1 (Yes in S1520), MHP-merge information, for example an MHP-merge flag (mhp_mrg), is parsed (S1530). In this example, when a value of the MHP-merge flag is 1, it indicates that a merge mode is applied for generation of the additional prediction block, and when the value of the MHP-merge flag is 0, it indicates that an intra mode is applied for generation of the additional prediction block.

Accordingly, when a value of the MHP-merge flag (mhp_mrg) is 1 (Yes in S1540), additional information required to apply the MHP-merge mode (e.g., a merge index, a weight index, etc.) may be parsed (S1550).

When a value of the MHP-merge flag (mhp_mrg) is 0 (No in S1540), it corresponds to a case in which the MHP-intra mode is applied. Accordingly, additional information required to apply the MHP-intra mode may be parsed (S1560).

Meanwhile, according to another example, whether the MHP-merge mode is applied may be determined only when a predetermined condition is satisfied. In this case, at least one of the predetermined conditions described above with reference to FIG. 27 may be applied, and when the corresponding condition is satisfied, the MHP-merge information may be parsed.

In addition, it is also possible to parse additional information required to apply the MHP-intra mode only when the predetermined condition is satisfied. In this case, when a value of the MHP-merge flag is 0 but the predetermined condition is not satisfied, an additional prediction block may not be generated.

Although the decoding method has been described in FIG. 31, operations having the same gist may also be applied to an encoding method performed by the encoding apparatus. The encoding apparatus (200) may generate and encode information indicating whether an additional prediction block exists (e.g., a multi-prediction block mode flag (mhp_flag)), and when an additional prediction block exists, MHP-merge information may be generated and encoded. When the MHP-merge mode is applied, additional information required to apply the MHP-merge mode (e.g., a merge index, a weight index, etc.) may be generated and encoded. When the MHP-merge mode is not applied, additional information required to apply the MHP-intra mode may be generated and encoded.

In addition, as described above, MHP-merge information may be generated and encoded only when a predetermined condition is satisfied. In this case, at least one of the predetermined conditions described above with reference to FIG. 27 may be applied, and when the corresponding condition is satisfied, the MHP-merge information may be generated and encoded.

In addition, additional information required to apply the MHP-intra mode may also be generated and encoded only when the predetermined condition is satisfied. In this case, when a value of the MHP-merge flag is 0 but the predetermined condition is not satisfied, an additional prediction block may not be generated.

According to this example, since whether the MHP-intra mode is applied may be determined using MHP-merge information without separately signaling/parsing MHP-intra information, signaling/parsing overhead may be reduced and efficient encoding/decoding may be implemented.

Meanwhile, the embodiments described above may also be applied in the same manner to an MHP-IBC prediction mode. Accordingly, an additional prediction mode for generating an additional prediction block may include at least one of an MHP-intra prediction mode or an MHP-IBC prediction mode, and information regarding the MHP-IBC prediction mode may also be signaled/parsed in the same manner as described above.

### Embodiment 2

According to this embodiment, in the multi-prediction block mode, in addition to signaling of related information as described above, it is also possible that the information is inherited or derived from neighboring blocks. Hereinafter, embodiments related thereto will be described in detail.

The merge mode is a mode in which motion information of a neighboring block, whether adjacent or non-adjacent, is directly borrowed without signaling motion information. Borrowing motion information from a neighboring block may be expressed as inheriting, transferring, or deriving. However, the scope of the disclosed embodiments is not limited by terminology, and even when referred to by a term other than inheriting, transferring, or deriving, the embodiment may fall within the scope of the present embodiment as long as it corresponds to the operation, function, or meaning described in the present embodiment.

According to one embodiment, when a multi-prediction block mode is applied to an adjacent or non-adjacent neighboring block of a current block, it is possible to derive information regarding the multi-prediction block mode in the same or similar manner as other information. Here, the information regarding the multi-prediction block mode may include information indicating whether the multi-prediction block mode is applied (multi-prediction block mode information), information regarding a regular prediction mode, information regarding an additional prediction mode, and the like.

Specifically, when the merge mode is applied to the current block, information regarding prediction may be derived from neighboring blocks. The information regarding prediction may include motion information of the neighboring blocks. When the multi-prediction block mode is applied to a neighboring block used for obtaining the motion information, the information regarding prediction may include information regarding the multi-prediction block mode of the neighboring block. In this case, the information regarding the multi-prediction block mode of the neighboring block may be inherited and used to generate an additional prediction block of the current block. That is, the multi-prediction block mode may also be applied to the current block. Here, the neighboring block may include both adjacent blocks and non-adjacent blocks and may include temporal neighboring blocks and spatial neighboring blocks.

In this embodiment, whether the inheritance method described herein is applied may be signaled or derived in units of a picture parameter set (PPS), a sequence parameter set (SPS), a picture header (PH), a slice header (SH), a coding tree unit (CTU), or a coding unit (CU). A flag used to determine whether the inherited multi-prediction block mode is applied may be distinguished from a flag used to determine whether the multi-prediction block mode is signaled (mhp_flag), and when a value of the corresponding flag is 1, the inheritance method described below may be applied. In addition, even when a value of the corresponding flag is 1, when a predetermined condition is not satisfied, the inheritance method described below may not be applied. In addition, even when the corresponding flag does not exist, when the predetermined condition is not satisfied, the inheritance method described below may not be applied.

In addition, both signaling and derivation methods may be applied to obtain information regarding the multi-prediction block mode. For example, when N additional prediction blocks are included and M additional prediction blocks obtained through derivation (or inheritance) exist ($M \leq N$), information regarding N-M additional prediction blocks may be obtained through signaling.

Conditions for determining whether inheritance of the multi-prediction block is applied may be defined as follows:

- When DMVR is applied to a block, inheritance of the multi-prediction block may not be applied. In addition, whether inheritance is applied may vary according to the prediction mode of the multi-prediction block. For example, the MHP-intra mode may not be subject to inheritance.
- When BDOF is applied to a block, inheritance of the multi-prediction block may not be applied. In addition, whether inheritance is applied may vary according to the prediction mode of the multi-prediction block. For example, the MHP-intra mode may not be subject to inheritance.
- When LIC is applied to a block, inheritance of the multi-prediction block may not be applied. In addition, whether inheritance is applied may vary according to the prediction mode of the multi-prediction block. For example, the MHP-intra mode may not be subject to inheritance.
- When OBMC is applied to a block, inheritance of the multi-prediction block may not be applied. In addition, whether inheritance is applied may vary according to the prediction mode of the multi-prediction block. For example, the MHP-intra mode may not be subject to inheritance.
- When CIIP, GPM, or GPM-INTRA is applied to a block, inheritance of the multi-prediction block may not be applied. In addition, whether inheritance is applied may vary according to the prediction mode of the multi-prediction block. For example, the MHP-intra mode may not be subject to inheritance.

The multi-prediction block mode is a method capable of improving encoding/decoding quality and efficiency by combining various modes or types of methods for prediction of the current block. When the multi-prediction block is selectively inherited by applying the conditions according to the example described above, inheritance may not be allowed in cases where the combining effect by inheritance is absent or small, thereby reducing decoder complexity and enabling efficient decoding.

In addition, when an intra mode is included in the multi-prediction block mode applied to a neighboring block, that is, when an intra additional prediction block is included in the multi-prediction block of the neighboring block, whether the intra mode (MHP-intra mode) or the intra additional prediction block is inherited may be determined according to predetermined conditions as follows:

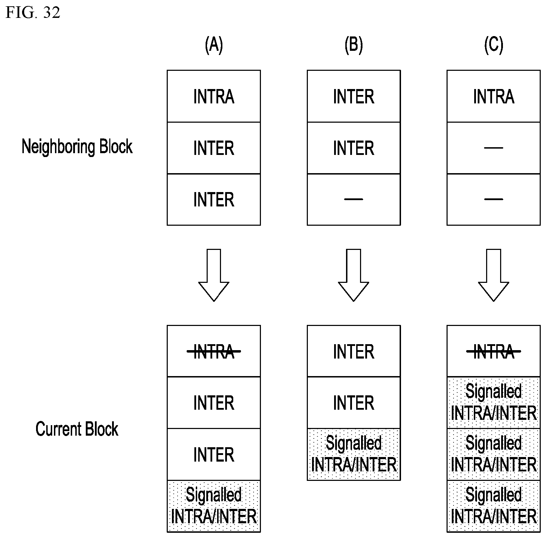

The MHP-intra mode applied to the neighboring block may not be inherited. Specifically, when a neighboring block included in a merge candidate list is coded/decoded by applying the multi-prediction block mode and the MHP-intra mode is applied, the MHP-intra mode may be excluded and the remaining modes may be inherited in the process of deriving motion information of the current block. FIG. 32 illustrates an example in which the MHP-intra mode is excluded and inherited from a neighboring block to which the multi-prediction block mode is applied. Since all prediction modes illustrated in FIG. 32 are used for additional prediction blocks, even when indicated as INTRA and INTER, they may actually refer to MHP-intra and MHP-inter. FIG. 32(A) illustrates a case in which a neighboring block coded/decoded using three additional prediction blocks exists and an intra mode, an inter mode, and an inter mode are used to generate the three additional prediction blocks. In this case, when inheriting the multi-prediction block mode of the neighboring block, the intra mode may be excluded and the remaining modes may be inherited. When three additional prediction blocks are allowed for the current block, information regarding a prediction mode applied to the remaining additional prediction block may be obtained through signaling. In this case, the prediction mode obtained through signaling may be either an intra mode or an inter mode, and the signaling method described above may be applied. FIG. 32(B) illustrates a case in which a neighboring block coded/decoded using two additional prediction blocks exists and inter modes are used to generate the two additional prediction blocks. In this case, the two inter modes may both be inherited. When three additional prediction blocks are allowed for the current block, information regarding a prediction mode applied to the remaining additional prediction block may be obtained through signaling. In this case, the prediction mode obtained through signaling may be either an intra mode or an inter mode, and the signaling method described above may be applied. FIG. 32(C) illustrates a case in which a neighboring block coded/decoded using one additional prediction block exists and an intra mode is used to generate the additional prediction block. In this case, the intra mode is not inherited from the neighboring block, and when three additional prediction blocks are allowed for the current block, information regarding prediction modes applied to the three additional prediction blocks may all be obtained through signaling. In this case, the prediction mode obtained through signaling may be either an intra mode or an inter mode, and the signaling method described above may be applied. That is, according to the example of FIG. 32, application of an intra mode for generation of an additional prediction block is possible only through signaling and not through inheritance.

It is also possible to inherit without distinguishing between intra modes and inter modes. Since this method always performs inheritance without determining conditions during the inheritance process, it is efficient in terms of computational complexity. In addition, since intra modes may be applied to a plurality of additional prediction blocks, it may operate effectively in sequences where compression efficiency can be improved through weighted combination of multiple intra prediction blocks.

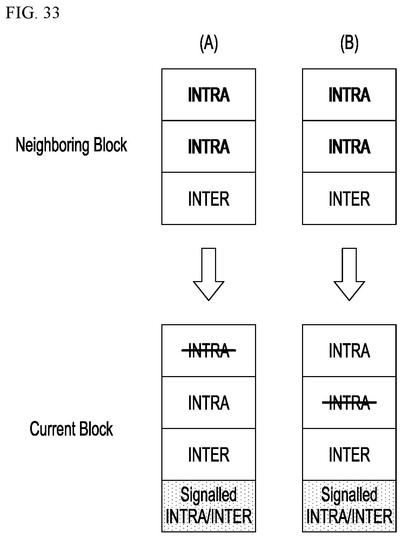

The number of inherited intra modes may be limited. Since an intra mode obtained through signaling and an intra mode obtained through inheritance may both exist, there may be cases in which one or more intra modes exist among intra modes applied to additional prediction blocks. In this case, it is possible to limit the number of inherited intra modes. FIG. 33 illustrates an example in which the number of intra modes inherited from a neighboring block to which the multi-prediction block mode is applied is limited to one. FIG. 33(A) illustrates a case in which a neighboring block coded/decoded using three additional prediction blocks exists and an intra mode, an intra mode, and an inter mode are used to generate the three additional prediction blocks. In this case, when inheriting the multi-prediction block mode information of the neighboring block, the remaining intra mode and the inter mode may be inherited except for the first intra mode. When three additional prediction blocks are allowed for the current block, information regarding a prediction mode applied to the remaining additional prediction block may be obtained through signaling. For example, the prediction mode obtained through signaling may be either an intra mode or an inter mode, and the signaling method described above may be applied. FIG. 33(B) also illustrates a case in which a neighboring block coded/decoded using three additional prediction blocks exists and an intra mode, an intra mode, and an inter mode are used to generate the three additional prediction blocks. As another example, when inheriting the multi-prediction block mode information of the neighboring block, the remaining intra mode and the inter mode may be inherited except for the last intra mode. FIG. 33 is merely an example applicable to one embodiment. The number and order of intra modes allowed for inheritance may be modified differently from the examples described above.

Meanwhile, it is also possible to limit information related to the multi-prediction block mode inherited from neighboring blocks to information distinguishing intra modes, inter modes, and merge modes applied to additional prediction blocks. Information related to the multi-prediction block mode may include motion information, weight information, and other additional information in addition to prediction mode information, but when a large amount of information is stored, it directly affects an increase in capacity of internal memory, and therefore it is possible to modify the method by limiting stored information.

For example, storage of information regarding the MHP-intra mode may be limited. That is, prediction mode information used to distinguish the MHP-intra mode may be included in inherited information, but information regarding a specific detailed prediction mode may not be included in the inherited information. In this case, a preset default mode may be used as the detailed prediction mode or a detailed prediction mode derived from neighboring blocks may be used. In addition, when weight information is not included in the inherited information, a default weight value may be used or weight information derived from neighboring blocks may be used. In addition, even when additional information regarding the MHP-intra mode exists, it may not be included in the inherited information, and a default value may be used or the information may be derived from neighboring blocks.

As another example, storage of information regarding the MHP-inter mode and the MHP-merge mode may be limited. That is, prediction mode information used to distinguish the MHP-inter mode and the MHP-merge mode and motion information may be included in the inherited information, but weight information may not be included in the inherited information. In this case, a preset default weight value may be used or weight information derived from neighboring blocks may be used. In addition, even when additional information exists for the MHP-inter mode and the MHP-merge mode, it may not be included in the inherited information, and a default value may be used or the information may be derived from neighboring blocks.

Meanwhile, the embodiments described above may also be applied in the same manner to the MHP-IBC prediction mode. Accordingly, an additional prediction mode for generating an additional prediction block may include at least one of the MHP-intra prediction mode or the MHP-IBC prediction mode, and whether inheritance of the MHP-IBC prediction mode is applied may also be determined in the same manner as described above.

### Embodiment 3

According to an embodiment of the present disclosure, when an intra mode is included in an additional prediction mode, it is also possible to derive related information at a decoder side without signaling the related information.

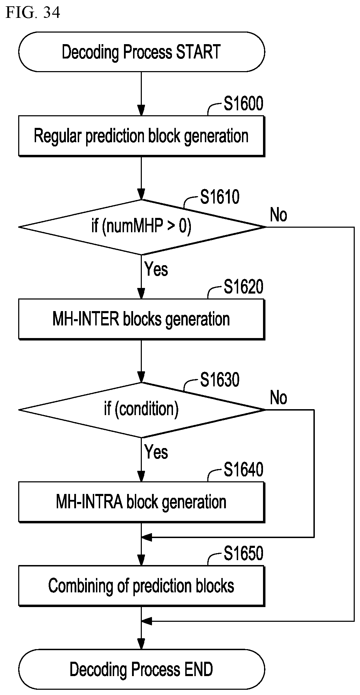

FIG. 34 is a flowchart illustrating an example in which information on an MHP-intra mode is derived at a decoder side in a decoding method performed by a decoding apparatus according to an embodiment.

Here, numMHP may represent the number of additional prediction blocks that are signaled or inherited. In this example, since information on the MHP-intra mode is not signaled or inherited, numMHP may represent the sum of the MHP-inter mode and the MHP-merge mode. In other words, numMHP may represent the sum of the number of additional prediction blocks to which the MHP-inter mode is applied and the number of additional prediction blocks to which the MHP-merge mode is applied.

Also, it is possible to limit numMHP to the number of additional prediction blocks that are signaled.

Referring to FIG. 34, in a decoding process, a regular prediction block may be generated (S1600), and when numMHP is greater than 0 (Yes in S1610), inter additional prediction blocks (MHP-inter blocks) may be generated by the corresponding number (S1620).

When a predetermined condition is satisfied (Yes in S1630), an intra additional prediction block (MHP-intra block) may be generated by applying the MHP-intra mode (S1640). Then, a final prediction block may be generated by combining the regular prediction block, the inter additional prediction blocks generated through signaling and inheritance, and the intra additional prediction block generated through a derivation method according to an embodiment according to a predetermined rule (S1650). As an example, the final prediction block may be generated by weighted-summing the regular prediction block and the additional prediction block.

It is possible to extend and apply the above-described method to the MHP-IBC mode or the MHP-inter mode as well. When numMHP is greater than 0, an additional prediction block may be generated according to the MHP-IBC mode or the MHP-intra mode, and when a predetermined condition is satisfied, the MHP-inter mode and the MHP-IBC mode may be derived. If the definition is changed such that numMHP means the number of MHP-inter modes, a derived mode may be one or more of the three modes according to a predefined allowable number for each mode. The same method may also be applied when numMHP means the number of MHP-intra modes or MHP-IBC modes.

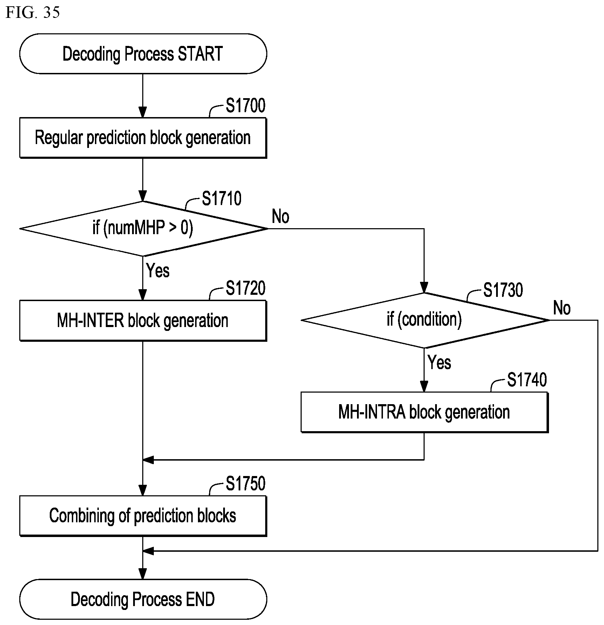

FIG. 35 is a flowchart illustrating another example in which information on an MHP-intra mode is derived at a decoder side in a decoding method performed by a decoding apparatus according to an embodiment.

Referring to FIG. 35, in a decoding process, a regular prediction block may be generated (S1700), and when numMHP is greater than 0 (Yes in S1710), inter additional prediction blocks (MHP-inter blocks) may be generated by the corresponding number (S1720). numMHP may represent the number of additional prediction blocks that are signaled or inherited. In this example, since information on the MHP-intra mode is not signaled or inherited, numMHP may represent the sum of the MHP-inter mode and the MHP-merge mode. Also, it is possible to limit numMHP to the number of additional prediction blocks that are signaled.

When no additional prediction block exists, that is, when numMHP is 0 (No in S1710), if a predetermined condition is satisfied (Yes in S1730), an intra additional prediction block (MHP-intra block) may be generated (S1740). In other words, even when no additional prediction block that is signaled or inherited exists for the current block, an additional prediction block may be generated by applying the MHP-intra mode if a predetermined condition is satisfied.

Then, a final prediction block may be generated by combining the regular prediction block and either the inter additional prediction block generated through signaling and inheritance (the block generated in step S1720) or the intra additional prediction block generated through a derivation method according to an embodiment (the block generated in step S1740) according to a predetermined rule (S1650). As an example, the final prediction block may be generated by weighted-summing the regular prediction block and the additional prediction block.

It is possible to extend and apply the above-described method to the MHP-IBC mode or the MHP-inter mode as well. Even when numMHP == 0, if a predetermined condition is satisfied, an additional prediction block may be generated according to the MHP-IBC mode or the MHP-inter mode. If the definition is changed such that numMHP means the number of MHP-inter modes, a derived mode may be one or more of the three modes according to a predefined allowable number for each mode. The same method may also be applied when numMHP means the number of MHP-intra modes or MHP-IBC modes.

The examples of FIGS. 34 and 35 described above may be combined with each other. Specifically, an MHP-intra block may be generated when numMHP > 0 and a predetermined condition is satisfied, and an MHP-intra block may also be generated when numMHP == 0 and another predetermined condition is satisfied.

Since combining an inter mode that finds a block most similar to a current block in a reference picture and a prediction block of an intra mode derived from neighboring samples of the current block not only increases compression efficiency but also has the effect of removing discontinuity between the current block and neighboring samples, similarity with neighboring samples may be considered as a condition (the above-described "predetermined condition") for determining whether the MHP-intra mode is applied. Accordingly, in the above-described embodiment, a condition for determining whether MHP-intra is derived may be defined as follows.

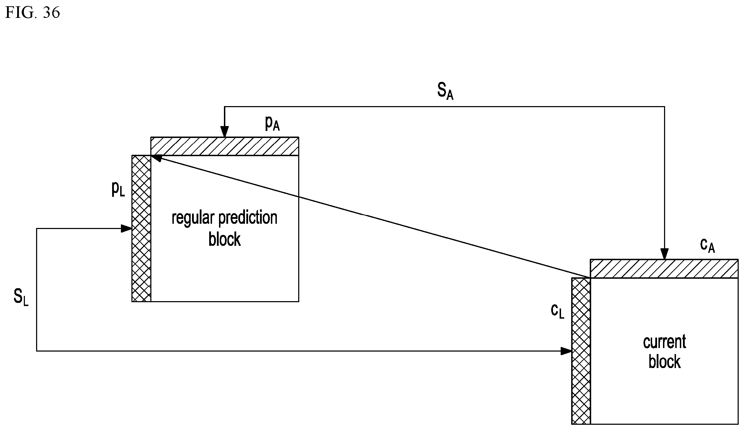

FIG. 36 is a diagram for explaining an error between neighboring samples of a current block and neighboring samples of a regular prediction block.

Referring to FIG. 36, an intra additional prediction block may be generated by applying the MHP-intra mode based on errors (SA, SL) between neighboring samples (cA, cL) of a current block and neighboring samples (pA, pL) of a regular prediction block (regular prediction block). In other words, the error between neighboring samples of the current block and the prediction block may be used as a criterion so that discontinuity of the block can be determined. In this example, the error may be information indicating a difference or an error between pieces of information. In some cases, a cost may also be used in a similar meaning.

Specifically, it is possible to compare SA, which is an error between a top neighboring sample cA of the current block and a top neighboring sample pA of the regular prediction block, with a threshold value. Also, it is possible to compare SL, which is an error between a left neighboring sample cL of the current block and a left neighboring sample pL of the regular prediction block, with a threshold value. Also, it is possible to compare by considering both the top neighboring samples and the left neighboring samples. For convenience of description, the top-left is not described, but a sample at the corresponding position may be considered in a process of calculating an error between samples by using top, left, or top/left samples.

The threshold value may be set according to Equation 16 and Equation 17 below.

$$[\text{Equation 16}]$$
$$\text{threshold} = \text{width} * \text{template height} / \lambda$$

$$[\text{Equation 17}]$$
$$\text{template width} * \text{height} / \lambda$$

Here, $\lambda$ may be set to a value satisfying $\lambda \geq 1$.

Specifically, an error ($S_A$, $S_L$) or a cost between samples (or sample values, hereinafter, samples and sample values are regarded as having the same meaning) may be obtained by the following method or a combination thereof.

The error or cost may be calculated in consideration of SAD (Sum of Absolute Difference). That is, it may be calculated as in Equation 18 below. In Equation 18, c and p represent neighboring samples of the current block and the regular prediction block, respectively, and x represents a position of a neighboring sample. Also, it may be applied to N samples included in a region included in the top, left, or top/left.

$$[\text{Equation 18}]$$

$$\text{cost} = \sum_{x=0}^{N-1} |c[x]\text{-}p[x]|$$

The error or cost may be calculated in consideration of MR-SAD (Mean Reduced-Sum of Absolute Difference). That is, it may be calculated as in Equation 19 below. In Equation 19, c and p represent neighboring samples of the current block and the regular prediction block, respectively, and x represents a position of a neighboring sample. Also, it may be applied to N samples included in a region included in the top, left, or top/left.

[Equation 19]

$$diff = \frac{1}{N}\left(\sum_{x=0}^{N-1}|c[x]| - \sum_{x=0}^{N-1}|p[x]|\right)$$

$$cost = \sum_{x=0}^{N-1}|c[x] - p[x] - diff|$$

The error or cost may be calculated in consideration of SSE (Sum Squared Error) between samples. That is, it may be calculated as in Equation 20 below. In Equation 20, c and p represent neighboring samples of the current block and the regular prediction block, respectively, and x represents a position of a neighboring sample. Also, it may be applied to N samples included in a region included in the top, left, or top/left.

[Equation 20]

$$cost = \sum_{x=0}^{N-1}(c[x]-p[x])^2$$

The error or cost may be calculated in consideration of MSE (Mean Squared Error) between samples. That is, it may be calculated as in Equation 21 below. In Equation 21, c and p represent neighboring samples of the current block and the regular prediction block, respectively, and x represents a position of a neighboring sample. Also, it may be applied to N samples included in a region included in the top, left, or top/left.

[Equation 21]

$$cost = \frac{1}{N}\left(\sum_{x=0}^{N-1}(c[x]-p[x])^2\right)$$

A method for calculating a cost of each block may be variably determined according to characteristics of the block. For example, for a block to which LIC is applied, a cost may be calculated in consideration of MR-SAD. As another example, for a block to which BCW is applied, a cost may be calculated in consideration of MR-SAD. As yet another example, for a block to which DMVR and BDOF are applied, a cost may be calculated in consideration of SAD.

The neighboring sample region may consider a top and left 1-pixel line most adjacent to the current block, or may consider a plurality of top and left pixel lines. A size of the sample region may use a fixed region according to a rule predetermined between an encoder and a decoder, or may be variably determined and used according to separate signaling or conditions. Conditions for determining the size of the sample region may include a sample distribution, block size information, a detailed prediction mode, and the like.

A predetermined condition used to determine whether the MHP-intra mode is applied may consider a sample distribution of a region adjacent to the current block and a sample distribution of a region adjacent to a prediction block. Specifically, it is possible to consider a distribution of a top neighboring sample cA of the current block and a top neighboring sample pA of the regular prediction block, and it is possible to consider a distribution of a left neighboring sample cL of the current block and a left neighboring sample pL of the regular prediction block. Also, it is possible to compare by considering both the top neighboring samples and the left neighboring samples. For convenience of description, the top-left is not described, but a sample at the corresponding position may be considered in a process of calculating an error between samples by using top, left, or top/left samples. Each distribution of samples adjacent to the current block and the regular prediction block may consider variance and standard deviation, and when a difference between distributions of the blocks is greater than a threshold value, the MHP-intra mode may be allowed.

Also, the predetermined condition may include block size information. That is, the condition may include a block size (width × height), a width of a block, a height of a block, and a ratio of a block (width/height or height/width). For example, when the block size is smaller than 32, the MHP-intra mode may not be applied. Alternatively, when the block size is greater than 1024, the MHP-intra mode may not be applied. As another example, when a width or a height is smaller than 8 or greater than 64, the MHP-intra mode may not be applied. Alternatively, the following limitation may be applied according to the block ratio:

- if(width >= height && width/height > 4) MHP-INTRA is not allowed
- else if(width < height && height/width > 4) MHP-INTRA is not allowed

Also, the predetermined condition may include a detailed prediction mode of a block. That is, whether the MHP-intra mode is applied may be determined based on a detailed prediction mode used to generate a regular prediction block of the current block. For example, a merge mode includes various detailed prediction modes such as regular merge, subblock merge, MMVD, CIIP, GPM, and GPM-INTRA. In particular, since CIIP and GPM-INTRA already include intra information in a prediction block, when such prediction methods are applied to a regular prediction block, the MHP-intra mode may not be additionally applied. In addition, when an AMVP mode having high motion accuracy due to MVD is used, the MHP-intra mode may not be applied. Also, when a block to which refinement of motion information or refinement of prediction samples, such as DMVR and BDOF, is applied, the MHP-intra mode may not be applied.

In this embodiment, applying the MHP-intra mode may mean that the MHP-intra mode is derived in the decoding apparatus.

Also, the predetermined condition may include the number of numMHP. Whether to derive the MHP-intra mode may be determined according to a number of MHP-AMVP modes, MHP-merge modes, or MHP-intra modes that are signaled or inherited. For example, when numMHP represents a number of signaled and inherited MHP-AMVP/MHP-merge modes, the MHP-intra mode derived when numMHP is 0 may be allowed. As another example, when numMHP is greater than 0 and smaller than MaxNum, the derived MHP-intra mode may be allowed. The derived MHP-intra mode may be used in combination with a signaled MHP-intra mode and an inherited MHP-intra mode.

Meanwhile, the embodiments described above may also be applied in the same manner to the MHP-IBC prediction mode. Accordingly, an additional prediction mode for generating an additional prediction block may include at least one of an MHP-intra prediction mode or an MHP-IBC prediction mode, and information regarding the MHP-IBC prediction mode may also be derived in the same manner as described above.

## Embodiment 4

This embodiment relates to a method of signaling or deriving information required to generate an intra additional prediction block when the MHP-intra mode is applied, that is, when an intra mode is used for generation of an additional prediction block to generate an intra additional prediction block.

Information required to apply the MHP-intra mode may be signaled/parsed when a value of an MHP-intra flag (mhp _intra_ flag) is 1, and the intra additional prediction block may be generated using the information. In the present disclosure, in order to distinguish from a prediction mode used as a term representing the MHP-inter mode (or MHP-merge mode, MHP-AMVP) and the MHP-intra mode, a detailed mode, prediction technique, prediction tool, prediction method, and the like applied to each prediction mode are collectively referred to as a detailed prediction mode. However, the scope of the disclosed embodiments is not limited to such terminology, and even when referred to by other terminology, it may fall within the scope of the disclosed embodiments as long as it has substantially the same meaning as the detailed prediction mode described in the present disclosure.

Specifically, a detailed prediction mode used to generate the intra additional prediction block may be determined within a specific list, and this specific list may be an MPM (Most Probable Mode) list. Among a plurality of candidates included in the MPM list, a candidate indicated by an index may be used as the detailed prediction mode, and the index may be defined as a syntax element such as mhp _mpm_idx.

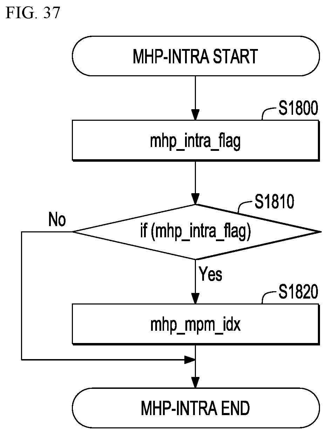

FIG. 37 is a flowchart illustrating an example of an operation of signaling/parsing information regarding the MHP-intra mode.

Referring to FIG. 37, an MHP-intra flag (rnhp_intra_flag) indicating whether an intra mode is applied to generation of an additional prediction block, in other words whether the MHP-intra mode is applied, is signaled/parsed (S1800), and when the MHP-intra mode is applied (Yes in S1810), information (e.g., mhp_mpm_idx) indicating a detailed prediction mode used for the MHP-intra mode among a plurality of candidates included in the MPM list may be signaled/parsed (S1820).

In the flowchart, only signaling/parsing of the MHP mpm index is illustrated for convenience of description, but other information required to perform the MHP-intra mode may also be additionally signaled/parsed.

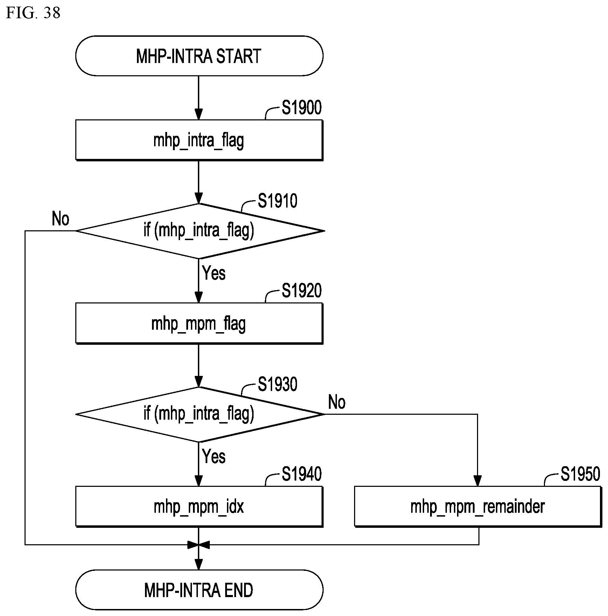

Alternatively, a prediction method applied to the MHP-intra mode may be determined as one of other candidates that do not belong to the MPM list. FIG. 38 is a flowchart illustrating another example of an operation of signaling/parsing information regarding the MHP-intra mode.

Referring to FIG. 38, an MHP-intra flag (rnhp_intra_flag) indicating whether an intra mode is applied to generation of an additional prediction block, in other words whether the MHP-intra mode is applied, is signaled/parsed (S1900).

When the MHP-intra mode is applied, that is, when a value of the MHP-intra flag is 1 (Yes in S1910), a flag (mhp_mpm_flag) indicating whether a detailed prediction mode applied to the MHP-intra mode exists in the MPM list may be signaled/parsed (S1920). When a value of mhp_mpm_flag is 1, it may indicate that the detailed prediction mode applied to the MHP-intra mode exists in the MPM list, and when a value of mhp_mpm_flag is 0, it may indicate that the detailed prediction mode applied to the MHP-intra mode does not exist in the MPM list.

When the detailed prediction mode applied to the MHP-intra mode exists in the MPM list, that is, when a value of mhp_mpm_flag is 1 (Yes in S1930), information (mhp_mpm_idx) indicating a specific candidate in the MPM list may be signaled/parsed (S1940).

When the prediction method applied to the MHP-intra mode does not exist in the MPM list, that is, when a value of mhp_mpm_flag is 0 (No in S1930), information indicating one of other candidates that do not belong to the MPM list may be signaled/parsed. For example, the information may be signaled/parsed as a syntax element such as mhp_mpm_remainder (S1950).

An MPM list for the MHP-intra mode may be configured as a separate list and separate detailed prediction modes distinguished from an MPM list for a regular intra mode used to generate a regular prediction block. Alternatively, in order to reduce encoding/decoding complexity, it is also possible to use the same MPM list for the MHP-intra mode and the regular intra mode.

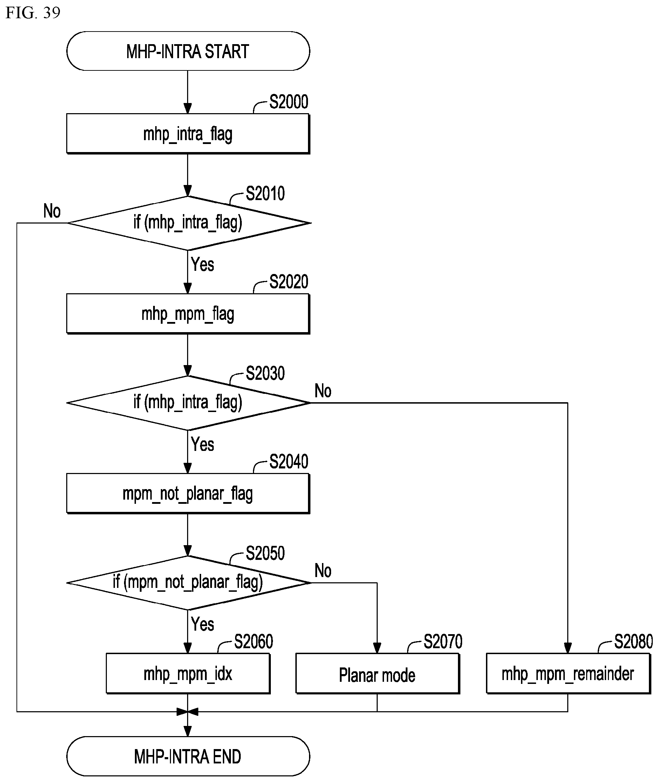

Meanwhile, it is also possible to increase compression efficiency by signaling/parsing a detailed prediction mode having the highest selection probability among prediction mode candidates prior to information (e.g., mhp_mpm_idx) indicating a specific candidate in the MPM list. FIG. 39 is a flowchart illustrating another example of an operation of signaling/parsing information regarding the MHP-intra mode.

Referring to FIG. 39, an MHP-intra flag (rnhp_intra_flag) indicating whether an intra mode is applied to generation of an additional prediction block, in other words whether the MHP-intra mode is applied, is signaled/parsed (S2000).

When the MHP-intra mode is applied, that is, when a value of the MHP-intra flag is 1 (Yes in S2010), a flag (mhp_mpm_flag) indicating whether a detailed prediction mode applied to the MHP-intra mode exists in the MPM list may be signaled/parsed (S2020).

When the detailed prediction mode applied to the MHP-intra mode exists in the MPM list, that is, when a value of mhp_mpm_flag is 1 (Yes in S2030), information (e.g., mhp_not_planar_flag) indicating whether a detailed prediction mode having a high selection probability, for example a planar mode, is used may be signaled/parsed first (S2040) so that whether the detailed prediction mode having a high selection probability is used may be determined first. In this case, the MPM list may be configured with candidates excluding the planar mode. In this example, in consideration that the planar mode generally has a high selection probability for a regular prediction mode, whether the planar mode is used is determined first, but it is also possible to determine whether another detailed prediction mode is used first in consideration of characteristics of the multi-prediction block mode.

When a value of mhp_not_planar_flag is 1 (Yes in S2050), it indicates that the planar mode is not used, and information (mhp_mpm_idx) indicating a specific candidate in the MPM list may be signaled/parsed (S2060).

When the detailed prediction mode applied to the MHP-intra mode does not exist in the MPM list, that is, when a value of mhp_mpm_flag is 0 (No in S2030), information (e.g., mhp_mpm_remainder) indicating one of other candidates that do not belong to the MPM list may be signaled/parsed (S2080).

When a value of mhp_not_planar_flag is not 1 (No in S2050), it indicates that the planar mode is used, and an additional prediction block may be generated using the planar mode (S2070).

The MPM list for the MHP-intra mode may include the following candidates and may be configured in a predefined order. Also, when constructing the list, duplicated modes may be checked so that duplicated modes are not included in the list:

- non-angular modes such as planar and DC
- angular modes having specific values (angular mode or directional mode)
- more finely or more coarsely divided angular modes
- prediction modes of adjacent or non-adjacent blocks coded/decoded by intra modes and/or modified modes (e.g., mode±1, mode±2)
- history-based prediction modes including prediction information of intra blocks coded/decoded before the current block
- default modes (e.g., planar mode)
- ISP modes
- MIP modes
- intra prediction modes derived using DIMD
- intra prediction modes derived using a TIMD method
- intra prediction modes stored (used) in MHP of the current block (among a plurality of additional prediction blocks) and/or modified modes (e.g., mode±1, mode±2)
- intra prediction modes stored in a multi-prediction block mode included in adjacent or non-adjacent blocks coded/decoded before the current block and/or modified modes (e.g., mode±1, mode±2)
- intra prediction modes when a prediction mode of the current block is a CIIP mode and/or modified modes (e.g., mode±1, mode±2)

- intra prediction modes of adjacent or non-adjacent blocks coded/decoded by the CIIP mode and/or modified modes (e.g., mode±1, mode±2)
- intra prediction modes when a prediction mode of the current block is a GPM-INTRA mode and/or modified modes (e.g., mode±1, mode±2)
- intra prediction modes of adjacent or non-adjacent blocks coded/decoded by the GPM-INTRA mode and/or modified modes (e.g., mode±1, mode±2)

A size of the MPM list may be determined as a value agreed upon between the encoder and the decoder. For example, the size of the MPM list may be set to 6.

Also, when constructing the MPM list and signaling mhp_mpm_idx, a candidate order of the MPM list may be changed to reduce signaling bits. For example, a template-based cost may be used, and the candidate list may be configured in an order of increasing cost. In calculating a cost for reconstruction of the candidate list, SAD, MR-SAD, SSE, MSE, and the like may be used.

An angular mode as a candidate detailed prediction mode may generate a mode having a corresponding direction by non-uniformly dividing angles. The MHP-intra mode may use such angular modes and may be selected from an angle set different from a regular intra mode by dividing more finely or more coarsely. For example, when a regular intra mode has 65 directional modes, the MHP-intra mode may have 129 directional modes divided more finely or 35 directional modes divided more coarsely. As another example, when the regular intra mode has 65 directional modes, angles of other directions not supported in the corresponding direction may be used as candidates.

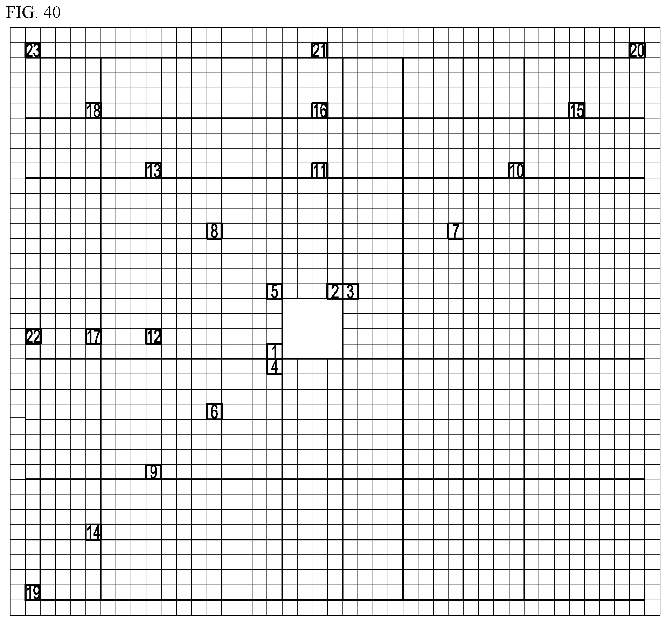

FIG. 40 is a diagram illustrating an example of positions of adjacent and non-adjacent blocks of a current block.

The adjacent blocks described above may refer to blocks at positions 1 to 5 in FIG. 40, and the non-adjacent blocks may refer to blocks at positions 6 to 23 in FIG. 40.

The MHP-intra mode may also use a detailed prediction mode having a fixed value without signaling. A detailed prediction mode applied as a fixed value to the MHP-intra mode may be determined using the following methods. It is also possible to determine a detailed prediction mode having a fixed value by combining two or more of the following methods.

A planar mode or a DC mode may be used as a detailed prediction mode having a fixed value. Specifically, the planar mode may be selected when reference samples exist, and the DC mode may be selected when reference samples do not exist or when a number of reference samples is smaller than a specific number. For example, the DC mode may be selected when the number of reference samples is 8. Alternatively, the number of reference samples may be determined in consideration of width + height of the block. For example, when width ≥ height and the number is smaller than height/2, or when width < height and the number is smaller than width/2, the DC mode may be selected.

When blocks at predefined adjacent or non-adjacent positions are scanned based on the current block, a mode of a first available block may be used as the detailed prediction mode having the fixed value. In this case, availability may refer to a position coded/decoded in an intra mode and existing within an allowed CTU range. The intra mode may include an SGPM mode.

Among blocks coded/decoded in an intra mode among blocks at predefined adjacent or non-adjacent positions based on the current block, a mode having a high occurrence frequency among detailed prediction modes may be used as the fixed value. When modes having the same occurrence frequency exist, the detailed prediction mode having the fixed value may be determined according to a predefined priority.

A history-based detailed prediction mode including prediction information of intra blocks coded/decoded before the current block may be used as the fixed value. For example, a mode included in a 0th list of a history buffer may become the detailed prediction mode having the fixed value.

A default mode may be determined as the detailed prediction mode having the fixed value. This method may be used when an intra detailed prediction mode cannot be obtained from adjacent/non-adjacent blocks and a history-based storage buffer. In this case, the default detailed prediction mode may be determined as the planar mode.

- ISP mode
- MIP mode
- INTRA prediction mode derived using DIMD
- intra prediction mode derived using a TIMD method
- intra prediction mode stored (used) in MHP of the current block (among a plurality of additional prediction blocks) and/or modified modes (e.g., mode±1, mode±2)
- intra prediction mode stored in a multi-prediction block mode included in adjacent or non-adjacent blocks coded/decoded before the current block and/or modified modes (e.g., mode±1, mode±2)
- intra prediction mode when a prediction mode of the current block is a CIIP mode and/or modified modes (e.g., mode±1, mode±2)
- intra prediction mode of adjacent or non-adjacent blocks coded/decoded by the CIIP mode and/or modified modes (e.g., mode±1, mode±2)

- intra prediction mode when a prediction mode of the current block is a GPM-INTRA mode and/or modified modes (e.g., mode±1, mode±2)
- intra prediction mode of adjacent or non-adjacent blocks coded/decoded by the GPM-INTRA mode and/or modified modes (e.g., mode±1, mode±2)

When one or more intra additional prediction blocks exist, different fixed detailed prediction modes may be applied to each intra additional prediction block. For example, information on a fixed detailed prediction mode for a first intra additional prediction block may be signaled, and information on a fixed detailed prediction mode applied to a next intra additional prediction block may be obtained using the derivation method described above. A method for determining fixed detailed prediction modes for the first prediction block and the second prediction block may also be applied with the above-described order reversed, and both fixed detailed prediction modes may be obtained through signaling or both may be obtained through a derivation method.

Meanwhile, even when one intra additional prediction block exists, that is, even when one MHP-intra mode exists, it is also possible that two or more fixed detailed prediction modes are used for the corresponding mode. For example, intra prediction blocks may be generated using two or more fixed detailed prediction modes selected through the derivation method described above, and then one intra additional prediction block may be generated by applying a weighted sum. Thereafter, generation of a final prediction block through a weighted sum with a regular prediction block may be performed as described above.

Meanwhile, the embodiments described above may also be applied in the same manner to an MHP-IBC prediction mode. Accordingly, an additional prediction mode for generating an additional prediction block may include at least one of an MHP-intra prediction mode or an MHP-IBC prediction mode, and information regarding the MHP-IBC prediction mode may also be signaled/parsed or derived in the same manner as described above.

## Embodiment 5

This embodiment relates to a method for signaling or obtaining information (e.g. block vector information, weight information, etc.) required to generate an MHP-IBC block when an IBC mode is applied as one of additional prediction modes, that is, when the MHP-IBC block is included in an additional prediction block.

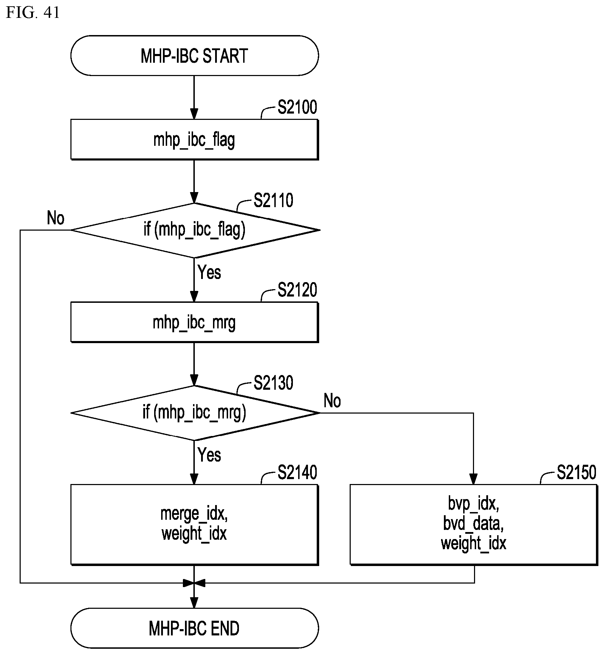

FIG. 41 is a flowchart illustrating an example of an operation of signaling/parsing information required to generate an MHP-IBC block.

Referring to FIG. 41, MHP-IBC information (e.g. mhp_ibc_flag) indicating whether an MHP-IBC mode is applied to a current block, that is, whether an IBC mode is applied to generation of an additional prediction block, may be signaled/parsed (S2100). When a value of mhp_ibc_flag is 1, it indicates that the MHP-IBC mode is applied. That is, it indicates that an MHP-IBC block exists. When a value of mhp_ibc_flag is not 1 (e.g. when it is 0), it indicates that the MHP-IBC mode is not applied.

Block vector information used for generation of the MHP-IBC block may be derived by using a merge method or an AMVP (ABVP) method. Accordingly, when a value of mhp_ibc_flag is 1 (Yes in S2110), information (e.g. mhp_ibc_mrg) indicating whether block vector information used for generation of the MHP-IBC block is obtained by a merge method may be signaled/parsed (S2120).

When a value of mhp_ibc_mrg is 1 (Yes in S2130), information (e.g. merge_idx) indicating a specific candidate existing in a block vector candidate list and weight information (e.g. weight_idx) may be signaled/parsed (S2140).

When a value of mhp_ibc_mrg is 0 (No in S2130), information (e.g. bvp_idx) indicating a block vector predictor and information (e.g. bvd_data) indicating a block vector difference value may be signaled/parsed (S2150).

Meanwhile, when one or more MHP-IBC prediction blocks exist, block vectors of respective prediction blocks may be different from each other. In this case, candidate lists of block vectors for respective MHP-IBC prediction blocks may independently exist. Alternatively, different block vectors may be indicated by using different indices (e.g. merge_idx) in the same candidate list. Alternatively, a method may be applied in which an index (merge_idx) indicating a block vector for one block is signaled, and an index of another block is derived as merge_idx + 1 without signaling.

A block vector predictor (BVP) candidate list may also be obtained from adjacent/non-adjacent neighboring blocks of a current block. The adjacent/non-adjacent neighboring blocks of the current block may represent blocks at positions 1 to 5 and positions 6 to 23 in FIG. 40 described above. Positions and checking order of neighboring blocks may be partially changed and applied.

## Embodiment 6

This embodiment relates to weight information required to generate a final prediction block by using the corresponding prediction block when the MHP-intra mode is applied, that is, when an intra mode is used for generation of an additional prediction block to generate an intra additional prediction block. As described above, weights may be applied to a regular prediction block and an additional prediction block in order to generate a final prediction block. This embodiment proposes signaling and derivation methods of such weight information. The method described in this embodiment may be applied not only to the MHP-intra mode but also to the MHP-IBC mode.

Weight information applied to each additional prediction block may be obtained by signaling a weight index indicating one within a weight candidate list. When an MHP-intra prediction block exists among additional prediction blocks, weight information applied thereto may be distinguished from weight information applied to an MHP-inter prediction block. In other words, weight information applied to the MHP-intra mode may be distinguished from weight information applied to the MHP-inter mode. Accordingly, a weight candidate list for the MHP-inter mode and a weight candidate list for the MHP-intra mode may independently exist. Also, sizes of the weight candidate lists may be defined as different values from each other.

Also, when an MHP-IBC prediction block exists among additional prediction blocks, weight information applied thereto may be distinguished from weight information applied to an MHP-intra prediction block and an MHP-inter prediction block. In other words, weight information applied to the MHP-IBC mode may be distinguished from weight information applied to the MHP-intra mode and the MHP-inter mode. Accordingly, a weight candidate list for the MHP-inter mode and the MHP-intra mode and a weight candidate list for the MHP-IBC mode may independently exist.

These weights are values defined for additional prediction blocks. As an example, a weight applied to an additional prediction block may be defined as w, and a weight applied to a regular prediction block may be defined as 1-w. Assuming that the weight w applied to the additional prediction block is 4/16, the weight 1-w applied to the regular prediction block has a value of 12/16.

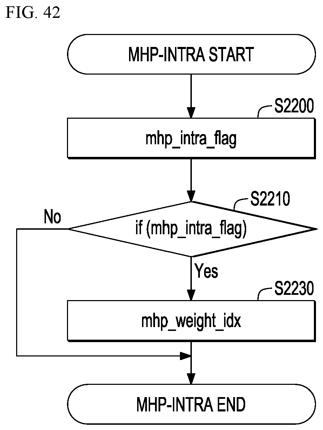

FIG. 42 is a flowchart illustrating another example of an operation of signaling/parsing weight information for the MHP-intra mode.

The method described in this example may be applied in combination with all or some of the methods described in the above embodiments. Accordingly, contents already described above regarding terms and the like will not be repeatedly described.

Referring to FIG. 42, MHP-intra information (e.g. mhp _intra_ flag) indicating whether the MHP-intra mode is applied is signaled/parsed (S2200), and when the MHP-intra information is applied, that is, when a value of mhp_intra_flag is 1 (Yes in S2210), weight information (e.g. intra_weight_idx) applied to the MHP-intra mode or the MHP-intra prediction block may be signaled/parsed (S2230). Whenintra_weight_idx, which is index information, is used as the weight information, a final prediction block may be generated by using a weight value indicated by the index.

Meanwhile, when the MHP-IBC mode is applied, rnhp_intra_flag and_intra_ weight_idx may be replaced with mhp_ibc_flag and ibc_weight_idx, respectively, and may be applied together with motion information for the MHP-IBC mode.

Also, methods described below may also be applied to the MHP-IBC mode by appropriately replacing syntax elements.

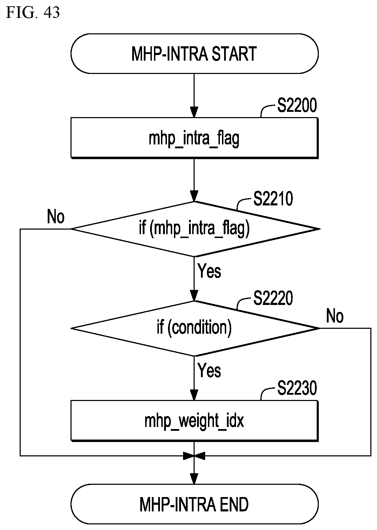

FIG. 43 is a flowchart illustrating still another example of an operation of signaling/parsing weight information for the MHP-intra mode.

Referring to FIG. 43, when a predetermined condition is satisfied (Yes in S2220), weight information may be signaled/parsed (S2230). When the predetermined condition is not satisfied (No in S2220), default-set weight information may be used without signaling.

A condition used to determine whether the weight information is signaled/parsed may be determined by applying at least one of the following methods.

The condition may be determined based on information such as a size (width x height) of a current block, a width of the block, a height of the block, and a ratio of the block (width/height or height/width). As an example, when the size of the block is smaller than 32, default weight information may be used. Alternatively, when the size of the block is greater than 1024, default weight information may be used.

The condition may be determined according to a prediction mode of the current block. As an example, when a prediction mode such as MMVD, GPM (GPM-INTRA), or CIIP is applied to the current block, default weight information may be used without signaling of weight information. As another example, when a subblock-based prediction mode is applied, default weight information may be used. Also, when an AMVP mode having high motion accuracy due to MVD is applied, default weight information may be used. Also, when the block is a block to which refine of motion information or refine of prediction samples such as DMVR and BDOF is applied, default weight information may be used.

The condition may be determined according to a prediction direction of the current block. For example, whetherintra_weight_idx is signaled may be determined according to whether unidirectional prediction is applied or bi-directional prediction is applied. As an example, when unidirectional prediction is applied, intra weight_idx is signaled, and when bi-directional prediction is applied, default weight information may be used.

The condition may be determined based on a BCW (Bi-prediction with CU-level Weight) index of the current block. As an example, when the BCW index does not indicate a specific value (equal-weight), intra_weight_idx may be signaled.

The condition may be determined according to LIC (Local Illumination Compensation) flag information of the current block. As an example, when LIC is applied, intra weight_idx may be signaled.

The condition may be determined according to OBMC (Overlapped Block Motion Compensation) flag information of the current block. As an example, when OBMC is applied, default weight information may be used.

The condition may be determined according to the number of additional prediction blocks. When a plurality of MHP-intra prediction blocks exist, intra_weight_idx may be signaled only for one block and default values may be used for weights for remaining blocks. Alternatively, when an MHP-inter prediction block exists, default weight information may be used.

The default weight information described above may be a predefined value. As an example, the default weight value may be equal-weight. Alternatively, it is also possible that pixel-based weight information in a block is defined as a default value.

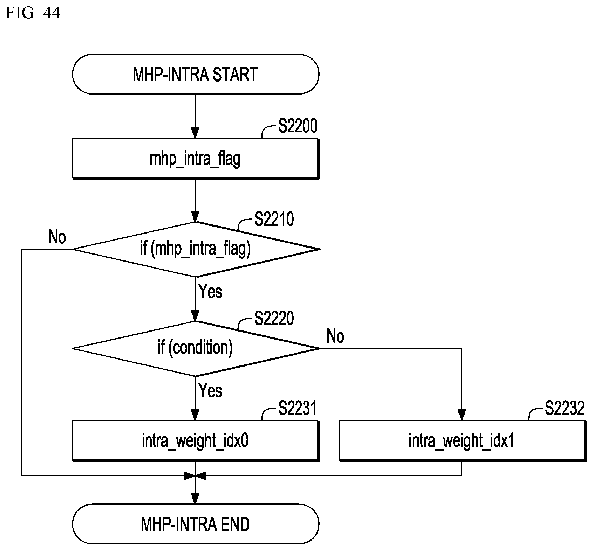

FIG. 44 is a flowchart illustrating still another example of an operation of signaling/parsing weight information for the MHP-intra mode.

In the example of FIG. 44, weight information may be differently signaled/parsed according to whether a predetermined condition is satisfied. Specifically, when the predetermined condition is satisfied (Yes in S2220), first weight information may be signaled/parsed (S2231), and when the predetermined condition is not satisfied (No in S2220), second weight information may be signaled/parsed (S2232). As an example, the first weight information may be represented by a syntax element of intra_weight _idx0, and the second weight information may be represented by a syntax element of intra_weight_idx1.

That is, the first weight information and the second weight information may be distinguished and applied according to a condition. A condition distinguishing the first weight information and the second weight information may apply at least one of the above-described conditions.

A weight candidate list that can be indicated by the first weight information and a weight candidate list that can be indicated by the second weight information may be independently configured. Alternatively, the weight candidate list that can be indicated by the first weight information and the weight candidate list that can be indicated by the second weight information may be the same, and it is also possible to adjust the first weight information and the second weight information to indicate different candidates, respectively.

Candidates of the weight information may be configured as follows. However, candidates of the weight information described below are merely examples applicable to one embodiment, and values, order, number, and the like of the candidates may be changed.

Table 13 below illustrates an example in which weight information is represented by using four indices. intra_weight_idx0 and intra_weight_idx1 may have weight values of different ranges. When one weight index is signaled, the value of intra_weight_idx in Table 13 may be referred to.

[Table 13]

| index | intra_weight_idx0 (intra_weight_idx) | intra_weight_idx1 |
|-------|--------------------------------------|-------------------|
| 0 | 1/4 | 1/16 |
| 1 | 1/8 | 1/32 |
| 2 | -1/8 | -1/32 |
| 3 | -1/4 | -1/16 |

Alternatively, the weight information may also be configured as shown in Table 14 below. In the example of Table 14, the weight information is represented by using two indices. It can be seen that the candidates are configured to include candidates having different weight values based on regions within the block and candidates having the same weight value for all regions within the block. intra_weight_idx0 (intra _weight_idx) illustrates an example in which the block is divided into four parts and different weights are applied to respective regions. When one weight index is signaled, the value of intra_weight_idx in Table 14 may be referred to.

[Table 14]

| | intra_weight_idx0 (intra_weight_idx) | intra _weight_idx1 |
|---|--------------------------------------|--------------------|
| 0 | 6/8, 5/8, 4/8, 3/8 | 1/4 |
| 1 | 5/8, 4/8, 3/8, 2/8 | 1/8 |

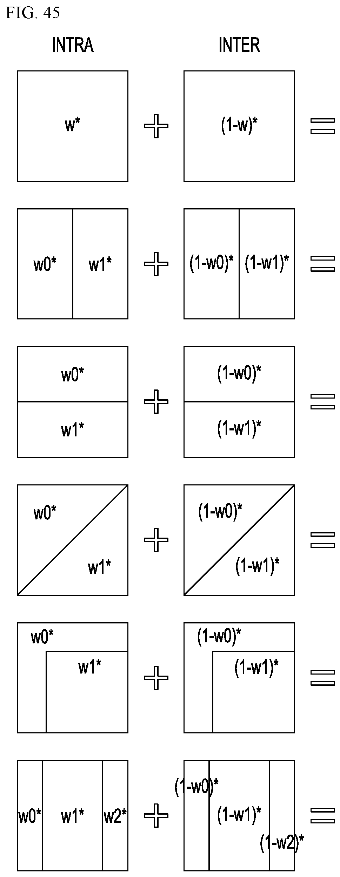

FIG. 45 is a diagram illustrating an example in which, in applying a weight to an MHP-intra prediction block, a current block is split and different weights are applied to respective split regions.

Referring to FIG. 45, the current block may be split into two or three in a vertical direction, a horizontal direction, or a diagonal direction, and both uniform split and non-uniform split are possible. Also, the current block may be split into a different number, that is, four or more regions, and uniform/non-uniform split and a position-based weight within a block may be applied. That is, a pixel-unit weight may be applied.

A weight applied to the MHP-intra prediction block is denoted by w, and when different weight information is present for each region, it is denoted by wN (N>=0). Accordingly, weights respectively applied to two split regions may be represented by w0 and w1, and weights respectively applied to three split regions may be represented by w0, w1, and w2.

The weight may be determined from signaled index information, or may be determined as a fixed value without signaling of index information. Also, the weight may be derived in consideration of a weight of a neighboring block. It is possible to use, as it is, weight information applied to an additional prediction block of a neighboring block, or to use the same based on an intra prediction mode. Specifically, in the case of a mode predicted from top reference samples, a weight of an intra block may be set to be smaller as a position becomes farther from the top side. Conversely, in the case of a mode predicted from left reference samples, a weight of an intra block may be set to be smaller as a position becomes farther from the left side.

Also, when a neighboring block is coded/decoded in an intra mode, a weight of the MHP-intra prediction block may be set to be greater than in a case in which the neighboring block is coded/decoded in an inter mode or an IBC mode. Alternatively, when a neighboring block is coded/decoded in an intra mode, a weight may be set to be greater for samples close to the neighboring block. That is, the weight information may be applied to an entire current block, may be applied for each split region, or may be applied based on a position on a pixel basis. Also, when a weight is applied in units of split regions or on a pixel basis, a weight of a specific region and position may have a value of 0. That is, a specific region and position to which the multi-prediction block mode is not applied may exist.

Also, when a neighboring block is coded/decoded in an IBC mode, a weight of the MHP-IBC prediction block may be set to be greater than in a case in which the neighboring block is coded/decoded in an inter mode or an intra mode.

### Embodiment 7

This embodiment relates to a method of deriving reference samples for generating an MHP-intra prediction block when the MHP-intra prediction block exists.

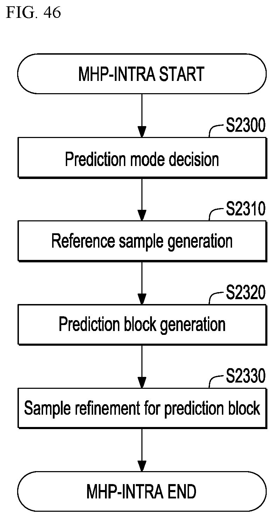

FIG. 46 is a flowchart illustrating an example of a decoding method performed in an MHP-intra mode in a decoding method according to one embodiment.

Referring to FIG. 46, a prediction mode applied to intra prediction is determined (S2300), and reference samples corresponding to the determined prediction mode are generated (S2310). A prediction block is generated according to the prediction mode by using the generated reference samples (S2320). For the generated prediction block, sample refinement may be performed through boundary smoothing or PDPC (S2330).

In the embodiments described later, the process of generating reference samples (S2310) will be described in detail.

To generate reference samples, first, the reference samples are filled using reconstructed samples adjacent to the current block. At this time, when a reference sample does not exist, the reference sample may be filled from neighboring samples according to a predefined method.

When a predetermined condition is satisfied, filtering is performed on the reference samples. As an example, the reference samples may be corrected by applying a smoothing filter. Also, when a prediction mode requires a reference sample at a fractional-pel position, reference samples of each phase may be generated by using an interpolation filter. As the interpolation filter, at least one of various filters such as a cubic interpolation filter and a Gaussian interpolation filter may be used.

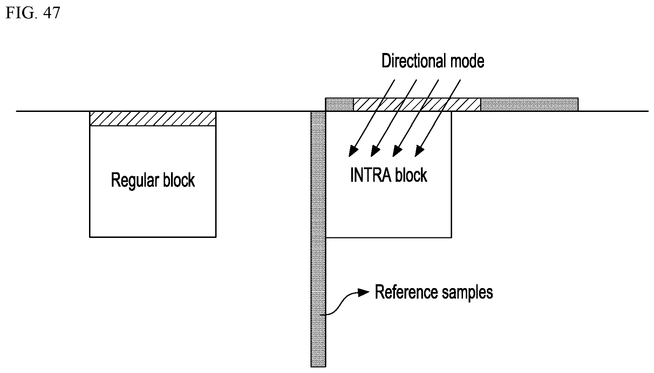

According to one embodiment, a strength and a type of filtering may be determined by using the reference samples. FIG. 47 is a diagram illustrating an example of positions of reference samples used to generate an MHP-intra prediction block and samples in a regular prediction block.

When a difference between activity A0 of reference samples for generating the MHP-intra prediction block and activity A1 of samples in the regular prediction block is greater than a threshold value (Tn, n>=0), it may be determined that discontinuity between neighboring samples and the regular prediction block is large. Calculation of sample activity and determination of whether filtering is applied may use at least one of the following methods:

A0 and A1 are calculated as variances of samples within respective regions, and whether filtering is applied may be determined according to whether |A0 - A1| > T0.

A0 and A1 are calculated as standard deviations of samples within respective regions, and whether filtering is applied may be determined according to whether |A0 - A1| > T1.

A0 and A1 are calculated as SAD between reference samples for the MHP-intra prediction block and samples in the regular prediction block, and whether filtering is applied may be determined according to whether SAD > T2.

A0 and A1 are calculated as SSE between reference samples for the MHP-intra prediction block and samples in the regular prediction block, and whether filtering is applied may be determined according to whether SSE > T3.

At this time, when the number of reference samples for the MHP-intra prediction block and the number of samples in the regular prediction block are different, an additional process such as matching the number of samples or performing normalization by using the number of samples may be included. As illustrated in FIG. 47, a range of reference samples used for calculation of sample activity may be variably determined according to the intra prediction mode.

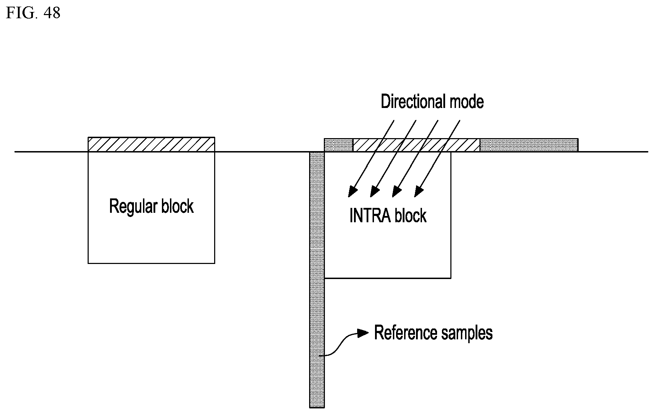

FIG. 48 illustrates an example in which positions of samples of the regular prediction block are changed and applied to a region adjacent to a prediction block in order to compare activity between samples corresponding to the same position. The above-described sample activity calculation, the method of applying normalization according to the number of samples, and the like may be equally applied.

According to a degree of discontinuity divided by K threshold values (K>0, integer) and a prediction mode, filtering may be applied to the reference samples in the following manner.

Unfiltered reference samples may be used as they are.

An applied filter may be [1, 2, 1]/4.

An applied filter may be [2, 3, 6, 3, 2]/16.

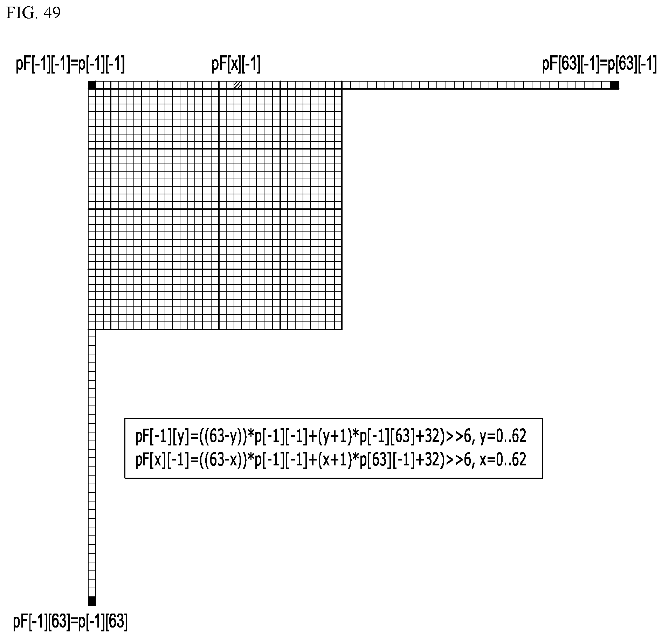

An applied filter may be a strong filter. FIG. 49 illustrates an example in which a strong filter is applied to the current block. A reference sample may be generated according to a distance ratio by using top-left and top-right reference samples or top-left and bottom-left reference samples. In the example of FIG. 49, 63 may be changed and applied to ((width * m) -1), ((height * m) -1). (m > 1, integer)

Meanwhile, the above-described embodiment may be equally applied to the MHP-IBC prediction mode. Accordingly, an additional prediction mode for generating an additional prediction block may include at least one of the MHP-intra prediction mode or the MHP-IBC prediction mode, and the above-described method may also be applied when a prediction block is generated by using the MHP-IBC prediction mode.

## Embodiment 8

This embodiment relates to a filtering method in a process of generating an intra prediction block when the intra prediction block exists as an additional prediction block, that is, when an MHP-intra prediction block exists.

In an intra prediction mode, particularly in a prediction mode having directionality, there is a problem in that discontinuity occurs in a region (or boundary) that is not adjacent to reference samples. To solve this problem, as described above with reference to FIG. 46, a technique such as boundary smoothing or PDPC may be applied to a boundary portion of the generated intra prediction block. That is, sample refinement for the prediction block in the above-described decoding process enables generation of a corrected prediction block by improving some samples using at least one of boundary smoothing or PDPC based on the generated prediction block.

A method proposed in one embodiment may be applied to the sample refinement process for the prediction block. Specifically, after a prediction block is generated by using the MHP-intra mode, refinement having boundary filtering characteristics may be applied to the prediction block. For this purpose, information regarding a filter applied to the MHP-intra prediction block (e.g. mhp_filter_flag or mhp_filter_idx) may be signaled/parsed.

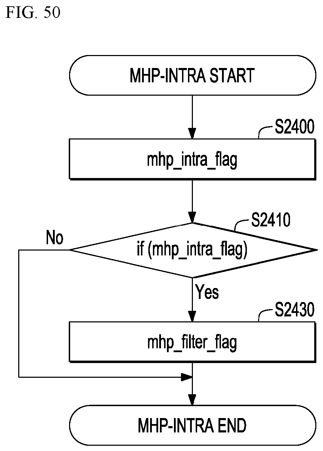

FIG. 50 is a flowchart illustrating an example of an operation of signaling/parsing filtering information for the MHP-intra mode.

Referring to FIG. 50, MHP-intra information (e.g. mhp_intra_flag) is signaled/parsed (S2400), and when the MHP-intra information indicates application of the MHP-intra mode, for example when a value of mhp_intra_flag is 1 (Yes in S2410), MHP-intra filter information may be signaled/parsed (S2430). The MHP-intra filter information indicates information regarding a filter applied to the MHP-intra prediction block, and may include a syntax element such as mhp_filter_flag.

For example, when a value of mhp_filter_flag is 1, a pixel position-based refinement process in the MHP-intra prediction block may be performed by using a predefined filter. When a value of mhp_filter_flag is 0, simplified boundary filtering may be applied or filtering may not be applied.

The method described in this embodiment may be combined with the embodiments described above. For example, the method may be signaled/parsed together with all or some of syntax elements such as prediction mode information of the MHP-intra mode, mhp_mpm_flag, mhp_not_planar_flag, mhp_mpm_idx, and mhp_mpm_remainder. Also, the method may be signaled/parsed together with weight information applied to the MHP-intra prediction block, for example intra_weight_idx, intra_weight_idx0, and intra weight_idx1. In addition, various embodiments described above and the MHP-intra filter information described in this embodiment may be applied together.

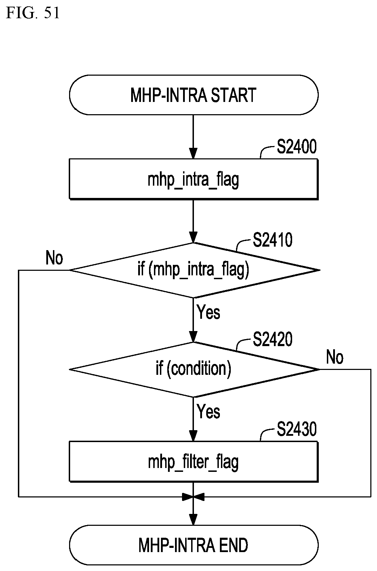

FIG. 51 is a flowchart illustrating another example of an operation of signaling/parsing filtering information for the MHP-intra mode.

According to the example of FIG. 51, a process of determining whether a predetermined condition is satisfied (S2420) may be additionally performed before signaling/parsing the MHP-intra filter information (S2430) in the process illustrated in FIG. 50. Accordingly, in this example, when the predetermined condition is satisfied (Yes in S2420), the MHP-intra filter information (e.g. mhp_filter_flag) may be signaled/parsed (S2430).

Conditions used to determine whether the MHP-intra filter information is signaled/parsed may be determined by applying at least one of the following methods.

The condition may be determined based on information such as a size (width x height) of the current block, a width of the block, a height of the block, and a ratio of the block (width/height or height/width). For example, when the size of the block is smaller than 32, the MHP-intra filter information may not be signaled/parsed. Alternatively, when the size of the block is greater than 1024, the MHP-intra filter information may not be signaled/parsed.

The condition may be determined according to a prediction mode of the current block. For example, when prediction modes such as MMVD, GPM (GPM-INTRA), or CIIP are applied to the current block, the MHP-intra filter information may not be signaled/parsed. As another example, when a subblock-based prediction mode is applied, the MHP-intra filter information may not be signaled/parsed. Also, when an AMVP mode having high motion accuracy due to MVD is applied, the MHP-intra filter information may not be signaled/parsed. Also, when the block is a block to which refine of motion information or refine of prediction samples such as DMVR and BDOF is applied, the MHP-intra filter information may not be signaled/parsed.

The condition may be determined according to a prediction direction of the current block. For example, whether mhp_filter_flag is signaled/parsed may be determined according to whether unidirectional prediction is applied or bi-directional prediction is applied. For example, when unidirectional prediction is applied, mhp_filter_flag may be signaled/parsed, and when bi-directional prediction is applied, mhp_filter_flag may not be signaled/parsed.

The condition may be determined based on a BCW (Bi-prediction with CU-level Weight) index of the current block. For example, when the BCW index does not indicate a specific value, mhp_filter_flag may be signaled/parsed.

The condition may be determined according to LIC (Local Illumination Compensation) flag information of the current block. For example, when LIC is applied, mhp_filter_flag may be signaled/parsed.

The condition may be determined according to OBMC (Overlapped Block Motion Compensation) flag information of the current block. For example, when OBMC is applied, mhp_filter_flag may not be signaled/parsed.

The condition may be determined according to the number of additional prediction blocks. When a plurality of MHP-intra prediction blocks exist, mhp_filter_flag may not be signaled/parsed. Alternatively, when an MHP-inter prediction block exists, mhp_filter_flag may not be signaled/parsed.

A sample refinement method applied to the MHP-intra prediction block may be determined from signaled information as described above, or may be determined as a fixed value without signaling. Also, the method may be derived in consideration of filter information of a neighboring block. For example, filter information of the neighboring block may be used as it is. Also, predetermined filter information may be used based on directionality of the intra prediction mode. For example, when a vertical directional mode is applied, a prediction block is generated by using top reference samples, and thus discontinuity with left neighboring samples may relatively increase. Accordingly, samples at that position may be refined to compensate for the discontinuity. As another example, when a horizontal directional mode is applied, a prediction block is generated by using left reference samples, and thus discontinuity with top neighboring samples may increase. Accordingly, samples at that position may be refined to compensate for the discontinuity. In this case, the closer to a boundary of the block, the larger a range of refinement values may be.

The sample refinement method may be applied to all samples in the block, or may be applied only to some regions. Also, a range of refined values may vary according to a position of a sample. For example, as mentioned above, the closer to the boundary of the block, the larger the range of refinement values may be.

Meanwhile, the above-described embodiment may also be applied in the same manner to the MHP-IBC prediction mode. Accordingly, an additional prediction mode for generating an additional prediction block may include at least one of the MHP-intra prediction mode or the MHP-IBC prediction mode, and filtering information may also be signaled/parsed in the same manner as described above when the MHP-IBC prediction mode is applied.

Although the embodiments have been separately described for convenience of explanation, combinations of two or more embodiments are possible, and changes required by combinations of the embodiments may also be included within the scope of the disclosed invention or the disclosed embodiments.

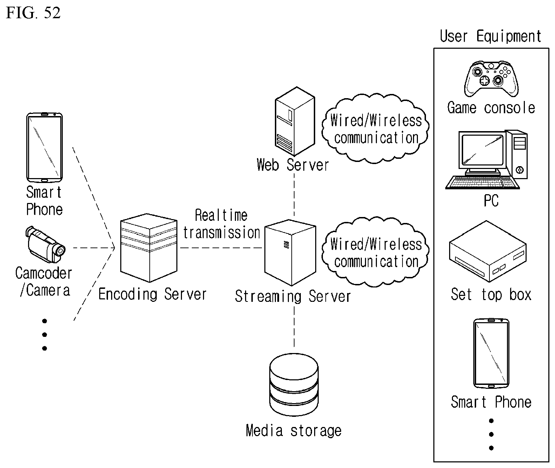

FIG. 52 is a diagram exemplarily illustrating a content streaming system to which embodiments according to the present disclosure may be applied.

Referring to FIG. 52, the content streaming system to which the embodiment(s) of the present specification are applied may largely include an encoding server, a streaming server, a web server, a media repository, a user device, and a multimedia input device.

The encoding server compresses content input from multimedia input devices such as a smartphone, a camera, and a camcorder into digital data to generate a bitstream and transmits the bitstream to the streaming server. In another example, when multimedia input devices such as a smartphone, a camera, and a camcorder directly generate the bitstream, the encoding server may be omitted.

The bitstream may be generated by an encoding method or a bitstream generation method to which the

58

embodiment(s) of the present specification are applied, and the streaming server may temporarily store the bitstream in a process of transmitting or receiving the bitstream.

The streaming server transmits multimedia data to the user device based on a user request through the web server, and the web server serves as a medium informing a user what services are available. When a user requests a desired service to the web server, the web server transmits the request to the streaming server, and the streaming server transmits multimedia data to the user. At this time, the content streaming system may include a separate control server, and in this case the control server performs a role of controlling commands/responses between respective devices in the content streaming system.

The streaming server may receive content from the media repository and/or the encoding server. For example, when content is received from the encoding server, the content may be received in real time. In this case, in order to provide a smooth streaming service, the streaming server may store the bitstream for a certain period of time.

Examples of the user device may include a mobile phone, a smart phone, a laptop computer, a digital broadcasting terminal, a PDA (personal digital assistant), a PMP (portable multimedia player), a navigation device, a slate PC, a tablet PC, an ultrabook, a wearable device (for example, a watch-type terminal (smartwatch), a glass-type terminal (smart glass), an HMD (head mounted display)), a digital TV, a desktop computer, and digital signage.

Each server in the content streaming system may operate as a distributed server, and in this case data received by each server may be processed in a distributed manner.

Claims described in the present specification may be combined in various ways. For example, technical features of method claims in the present specification may be combined and implemented as an apparatus, and technical features of apparatus claims in the present specification may be combined and implemented as a method. Also, technical features of method claims in the present specification and technical features of apparatus claims may be combined and implemented as an apparatus, and technical features of method claims and technical features of apparatus claims may be combined and implemented as a method.

[Industrial Applicability]

Embodiments according to the present disclosure may be used for encoding/decoding an image.

## Claims

1. A decoding method comprising:

    obtaining information regarding a regular prediction mode;
    generating a regular prediction block based on the regular prediction mode;
    obtaining information regarding an additional prediction mode;
    generating an additional prediction block based on the additional prediction mode;
    genarating a final prediction block based on a combination of the regular prediction block and the additional prediction block,
    wherein the additional prediction mode includes at least one of an intra prediction mode or an IBC prediction mode,
    wherein the information regarding the additional prediction mode includes at least one of information that indicates whether the intra prediction mode is applied to generate the additional prediction block, or information that indicates whether the IBC prediction mode is applied to generate additional prediction block.

2. The method of claim 1, wherein obtaining information regarding the additional prediction mode includes obtaining the at least one of the information that indicates whether the intra prediction mode or information that indicates whether the IBC prediction mode is applied to generate additional prediction block prior to the information that indicates whether an inter prediction mode is applied to generate the additional prediction block.

3. The method of claim 1, wherein obtaining the information regarding the additional prediction mode includes identifying whether a determined condition is satisfied and obtaining the at least one of the information that indicates whether the intra prediction mode or the information that indicates whether the IBC prediction mode is applied to generate additional prediction block based on the determined condition being satisfied.

4. The method of claim 1, wherein obtaining information regarding the additional prediction mode includes obtaining the information that indicates whether inter prediction mode is applied to generate additional prediction block prior to the at least ond of the information that indicates whether the intra prediction mode is applied to generate the additional prediction block or the information that indicates whether the IBC prediction mode is applied to generate the additional prediction block.

5. The method of claim 1, wherein the information regarding the additional prediction mode includes information regarding a detailed prediction mode of the at least one of the intra prediction mode or IBC prediction mode which is used for generating the additional prediction block,
wherein the obtaining the information regarding the additional prediction mode includes obtaining the information regarding a detailed prediction mode of the at least one of the intra prediction mode or the IBC prediction mode which is used for generating the additional prediction block based on the at least one of the intra prediction mode or the IBC prediction mode being applied to generate the additional prediction block.

6. The method of claim 1, wherein the information regarding the additional prediction mode includes weight information for an intra additional prediction block which is generated based on the intra prediction mode or an IBC additional prediction block which is generated based on the IBC prediction mode,
wherein the generating the final prediction block includes performing weighted sum of the regular prediction block and the additional prediction block.

7. The method of claim 6, wherein the weight information includes weight values different from each other,
wherein the generating the final prediction block includes applying the weight values to divided areas obtained by dividing the intra additional prediction block or the IBC additional prediction block.

8. An encoding method comprising:

deriving information regarding prediction from a neighboring block based on a merge mode being determined as a prediction mode for a current block; and
generating a prediction block for the current block based on the information derived from the neighboring block,
wherein the generating the prediction block for the current block includes applying a multiple prediction block mode to the current block based on information derived from the neighboring block including information regarding the multiple prediction block mode.

9. The method of claim 8, wherein the deriving information regarding the prediction from the neighboring block includes identifying whether a determined condition is satisfied and deriving the information regarding the multiple prediction block mode based on the determined condition being satisfied.

10. The method of claim 8, wherein the deriving information regarding the prediction from the neighboring block includes identifying whether a determined condition is satisfied and deriving information regarding an intra prediction mode or an IBC prediction mode among the information regarding the multiple prediction block mode based on the determined condition being satisfied.

11. An encoding method comprising:

generating information indicating whether a multiple prediction block mode is applied to a current block;
generating information regarding a regular prediction mode used to generate a regular prediction block and information regarding an additional prediction mode used to generate an additional prediction block based on the multiple prediction block mode being applied to the current block; and
encoding the information indicating whether the multiple prediction block mode is applied to the current block, the information regarding the regular prediction mode used to generate the regular prediction block and the information regarding the additional prediction mode used to generate the additional prediction block,
wherein the additional prediction mode includes at least one of an intra prediction mode or an IBC prediction mode,
wherein the information regarding the additional prediction mode includes at least one of information that indicates whether the intra prediction mode is applied to generate the additional prediction block or information that indicates whether the IBC prediction mode is applied to generate the additional prediction block.

12. An encoding method comprising:

generating information which indicates that a merge mode is applied to a current block and a merge candidate list based on the merge mode being determined as a prediction mode for the current block;

selecting a candidate from the candidate list and generating information that indicates the selected candidate; encoding the information that indicates whether the merge mode is applied to the current block and the information that indicates the selected candidate,

wherein the selected candidate corresponds to a neighboring block to which a multiple prediction block mode is applied,

wherein information regarding the multiple prediction block mode applied to the selected candidate is derived as information regarding prediction for the current block.

**13.** A computer-readable storage medium for storing a bitstream, the bitstream comprising:

information which indicates whether a multiple prediction block mode is applied to a current block;
information regarding a regular prediction mode used to generate a regular prediction block and information regarding; and
information regarding an additional prediction mode used to generate an additional prediction block,
wherein the additional prediction mode includes at least one of an intra prediction mode or an IBC prediction mode,
wherein the information regarding the additional prediction mode includes at least one of information that indicates whether the inter prediction mode is applied to generate the additional prediction block or information that indicates whether the IBC prediction mode is applied to generate the additional prediction block.

**14.** A computer-readable storage medium for storing a bitstream, the bitstream comprising:

information which indicates that a merge mode is applied to a current block;
information which indicates a candidate selected from a merge candidate list; and
information regarding a prediction for the selected candidate,
wherein the selected candidate corresponds to a neighboring block to which a multiple prediction block mode is applied,
wherein information regarding the multiple prediction block mode applied to the selected candidate is derived as information regarding prediction for the current block.

**15.** A method of transmitting image information, the method comprising:

generating the image information including bitstream, wherein the bitstream includes information which indicates whether a multiple prediction block mode is applied to a current block, information regarding a regular prediction mode used to generate a regular prediction block and information regarding and information regarding an additional prediction mode used to generate an additional prediction block; and
transmitting the image information including the bitstream,
wherein the additional prediction mode includes at least one of an intra prediction mode or an IBC prediction mode,
wherein the information regarding the additional prediction mode includes at least one of information that indicates whether the inter prediction mode is applied to generate the additional prediction block or information that indicates whether the IBC prediction mode is applied to generate the additional prediction block.

**16.** A method of transmitting image information, the method comprising:

generating the image information including bitstream, wherein the bitstream includes information which indicates that a merge mode is applied to a current block, information which indicates a candidate selected from a merge candidate list and information regarding a prediction for the selected candidate; and
transmitting the image information including the bitstream,
wherein the selected candidate corresponds to a neighboring block to which a multiple prediction block mode is applied,
wherein information regarding the multiple prediction block mode applied to the selected candidate is derived as information regarding prediction for the current block.

FIG. 1

FIG. 2

EP 4 779 975 A1

FIG. 3

FIG. 4

S400 — Obtain video/image information from a bitstream

S410 — Prediction

S420 — Residual processing

S430 — Reconstruct picture

S440 — In-loop filtering (optional)

FIG. 5

```
                    ┌──────────────┐
                    │    Start     │
                    └──────┬───────┘
                           │                    S500
                  ┌────────▼─────────────┐
                  │     Prediction       │
                  └────────┬─────────────┘
                           │                    S510
                  ┌────────▼─────────────┐
                  │  Residual Processing │
                  └────────┬─────────────┘
                           │                    S520
      ┌────────────────────▼────────────────────────┐
      │     Encode image information including       │
      │ prediction information and residual information│
      └────────────────────┬────────────────────────┘
                           │
                    ┌──────▼───────┐
                    │     End      │
                    └──────────────┘
```

FIG. 6

(a) Diagonal top-right mode

(b) Diagonal bottom-left mode

(c) Adjacent diagonal top-right mode

(d) Adjacent diagonal bottom-left mode

FIG. 7

W

Horizontal

H/2

W

W/2

H

Original HxW partition

Vertical

(a)

W

Horizontal

H/4

W

W/4

H

Original HxW partition

Vertical

(b)

FIG. 8

FIG. 9

```
┌─────────────────────────────┐
│   Perform inter prediction  │─── S600
└─────────────────────────────┘
              │
              ▼
┌─────────────────────────────┐
│   Derive residual samples   │─── S610
└─────────────────────────────┘
              │
              ▼
┌─────────────────────────────┐
│  Encoding image information  │─── S620
└─────────────────────────────┘
```

FIG. 10

Inter predictor

FIG. 11

```
Determine a prediction mode          ⌐S700
            │
            ▼
Derive motion information             ⌐S710
            │
            ▼
Generate prediction samples           ⌐S720
            │
            ▼
Generates residual samples            ⌐S730
            │
            ▼
Generate a reconstructed picture      ⌐S740
```

FIG. 12

```
                                        332
                        ┌──────────────────────────────────┐
Prediction mode information │  ┌──────────────────────────┐  │
motion information          │  │ prediction mode determiner│  │
───────────────────────────▶│  │        (332a)            │  │
                        │  └──────────────────────────┘  │
                        │  ┌──────────────────────────┐  │   Prediction sample
                        │  │ motion information deriver│  │─────────────────────▶
                        │  │        (332b)            │  │
Reference picture           │  └──────────────────────────┘  │
───────────────────────────▶│  ┌──────────────────────────┐  │
                        │  │ prediction sample deriver │  │
                        │  │        (332c)            │  │
                        │  └──────────────────────────┘  │
                        └──────────────────────────────────┘
                                  Inter predictor
```

FIG. 13

| Determine an inter prediction mode | ~S800 |
| Derive motion information | ~S810 |
| Generate prediction samples | ~S820 |

FIG. 14

| $B_2$ | | $B_1$ | $B_0$ |

$A_1$

$A_0$

FIG. 15

Translate

Scale

Rotate

Shear

FIG. 16

FIG. 17

$(x_0, y_0)$        $(x_1, y_1)$

$\vec{V_0}$        $\vec{V_1}$

Cur

$(x_2, y_2)$    $(x_3, y_3)$

$\vec{V_2}$    $\vec{V_3}$

A

$\vec{V_4}$

$(x_4, y_4)$

FIG. 18

FIG. 19

FIG. 20

FIG. 21

FIG. 22

Motion vectors of left and above neighboring sub-blocks are usded in OBMC of $P_{N3}$

sub-block $P_{N3}$

Motion vector of above neighboring sub-block is used in OBMC of $P_{N1}$

sub-block $P_{N1}$

PU1

Motion vector of left neighboring sub-block is usded in OBMC of $P_{N2}$

sub-block $P_{N2}$

PU2

Current CU

(a). Sub-blocks at CU/ PU boundary

sub-block where OBMC applies

Motion vectors of four neighboring sub-blocks are used in OBMC of $P_N$

sub-block $P_N$

Current CU

(b). Sub-PUs in ATMVP mode

EP 4 779 975 A1

FIG. 23

4x4 block

6x6 surrounding region

Samples & gradients padding

FIG. 24

```
┌──────────────────────────────────────┐
│  Generate a basic prediction block    │──S900
└──────────────────────────────────────┘
                    │
                    ▼
┌──────────────────────────────────────┐
│ Generate an additional prediction block │──S910
└──────────────────────────────────────┘
                    │
                    ▼
┌──────────────────────────────────────┐
│  Generate a final prediction block    │──S920
└──────────────────────────────────────┘
```

FIG. 25

```
┌──────────┐        ┌──────────┐        ┌──────────┐
│          │ ◄───── │          │ ─────► │          │
│          │        │          │        │          │
│          │        │          │        │          │
└──────────┘        └──────────┘        └──────────┘
   <P0>          <Current block, C>        <P1>

┌──────────┐                            ┌──────────┐
│          │ ◄──┘              └──►      │          │
│          │                            │          │
│          │                            │          │
└──────────┘                            └──────────┘
   <P2>                                    <P3>
```

FIG. 26

```
                    ┌──────────────────┐
                    │    MHP Start     │
                    └──────────────────┘
                             │ i = 0
                             ▼
                        ╱─S1100      No
                  ╱──────────────────╲─────────────────────┐
                  ╲  while (i < MaxNum) ╱                    │
                   ╲──────────────────╱                     │
                             │ Yes                          │
                             ▼                              │
                   ┌──────────────────┐ ─S1110              │
                   │  mhp_flag parsing │                    │
                   └──────────────────┘                     │
                             │                              │
                             ▼                              │
                        ╱─S1120        No                   │
                  ╱──────────────────╲───────────────────── │
                  ╲   if (mhp_flag)   ╱                    │ │
                   ╲──────────────────╱                   │ │
                             │ Yes                        │ │
                             ▼                            │ │
                   ┌──────────────────────┐ ─S1130        │ │
                   │ mhp_intra_flag parsing│              │ │
                   └──────────────────────┘               │ │
                             │                            │ │
                             ▼                            │ │
                        ╱─S1140      No                   │ │
         i ++    ╱───────────────────╲──────┐            │ │
                 ╲  if (mhp_intra_flag) ╱     │            │ │
                  ╲───────────────────╱      ▼            │ │
                          │ Yes      ┌──────────────────┐ │ │
                          │          │  mhp_mrg parsing  │─S1160
                          │          └──────────────────┘ │ │
                          │                   │           │ │
                          │                   ▼           │ │
                          │              ╱─S1170    No     │ │
                          │        ╱──────────────╲────────┐ │
                          │        ╲  if (mhp_mrg) ╱       │ │
                          │         ╲──────────────╱       │ │
                          │              │ Yes             │ │
          ┌───────S1150   │         ┌──S1180    ┌──────S1190│
          ▼               ▼         ▼           ▼          │
   ┌──────────────┐ ┌──────────────┐ ┌──────────────┐      │
   │Additional info│ │  merge_idx,  │ │    refIdx,   │      │
   │parsing when   │ │  weight_idx  │ │    mvp_idx,  │      │
   │present        │ │              │ │    mvd_data, │      │
   │              │ │              │ │    weight_idx│      │
   └──────────────┘ └──────────────┘ └──────────────┘      │
          │               │                 │              │
          ▼               ▼                 ▼              │
   ┌──────────────────┐
   │     MHP End      │
   └──────────────────┘
```

FIG. 27

FIG. 28

FIG. 29

FIG. 30

FIG. 31

```
                    ┌──────────────┐
                    │  MHP Start   │
                    └──────┬───────┘
                           │ i = 0
                           ▼ ┌S1500
                      ◇ while (i < MaxNum) ◇──── No ───┐
                           │ Yes                        │
                           ▼ ┌S1510                      │
                    ┌──────────────┐                    │
                    │ mhp_flag parsing │                │
                    └──────┬───────┘                    │
                           ▼ ┌S1520                      │
                      ◇ if (mhp_flag) ◇──── No ──────────┤
                           │ Yes                         │
                           ▼ ┌S1530                       │
                    ┌──────────────┐                     │
    i ++            │ mhp_mrg parsing │                  │
                    └──────┬───────┘                     │
                           ▼ ┌S1540                       │
                      ◇ if (mhp_flag) ◇──── No ──┐        │
                           │ Yes                  │        │
                           ▼ ┌S1550        ┌S1560 ▼        │
                    ┌──────────┐     ┌──────────────┐      │
                    │ merge_idx,│     │ Additional info parsing │
                    │ weight_idx │     │  when present  │      │
                    └─────┬────┘     └──────┬───────┘      │
                          └────────┬────────┘              │
                                   ▼ ◄────────────────────┘
                            ┌──────────────┐
                            │   MHP End    │
                            └──────────────┘
```

FIG. 32

|  | (A) | (B) | (C) |
|---|---|---|---|
| Neighboring Block | INTRA | INTER | INTRA |
|  | INTER | INTER | — |
|  | INTER | — | — |

|  | (A) | (B) | (C) |
|---|---|---|---|
| Current Block | ~~INTRA~~ | INTER | ~~INTRA~~ |
|  | INTER | INTER | Signalled INTRA/INTER |
|  | INTER | Signalled INTRA/INTER | Signalled INTRA/INTER |
|  | Signalled INTRA/INTER |  | Signalled INTRA/INTER |

FIG. 33

FIG. 34

```
        ┌──────────────────────────────┐
        │     Decoding Process START    │
        └──────────────────────────────┘
                      │
                      │         ┌─ S1600
                      ▼
        ┌──────────────────────────────┐
        │  Regular prediction block generation │
        └──────────────────────────────┘
                      │
                      │         ┌─ S1610
                      ▼
                  ◇──────────◇         No
                  if (numMHP > 0) ──────────┐
                  ◇──────────◇              │
                      │ Yes                  │
                      │         ┌─ S1620     │
                      ▼                      │
        ┌──────────────────────────────┐    │
        │   MH-INTER blocks generation   │   │
        └──────────────────────────────┘    │
                      │                      │
                      │         ┌─ S1630     │
                      ▼                      │
                  ◇──────────◇     No        │
                  if (condition) ──────┐     │
                  ◇──────────◇         │     │
                      │ Yes            │     │
                      │    ┌─ S1640    │     │
                      ▼               │     │
        ┌──────────────────────────────┐│   │
        │    MH-INTRA block generation  ││   │
        └──────────────────────────────┘│   │
                      │ ◄──────────────┘    │
                      │    ┌─ S1650          │
                      ▼                      │
        ┌──────────────────────────────┐    │
        │  Combining of prediction blocks │  │
        └──────────────────────────────┘    │
                      │ ◄───────────────────┘
                      ▼
        ┌──────────────────────────────┐
        │     Decoding Process END      │
        └──────────────────────────────┘
```

FIG. 35

```
        ┌─────────────────────────────┐
        │    Decoding Process START    │
        └─────────────────────────────┘
                       │
                       ▼              ⌐S1700
        ┌─────────────────────────────┐
        │ Regular prediction block generation │
        └─────────────────────────────┘
                       │
                       ▼          ⌐S1710
                  ◇─────────────◇          No
                 if (numMHP > 0)  ─────────────┐
                  ◇─────────────◇              │
                       │Yes                    │
                       ▼      ⌐S1720           ▼          ⌐S1730    No
        ┌─────────────────────────────┐   ◇─────────────◇ ────────┐
        │  MH-INTER block generation  │    if (condition)          │
        └─────────────────────────────┘   ◇─────────────◇          │
                       │                        │Yes               │
                       │                        ▼       ⌐S1740      │
                       │        ┌─────────────────────────────┐    │
                       │        │  MH-INTRA block generation  │    │
                       │        └─────────────────────────────┘    │
                       │◄───────────────────────┘                  │
                       ▼      ⌐S1750                                │
        ┌─────────────────────────────┐                            │
        │  Combining of prediction blocks │                         │
        └─────────────────────────────┘                            │
                       │◄───────────────────────────────────────────┘
                       ▼
        ┌─────────────────────────────┐
        │     Decoding Process END     │
        └─────────────────────────────┘
```

FIG. 36

$S_A$

$p_A$

$p_L$

regular prediction block

$S_L$

$c_A$

$c_L$

current block

FIG. 37

```
         MHP-INTRA START

              │
              ▼              ┌─S1800
    ┌──────────────────────┐
    │      mhp_intra_flag   │
    └──────────────────────┘
              │
              ▼              ┌─S1810
  No     ◇──────────────────◇
 ◄───────   if (mhp_intra_flag)
         ◇──────────────────◇
              │ Yes
              ▼              ┌─S1820
    ┌──────────────────────┐
    │      mhp_mpm_idx      │
    └──────────────────────┘
              │
              ▼
         MHP-INTRA END
```

FIG. 38

```
                    ╭─────────────────────╮
                    │   MHP-INTRA START   │
                    ╰──────────┬──────────╯
                               │           ⌐S1900
                    ┌──────────▼──────────┐
                    │    mhp_intra_flag    │
                    └──────────┬──────────┘
                               │           ⌐S1910
          No          ╱────────▼────────╲
         ┌───────────┤  if (mhp_intra_flag) │
         │            ╲────────┬────────╱
         │                     │ Yes
         │                     │           ⌐S1920
         │          ┌──────────▼──────────┐
         │          │    mhp_mpm_flag      │
         │          └──────────┬──────────┘
         │                     │           ⌐S1930
         │            ╱────────▼────────╲     No
         │           ┤  if (mhp_intra_flag) ├────────┐
         │            ╲────────┬────────╱            │
         │                     │ Yes                 │
         │          ⌐S1940     │              ⌐S1950 │
         │          ┌──────────▼──────────┐  ┌───────▼──────────────┐
         │          │    mhp_mpm_idx       │  │  mhp_mpm_remainder   │
         │          └──────────┬──────────┘  └───────┬──────────────┘
         └─────────────────────┤◄───────────────────┘
                               │
                    ╭──────────▼──────────╮
                    │   MHP-INTRA END     │
                    ╰─────────────────────╯
```

FIG. 39

```
                    ┌─────────────────────────┐
                    │     MHP-INTRA START     │
                    └─────────────────────────┘
                                 │
                                 ▼            ⌒S2000
                    ┌─────────────────────────┐
                    │      mhp_intra_flag     │
                    └─────────────────────────┘
                                 │
                                 ▼            ⌒S2010
         No             ◇─────────────────◇
    ◄───────────────────  if (mhp_intra_flag)
         │              ◇─────────────────◇
         │                       │ Yes
         │                       ▼            ⌒S2020
         │          ┌─────────────────────────┐
         │          │       mhp_mpm_flag      │
         │          └─────────────────────────┘
         │                       │
         │                       ▼            ⌒S2030
         │              ◇─────────────────◇         No
         │                if (mhp_intra_flag)  ──────────────────┐
         │              ◇─────────────────◇                      │
         │                       │ Yes                           │
         │                       ▼            ⌒S2040             │
         │          ┌─────────────────────────┐                  │
         │          │    mpm_not_planar_flag  │                  │
         │          └─────────────────────────┘                  │
         │                       │                                │
         │                       ▼            ⌒S2050             │
         │              ◇─────────────────◇      No              │
         │               if (mpm_not_planar_flag) ──────┐        │
         │              ◇─────────────────◇             │        │
         │                       │ Yes                  │        │
         │          ⌒S2060      ▼           ⌒S2070     ▼ ⌒S2080 │
         │   ┌──────────────┐  ┌──────────────┐  ┌──────────────────┐
         │   │  mhp_mpm_idx │  │  Planar mode │  │ mhp_mpm_remainder│
         │   └──────────────┘  └──────────────┘  └──────────────────┘
         │          │                  │                   │
         └──────────┴──────────────────┴───────────────────┘
                                 │
                                 ▼
                    ┌─────────────────────────┐
                    │      MHP-INTRA END      │
                    └─────────────────────────┘
```

FIG. 40

FIG. 41

```
          ┌────────────────────────────┐
          │        MHP-IBC START        │
          └────────────────────────────┘
                        │
                        ▼
          ┌────────────────────────────┐  ╭ S2100
          │        mhp_ibc_flag         │
          └────────────────────────────┘
                        │
                        ▼
  No            ◇─────────────────◇  ╭ S2110
◀─────────────  if (mhp_ibc_flag)
                ◇─────────────────◇
                        │ Yes
                        ▼
          ┌────────────────────────────┐  ╭ S2120
          │        mhp_ibc_mrg          │
          └────────────────────────────┘
                        │
                        ▼
                ◇─────────────────◇  ╭ S2130      No
                if (mhp_ibc_mrg)  ──────────────────┐
                ◇─────────────────◇                 │
                        │ Yes                        │
                        ▼                            ▼
          ┌──────────────────┐ ╭S2140   ┌──────────────────┐ ╭S2150
          │   merge_idx,      │         │    bvp_idx,       │
          │   weight_idx      │         │    bvd_data,      │
          │                   │         │    weight_idx     │
          └──────────────────┘         └──────────────────┘
                        │                            │
                        ▼                            │
          ┌────────────────────────────┐◀───────────┘
          │         MHP-IBC END         │
          └────────────────────────────┘
```

FIG. 42

```
                    ╭─────────────────────────╮
                    │      MHP-INTRA START     │
                    ╰─────────────────────────╯
                                 │
                                 ▼           ╭─ S2200
                    ┌─────────────────────────┐
                    │       mhp_intra_flag     │
                    └─────────────────────────┘
                                 │
                                 ▼           ╭─ S2210
              No          ╱◇─────────────◇╲
         ┌───────────────◇  if (mhp_intra_flag) ◇
         │                ╲◇─────────────◇╱
         │                         │ Yes
         │                         ▼           ╭─ S2230
         │            ┌─────────────────────────┐
         │            │      mhp_weight_idx      │
         │            └─────────────────────────┘
         │                         │
         └────────────────────────►│
                                   ▼
                    ╭─────────────────────────╮
                    │       MHP-INTRA END      │
                    ╰─────────────────────────╯
```

FIG. 43

```
        ┌─────────────────────────┐
        │     MHP-INTRA START     │
        └─────────────────────────┘
                     │
                     ▼                 ⌒S2200
        ┌─────────────────────────┐
        │      mhp_intra_flag      │
        └─────────────────────────┘
                     │
                     ▼                 ⌒S2210
  No          ◇ if (mhp_intra_flag) ◇
 ◄───────────                                    
                     │ Yes
                     ▼                 ⌒S2220
              ◇ if (condition) ◇          No
                                        ────►
                     │ Yes
                     ▼                 ⌒S2230
        ┌─────────────────────────┐
        │     mhp_weight_idx       │
        └─────────────────────────┘
                     │
                     ▼
        ┌─────────────────────────┐
        │      MHP-INTRA END      │
        └─────────────────────────┘
```

FIG. 44

```
                    ┌─────────────────────────┐
                    │    MHP-INTRA START       │
                    └─────────────────────────┘
                                 │
                                 ▼            ⌐S2200
                    ┌─────────────────────────┐
                    │      mhp_intra_flag      │
                    └─────────────────────────┘
                                 │
                                 ▼            ⌐S2210
         No              ◇if (mhp_intra_flag)◇
        ◄───────────────◇                    ◇
                         ◇                    ◇
                                 │Yes
                                 ▼            ⌐S2220
                         ◇  if (condition)   ◇        No
                         ◇                    ◇───────────────►
                         ◇                    ◇
                                 │Yes
                                 ▼    ⌐S2231              ⌐S2232
              ┌────────────────────────┐   ┌────────────────────────┐
              │    intra_weight_idx0    │   │    intra_weight_idx1    │
              └────────────────────────┘   └────────────────────────┘
                                 │                    │
                                 ▼◄───────────────────┘
                    ┌─────────────────────────┐
                    │     MHP-INTRA END        │
                    └─────────────────────────┘
```

FIG. 45

INTRA                    INTER

| w* | + | (1-w)* | = |

| w0* | w1* | + | (1-w0)* | (1-w1)* | = |

| w0* |
| w1* |
+
| (1-w0)* |
| (1-w1)* |
=

| w0* ╱ w1* | + | (1-w0)* ╱ (1-w1)* | = |

| w0* |
| w1* |
+
| (1-w0)* |
| (1-w1)* |
=

| w0* | w1* | w2* | + | (1-w0)* | (1-w1)* | (1-w2)* | = |

FIG. 46

```
┌─────────────────────────────┐
│        MHP-INTRA START       │
└─────────────────────────────┘
                │
                ▼              ┌─ S2300
┌─────────────────────────────┐
│     Prediction mode decision │
└─────────────────────────────┘
                │
                ▼              ┌─ S2310
┌─────────────────────────────┐
│   Reference sample generation│
└─────────────────────────────┘
                │
                ▼              ┌─ S2320
┌─────────────────────────────┐
│   Prediction block generation│
└─────────────────────────────┘
                │
                ▼              ┌─ S2330
┌─────────────────────────────────┐
│ Sample refinement for prediction block │
└─────────────────────────────────┘
                │
                ▼
┌─────────────────────────────┐
│         MHP-INTRA END        │
└─────────────────────────────┘
```

FIG. 47

FIG. 48

FIG. 49

pF[-1][-1]=p[-1][-1]  pF[x][-1]  pF[63][-1]=p[63][-1]

$$pF[-1][y]=((63-y))*p[-1][-1]+(y+1)*p[-1][63]+32)>>6, y=0..62$$
$$pF[x][-1]=((63-x))*p[-1][-1]+(x+1)*p[63][-1]+32)>>6, x=0..62$$

pF[-1][63]=p[-1][63]

FIG. 50

```
           ┌─────────────────────────┐
           │     MHP-INTRA START     │
           └─────────────────────────┘
                        │
                        ▼              ⌐S2400
           ┌─────────────────────────┐
           │      mhp_intra_flag     │
           └─────────────────────────┘
                        │
                        ▼              ⌐S2410
  No              ◇─────────────◇
  ┌─────────────  if (mhp_intra_flag)
  │               ◇─────────────◇
  │                      │ Yes
  │                      ▼          ⌐S2430
  │          ┌─────────────────────────┐
  │          │      mhp_filter_flag    │
  │          └─────────────────────────┘
  │                      │
  └──────────────────────▼
           ┌─────────────────────────┐
           │      MHP-INTRA END      │
           └─────────────────────────┘
```

FIG. 51

FIG. 52

## INTERNATIONAL SEARCH REPORT

| International application No. |
| --- |
| **PCT/KR2024/014052** |

**A.    CLASSIFICATION OF SUBJECT MATTER**

**H04N 19/11**(2014.01)i; **H04N 19/105**(2014.01)i; **H04N 19/176**(2014.01)i; **H04N 19/593**(2014.01)i; **H04N 19/107**(2014.01)i; **H04N 19/159**(2014.01)i; **H04N 19/119**(2014.01)i; **H04N 19/70**(2014.01)i

According to International Patent Classification (IPC) or to both national classification and IPC

**B.    FIELDS SEARCHED**

Minimum documentation searched (classification system followed by classification symbols)

H04N 19/11(2014.01); H04N 19/105(2014.01); H04N 19/107(2014.01); H04N 19/109(2014.01); H04N 19/157(2014.01); H04N 19/159(2014.01); H04N 19/176(2014.01); H04N 19/46(2014.01); H04N 19/577(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다중 예측 블록 모드(multiple prediction block mode), 가중치 정보(weight information), 머지 모드(merge mode), 인트라 예측 모드(intra prediction mode), IBC 예측 모드(intra block copy prediction mode)

**C.    DOCUMENTS CONSIDERED TO BE RELEVANT**

| Category* | Citation of document, with indication, where appropriate, of the relevant passages | Relevant to claim No. |
| --- | --- | --- |
| Y | KR 10-2023-0123933 A (QUALCOMM INCORPORATED) 24 August 2023 (2023-08-24)<br>See paragraphs [0040], [0081] and [0088]; and claims 1 and 8. | 8-10,12,14,16 |
| A | | 1-7,11,13,15 |
| Y | KR 10-2023-0128587 A (HUAWEI TECHNOLOGIES CO., LTD.) 05 September 2023 (2023-09-05)<br>See paragraphs [0195] and [0200]; and claim 1. | 8-10,12,14,16 |
| A | KR 10-2021-0093918 A (INTERDIGITAL VC HOLDINGS, INC.) 28 July 2021 (2021-07-28)<br>See paragraph [0097]. | 1-16 |
| A | WO 2022-228420 A1 (BEIJING BYTEDANCE NETWORK TECHNOLOGY CO., LTD. et al.) 03 November 2022 (2022-11-03)<br>See claims 1-3. | 1-16 |

✓ Further documents are listed in the continuation of Box C.    ✓ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 December 2024** | **26 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/014052**

**C. DOCUMENTS CONSIDERED TO BE RELEVANT**

| Category* | Citation of document, with indication, where appropriate, of the relevant passages | Relevant to claim No. |
|---|---|---|
| A | KR 10-2021-0094056 A (HUAWEI TECHNOLOGIES CO., LTD.) 28 July 2021 (2021-07-28)<br>See claims 1-2. | 1-16 |

Form PCT/ISA/210 (second sheet) (July 2022)

## INTERNATIONAL SEARCH REPORT
### Information on patent family members

International application No.

**PCT/KR2024/014052**

| Patent document cited in search report | | | Publication date (day/month/year) | Patent family member(s) | | | Publication date (day/month/year) |
|---|---|---|---|---|---|---|---|
| KR | 10-2023-0123933 | A | 24 August 2023 | AU | 2023-409231 | A1 | 18 May 2023 |
| | | | | AU | 2024-409231 | A9 | 01 August 2024 |
| | | | | EP | 4268451 | A1 | 01 November 2023 |
| | | | | JP | 2024-501154 | A | 11 January 2024 |
| | | | | WO | 2022-140160 | A1 | 30 June 2022 |
| KR | 10-2023-0128587 | A | 05 September 2023 | AU | 202927 | B2 | 08 February 2024 |
| | | | | AU | 368125 | B2 | 23 February 2023 |
| | | | | CN | 113473134 | A | 01 October 2021 |
| | | | | CN | 113473134 | B | 24 May 2022 |
| | | | | EP | 3861724 | A1 | 11 August 2021 |
| | | | | EP | 3861724 | A4 | 23 February 2022 |
| | | | | JP | 2024-052891 | A | 12 April 2024 |
| | | | | JP | 7132436 | B2 | 06 September 2022 |
| | | | | JP | 7448602 | B2 | 12 March 2024 |
| | | | | KR | 10-2573294 | B1 | 30 August 2023 |
| | | | | US | 2024-0015334 | A1 | 11 January 2024 |
| | | | | WO | 2020-085956 | A1 | 30 April 2020 |
| KR | 10-2021-0093918 | A | 28 July 2021 | CN | 113170113 | A | 23 July 2021 |
| | | | | CN | 113170113 | B | 24 September 2024 |
| | | | | EP | 3888360 | A1 | 06 October 2021 |
| | | | | US | 11647187 | B2 | 09 May 2023 |
| | | | | US | 2021-0400269 | A1 | 23 December 2021 |
| | | | | US | 2023-0291899 | A1 | 14 September 2023 |
| | | | | WO | 2020-112437 | A1 | 04 June 2020 |
| WO | 2022-228420 | A1 | 03 November 2022 | CN | 117203959 | A | 08 December 2023 |
| | | | | CN | 117337566 | A | 02 January 2024 |
| | | | | US | 2024-0214606 | A1 | 27 June 2024 |
| | | | | US | 2024-0373042 | A1 | 07 November 2024 |
| | | | | WO | 2022-228430 | A1 | 03 November 2022 |
| KR | 10-2021-0094056 | A | 28 July 2021 | AU | 2023-254981 | A1 | 16 November 2023 |
| | | | | AU | 386917 | B2 | 27 July 2023 |
| | | | | CN | 117478915 | A | 30 January 2024 |
| | | | | EP | 3881551 | A1 | 22 September 2021 |
| | | | | JP | 2023-174705 | A | 08 December 2023 |
| | | | | JP | 7358473 | B2 | 10 October 2023 |
| | | | | US | 11876997 | B2 | 16 January 2024 |
| | | | | US | 2024-0056596 | A1 | 15 February 2024 |
| | | | | WO | 2020-108640 | A1 | 04 June 2020 |

Form PCT/ISA/210 (patent family annex) (July 2022)